# EUROPÄISCHE PATENTSCHRIFT

(11) **EP 1 440 024 B1**
(45) Veröffentlichungstag und Bekanntmachung des Hinweises auf die Patenterteilung: **19.12.2007**
(21) Anmeldenummer: 02783053.8
(22) Anmeldetag: 31.10.2002
(51) Int. Cl.: B65G 49/04

(54) **VORRICHTUNG UND VERFAHREN ZUR OBERFLÄCHENBEHANDLUNG VON WERKSTÜCKEN**
DEVICE AND METHOD FOR THE SURFACE TREATMENT OF WORKPIECES
DISPOSITIF ET PROCEDE DE TRAITEMENT DE SURFACES DE PIECES

(30) Priorität: 02.11.2001 DE 10153992
(43) Veröffentlichungstag der Anmeldung: 28.07.2004
(73) Patentinhaber: Dürr Systems GmbH, 70435 Stuttgart (DE)
(72) Erfinder: KISI, Hidayet, 74074 Heilbronn (DE)
(74) Vertreter: Hoeger, Stellrecht & Partner Patentanwälte
(86) Internationale Anmeldenummer: PCT/EP2002/012156
(87) Internationale Veröffentlichungsnummer: WO 2003/037762

(56) Entgegenhaltungen:
- EP-A- 1 059 223
- DE-A- 19 950 892
- DE-U- 29 718 298
- US-A- 4 509 637
- US-A- 4 740 284

## Beschreibung

Die vorliegende Erfindung betrifft eine Vorrichtung zur Oberflächenbehandlung von Werkstücken, insbesondere von Fahrzeugkarosserien, welche mindestens ein Behandlungsbad zur Oberflächenbehandlung der Werkstücke und mindestens eine Fördervorrichtung zum Fördern der Werkstücke durch das Behandlungsbad umfaßt, wobei die Fördervorrichtung einen Behandlungsabschnitt, in dem die Werkstücke durch das Behandlungsbad gefördert werden, und mindestens einen oberen Förderabschnitt, durch den die Werkstücke vor oder nach dem Fördern durch das Behandlungsbad gefördert werden und der oberhalb des Behandlungsabschnitts angeordnet ist, umfaßt.

Ferner betrifft die vorliegende Erfindung ein Verfahren zur Oberflächenbehandlung von Werkstücken, insbesondere von Fahrzeugkarosserien, bei dem die Werkstücke mittels mindestens einer Fördervorrichtung durch mindestens ein Behandlungsbad zur Oberflächenbehandlung der Werkstücke gefördert werden, wobei die Fördervorrichtung einen Behandlungsabschnitt, in dem die Werkstücke durch das Behandlungsbad gefördert werden, und mindestens einen oberen Förderabschnitt, durch den die Werkstücke vor oder nach dem Fördern durch das Behandlungsbad gefördert werden und der oberhalb des Behandlungsabschnitts angeordnet ist, umfaßt.

Unter einem Behandlungsabschnitt ist dabei in dieser Beschreibung und den beigefügten Ansprüchen ein solcher Abschnitt der Fördervorrichtung zu verstehen, in welchem die Werkstücke in eingetauchtem Zustand durch das Behandlungsbad gefördert werden.

Eine solche Vorrichtung und ein solches Verfahren sind beispielsweise aus der DE 36 12 128 A1 bekannt. Bei der aus der DE 36 12 128 A1 bekannten Vorrichtung werden die zu behandelnden Werkstücke zunächst durch einen auf einem oberen Förderniveau liegenden oberen Förderabschnitt gefördert, in einem sich daran anschließenden schrägen Eintauchabschnitt in das Behandlungsbad eingetaucht, in einem sich anschließenden geradlinigen Behandlungsabschnitt, der auf einem unteren Förderniveau liegt, durch das Behandlungsbad gefördert, in einem sich daran anschließenden schrägen Austauchabschnitt aus dem Behandlungsbad herausbewegt und wieder auf das obere Förderniveau zurückgebracht und schließlich in einem weiteren oberen Förderabschnitt, der auf dem oberen Förderniveau angeordnet ist, zu einem weiteren Behandlungsbad transportiert. Die oberen Förderabschnitte, durch welche die Werkstücke vor bzw. nach dem Fördern durch das Behandlungsbad gefördert werden, sind räumlich vor bzw. hinter dem Behandlungsbad angeordnet, so daß die Vorrichtung zur Oberflächenbehandlung eine große Ausdehnung in der Längsrichtung der Behandlungsbäder aufweist.

Aus der DE 199 26 625 A1 sind ebenfalls eine Vorrichtung und ein Verfahren zur Oberflächenbehandlung von Werkstücken der eingangs genannten Art bekannt, wobei die Fördervorrichtung linear aufeinanderfolgend einen oberen Förderabschnitt, einen schrägen Eintauchabschnitt, einen unteren Behandlungsabschnitt, einen schrägen Austauchabschnitt und einen weiteren oberen Förderabschnitt umfaßt. Bei den zu behandelnden Werkstücken handelt es sich um Fahrzeugkarosserien, die vor dem Einbringen in das Behandlungsbad aus einer Standardstellung, in welcher Fensteröffnungen der jeweiligen Fahrzeugkarosserie oberhalb der Bodengruppe der Fahrzeugkarosserie angeordnet sind, in eine Kopfüberstellung, in welcher die Fensteröffnungen der jeweiligen Fahrzeugkarosserie unterhalb der Bodengruppe der Fahrzeugkarosserie angeordnet sind, überführt werden. Auch diese Vorrichtung weist eine große Ausdehnung in der Längsrichtung des Behandlungsbades auf.

Ferner sind aus der DE 196 41 048 A1 eine Vorrichtung und ein Verfahren bekannt, bei welchen Fahrzeugkarosserien durch Überlagerung einer translatorischen Bewegung und einer Drehbewegung am Anfang eines Behandlungsbades in das Behandlungsbad eingetaucht und am Ende des Behandlungsbades durch eine ebensolche Überlagerung von Translations- und Drehbewegung aus dem Behandlungsbad herausbewegt werden. Dabei sind die Fahrzeugkarosserien an Halterungsgestellen angeordnet, welche um eine quer zur Bewegungsrichtung der Fahrzeugkarosserien ausgerichtete Drehachse drehbar sind. Diese Halterungsgestelle werden auf konstanter Förderhöhe über das Behandlungsbad hinweg gefördert. Ein vor dem Behandlungsabschnitt liegender Zuführabschnitt und ein hinter dem Behandlungsabschnitt gelegener Abführabschnitt der Fördervorrichtung liegen auf demselben Förderniveau wie der dazwischen liegende Behandlungsabschnitt. Auch diese Vorrichtung weist in der Längsrichtung des Behandlungsbades eine große Ausdehnung auf.

Die US-A-4 740 284 offenbart eine Vorrichtung zur Oberflächenbehandlung von Werkstücken gemäß dem Oberbegriff von Anspruch 1.

Der vorliegenden Erfindung liegt die Aufgabe zugrunde, eine Vorrichtung zur Oberflächenbehandlung von Werkstücken, insbesondere von Fahrzeugkarosserien, der eingangs genannten Art zu schaffen, welche einen geringen Platzbedarf, insbesondere eine geringe Ausdehnung in der Längsrichtung des Behandlungsbades, aufweist.

Diese Aufgabe wird durch eine Vorrichtung nach Anspruch 1 gelöst.

Der erfindungsgemäßen Lösung liegt das Konzept zugrunde, den Zuführabschnitt, durch den Werkstücke vor dem Fördern durch das Behandlungsbad gefördert werden, und/oder den Abführabschnitt, durch den die Werkstücke nach dem Fördern durch das Behandlungsbad gefördert werden, nicht - wie bei dem vorstehend diskutierten Stand der Technik - vor bzw. hinter dem Behandlungsabschnitt anzuordnen, sondern statt dessen seitlich neben dem Behandlungsabschnitt, wodurch sich die Ausdehnung der Fördervorrichtung in der Längsrichtung des Behandlungsbades deutlich verringern lässt.

Unter einem seitlich neben dem Behandlungsabschnitt angeordneten Förderabschnitt ist dabei in dieser Beschreibung und den beigefügten Ansprüchen ein Förderabschnitt zu verstehen, welcher in einem Bereich angeordnet ist, der in einer zur Längsrichtung des Behandlungsabschnittes senkrechten Richtung von dem Behandlungsabschnitt beabstandet ist.

Unter einem Förderabschnitt, der oberhalb des Behandlungsabschnitts angeordnet ist, ist In dieser Beschreibung und den beigefügten Ansprüchen ein Förderabschnitt zu verstehen, der auf einem höheren Niveau liegt als der Behandlungsabschnitt.

Die aus der DE 36 12 128 A1 bekannte Vorrichtung umfaßt eine Fördervorrichtung mit einem seitlich neben dem Behandlungsabschnitt angeordneten Rückführabschnitt, durch welchen Werkstückhalterungen, von denen die Werkstücke abgenommen worden sind, zu einer Beladestation der Fördervorrichtung zurückbewegt werden. Bei diesem Rückführabschnitt handelt es sich jedoch nicht um einen Förderabschnitt, durch den die Werkstücke vor oder nach dem Fördern durch das Behandlungsbad gefördert werden.

Das Behandlungsbad der erfindungsgemäßen Oberflächenbehandlungsvorrichtung kann als Behandlungsflüssigkeit beispielsweise eine Vorbehandlungsflüssigkeit oder einen Lack enthalten.

Die von der erfindungsgemäßen Oberflächenbehandlungsvorrichtung beanspruchte Grundfläche kann besonders klein gehalten werden, wenn sich der obere Förderabschnitt im wesentlichen parallel zu dem Behandlungsabschnitt erstreckt.

Bei einer bevorzugten Ausgestaltung der erfindungsgemäßen Vorrichtung ist ferner vorgesehen, daß die Förderrichtung der Werkstücke in dem oberen Förderabschnitt im wesentlichen antiparallel zu der Förderrichtung der Werkstücke in dem Behandlungsabschnitt gerichtet ist.

Die Förderrichtung der Werkstücke in dem Behandlungsabschnitt ist vorzugsweise im wesentlichen horizontal gerichtet.

Ebenso ist die Förderrichtung der Werkstücke in dem oberen Förderabschnitt vorzugsweise im wesentlichen horizontal gerichtet.

Um die Werkstücke in einfacher Weise nach dem Durchlaufen des oberen Förderabschnitts in das Behandlungsbad eintauchen oder die Werkstücke nach dem Durchlaufen des Behandlungsabschnittes in einfacher Weise in den oberen Förderabschnitt austauchen lassen zu können, ist vorteilhafterweise vorgesehen, daß der obere Förderabschnitt und der Behandlungsabschnitt durch einen Verbindungsabschnitt miteinander verbunden sind, wobei die Werkstücke in dem Verbindungsabschnitt längs einer zumindest abschnittsweise gekrümmten Förderbahn gefördert werden.

Die zumindest abschnittsweise gekrümmte Förderbahn kann dabei grundsätzlich jeden beliebigen Verlauf aufweisen, der zu Erzielung einer gewünschten Eintauch- oder Austauchkontur der Werkstücke erforderlich ist.

Insbesondere kann vorgesehen sein, daß die Werkstücke in dem Verbindungsabschnitt längs eines Kreisbogens, vorzugsweise mit einem Kurvenwinkel von ungefähr 180°, oder längs zweier Kreisbögen, vorzugsweise mit einem Kurvenwinkel von jeweils 90°, gefördert werden.

Außer kreisförmig gekrümmten Förderbahnen sind jedoch auch beliebig anders gekrümmte Förderbahnen in dem Verbindungsabschnitt denkbar.

Bei einer bevorzugten Ausgestaltung der erfindungsgemäßen Vorrichtung ist vorgesehen, daß die Werkstücke beim Durchlaufen des Verbindungsabschnitts um einen Winkel von ungefähr 180° relativ zu einem ortsfesten Bezugssystem gedreht werden.

Um den Höhenunterschied zwischen dem oberen Förderabschnitt und dem Behandlungsabschnitt in einer möglichst kurzen Förderstrecke zu überwinden, kann vorgesehen sein, daß der Verbindungsabschnitt einen Abschnitt umfaßt, durch welchen die Werkstücke längs einer im wesentlichen vertikalen Förderrichtung gefördert werden.

Wenn es sich bei den zu behandelnden Werkstücken um Fahrzeugkarosserien handelt, so werden die Fahrzeugkarosserien vorzugsweise in einer Kopfüberstellung, in welcher Fensteröffnungen der Fahrzeugkarosserien unterhalb der Bodengruppen der Fahrzeugkarosserien angeordnet sind, durch den Behandlungsabschnitt gefördert.

Ferner ist in diesem Fall vorzugsweise vorgesehen, dass die Fahrzeugkarosserien in einer Standardstellung, in welcher Fensteröffnungen der Fahrzeugkarosserien oberhalb der Bodengruppen der Fahrzeugkarosserien angeordnet sind, durch den oberen Förderabschnitt gefördert werden.

Die Überführung der Fahrzeugkarosserien aus der Standardstellung in die Kopfüberstellung und wieder zurück kann in einfacher Weise durch eine entsprechende Krümmung der Förderbahn in dem Verbindungsabschnitt, welcher den oberen Förderabschnitt und den Behandlungsabschnitt miteinander verbindet, bewirkt werden.

Um die für die Oberflächenbehandlungsvorrichtung erforderliche Grundfläche zu verringern, ist vorgesehen, dass die Fördervorrichtung mindestens einen Zuführ- oder Abführabschnitt umfasst, durch welchen die Werkstücke längs einer quer zu der Förderrichtung im Behandlungsabschnitt ausgerichteten Förderrichtung gefördert werden. Insbesondere kann vorgesehen sein, dass der Zuführ- oder Abführabschnitt eine, vorzugsweise horizontal ausgerichtete, Linkskurve oder Rechtskurve umfasst, die unmittelbar mit dem oberen Förderabschnitt verbunden ist.

Wenn sowohl der obere Zuführabschnitt, durch den die Werkstücke vor dem Fördern durch das Behandlungsbad gefördert werden, als auch der obere Abführabschnitt, durch den die Werkstücke nach dem Fördern durch das Behandlungsbad gefördert werden, beide in derselben Höhe senkrecht über dem Behandlungsabschnitt angeordnet und parallel zu demselben ausgerichtet sind, so muß der Behandlungsabschnitt eine Länge aufweisen, welche mindestens der Summe der Längen des Zuführabschnitts und des Abführabschnitts entspricht. Dadurch ist auch für das Behandlungsbad selbst eine Mindestlänge vorgegeben.

Um die Längsausdehnung des Behandlungsbades besonders kurz halten zu können, kann vorgesehen sein, daß die Fördervorrichtung in mindestens drei Förderniveaus übereinander angeordnete Förderabschnitte mit zumindest abschnittsweise im wesentlichen horizontaler Förderrichtung umfaßt. In diesem Fall ist es möglich, den Behandlungsabschnitt auf dem untersten Förderniveau, den Zuführabschnitt auf einem der oberen Förderniveaus und den Abführabschnitt auf dem jeweils anderen der beiden oberen Förderniveaus anzuordnen.

Die minimale Länge des Behandlungsabschnittes ist dann nicht mehr durch die Summe der Ausdehnungen des Zuführabschnitts und des Abführabschnitts in der Längsrichtung des Behandlungsbades vorgegeben, sondern muß nur noch der Länge eines dieser Abschnitte entsprechen.

Ferner kann vorgesehen sein, daß die Werkstücke in dem Behandlungsabschnitt, d.h. in dem in das Behandlungsbad eingetauchten Zustand, zumindest abschnittsweise längs einer gekrümmten Förderbahn gefördert werden. Hierdurch ist es möglich, statt eines linearen Behandlungsbades ein Behandlungsbad mit beispielsweise U-förmigem oder S-förmigen Grundriß zu verwenden.

Ferner ist es möglich, die Werkstücke auch durch ein beispielsweise rechteckiges Behandlungsbad längs einer mäanderförmig gekrümmten Förderbahn zu fördern.

Hierdurch kann die maximale Längsausdehnung des Behandlungsbades und damit die erforderliche Längsausdehnung der Oberflächenbehandlungsvorrichtung insgesamt verkürzt werden.

In den Fällen, in denen die Vorrichtung zur Oberflächenbehandlung der Werkstücke mindestens zwei Behandlungsbäder umfaßt, ist vorzugsweise vorgesehen, daß die Behandlungsabschnitte, in welchen die Werkstücke durch die Behandlungsbäder gefördert werden, nicht kolinear zueinander angeordnet sind, d.h. nicht in der Längsrichtung der Behandlungsbäder aufeinanderfolgend angeordnet sind, wie dies beispielsweise in der DE 36 12 128 A1 offenbart ist, sondern stattdessen in einer quer zu der Förderrichtung in mindestens einem der Behandlungsabschnitte gerichteten Richtung zueinander versetzt angeordnet sind.

Besonders günstig ist es, wenn mindestens zwei Behandlungsbäder seitlich nebeneinander angeordnet sind. Dadurch wird erreicht, daß die maximale Längsausdehnung der Vorrichtung zur Oberflächenbehandlung von Werkstücken weiter reduziert wird und die von der Vorrichtung zur Oberflächenbehandlung von Werkstücken beanspruchte Grundfläche eine kompaktere Form annimmt.

Besonders platzsparend ist die erfindungsgemäße Vorrichtung, wenn mindestens zwei Behandlungsbäder in einer zur Längsrichtung der Behandlungsbäder senkrechten Richtung zueinander versetzte Stirnwände aufweisen.

Durch entsprechende Steuerung der Antriebsgeschwindigkeit der Laufwagen kann die Verweildauer jeden Werkstücks in den Behandlungsbädern individuell eingestellt werden. Die jeweils gewünschte Verweildauer kann in einem zusammen mit dem Werkstück durch die Vorrichtung bewegten Datenträger abgespeichert sein.

Alternativ hierzu kann vorgesehen sein, daß die Förderrichtung ein sich längs der Förderbahn bewegendes Fördermittel umfaßt, von welchem die Werkstücke direkt oder indirekt gezogen werden.

Dieses Fördermittel kann einen oder mehrere Förderstränge aufweisen.

Um die Werkstücke während des Fördervorgangs von allen Seiten gut zugänglich zu halten und beispielsweise Spritzeinrichtungen zum Abspritzen der Werkstücke auf allen Seiten möglichst nahe an der Außenkontur der Werkstücke anordnen zu können, ist vorzugsweise vorgesehen, daß die Fördervorrichtung ein einsträngiges Fördermittel umfaßt.

Der Stabilität der an der Fördervorrichtung angeordneten Werkstücke dient es, wenn die lokale Längsmittelebene des Fördermittels im wesentlichen mit der lokalen Längsmittelebene der geförderten Werkstücke übereinstimmt.

Eine hohe Flexibilität in der Gestaltung der Förderbahn und damit hinsichtlich der relativen Anordnung der verschiedenen Teile der Vorrichtung zur Oberflächenbehandlung der Werkstücke wird erzielt, wenn die Fördervorrichtung als Fördermittel eine Kreuzgelenkkette umfaßt. Eine Kreuzgelenkkette weist Laschen auf, welche in zwei senkrecht zueinander stehenden Ebenen gegeneinander verschwenkbar sind, so daß die Kreuzgelenkkette insbesondere sowohl horizontale als auch vertikale Bögen durchlaufen kann.

Grundsätzlich wäre es denkbar, die zu behandelnden Werkstücke direkt an dem Fördermittel der Fördervorrichtung anzuordnen.

Bei einer bevorzugten Ausgestaltung der Erfindung ist jedoch vorgesehen, daß die Werkstücke auf jeweils einem Laufwagen angeordnet sind, der von einem Fördermittel gezogen wird.

Dabei kann der Laufwagen während des Betriebes der Fördervorrichtung entweder fest mit dem Fördermittel verbunden sein, wie bei einem Kreisförderer, oder während des Betriebs der Fördervorrichtung zeitweise von dem Fördermittel abkoppelbar und an anderer Stelle des Fördermittels wieder ankoppelbar sein, wie bei einem sogenannten Power & Free-Förderer.

Die Wirkverbindung zwischen dem Laufwagen und dem Fördermittel kann im Bedarfsfall leicht gelöst werden, so daß die Laufwagen beispielsweise bei einem Auswechseln des Fördermittels in der Fördervorrichtung verbleiben können.

Ferner ist es möglich, die Anzahl der Laufwagen, welche von dem Fördermittel gezogen werden, in einfacher Weise an den Bedarf anzupassen.

Für die Art der Verbindung zwischen dem Laufwagen und dem Fördermittel gibt es eine Vielzahl von Möglichkeiten.

Insbesondere kann vorgesehen sein, daß der Laufwagen über ein Verbindungselement gelenkig mit dem Fördermittel verbunden ist.

Ergänzend oder alternativ hierzu kann vorgesehen sein, daß der Laufwagen mittels eines Mitnehmers, der verschieblich in einer Mitnehmeraufnahme aufgenommen ist, von dem Fördermittel gezogen wird.

In diesem Fall hat es sich als besonders günstig erwiesen, wenn der Mitnehmer an dem Fördermittel und die Mitnehmeraufnahme an dem Laufwagen angeordnet ist.

Um den Laufwagen mit dem daran angeordneten Werkstück eine Bewegung ausführen lassen zu können, welche mehr Freiheitsgrade aufweist als die Bewegung des Fördermittels, kann vorgesehen sein, daß der Laufwagen um die Längsrichtung des Fördermittels schwenkbar ist.

Um den Laufwagen während seiner Vorwärtsbewegung gleichzeitig um die Längsrichtung des Fördermittels drehen zu können, kann vorgesehen sein, daß die Förderrichtung ein Fördermittel umfaßt, welches um seine Längsrichtung verdrillbar ist.

Ein solches Fördermittel kann insbesondere als eine Kreuzgelenkkette ausgebildet sein, welche Kettenlaschen mit jeweils mindestens zwei in der Längsrichtung der Kette aufeinanderfolgenden Abschnitten, welche relativ zueinander um die Längsrichtung der Kette verschwenkbar sind, aufweist.

Alternativ oder ergänzend hierzu könnte auch vorgesehen sein, daß das um seine Längsrichtung verdrillbare Fördermittel beispielsweise als Seil oder als Steckkette ausgebildet ist.

Um zu verhindern, daß Abrieb von dem Fördermittel in das Behandlungsbad gelangt, und um andererseits zu verhindern, daß korrodierende Dämpfe oder Gase aus dem Behandlungsbad zu dem Fördermittel gelangen, ist vorteilhafterweise vorgesehen, daß die Fördervorrichtung ein Fördermittel umfaßt, welches innerhalb einer Führungskanalabdeckung angeordnet ist.

Um zu verhindern, daß von den Werkstücken abtropfende Behandlungsflüssigkeit, beispielsweise Lack, zu dem Fördermittel gelangt und/oder daß Abrieb von dem Fördermittel in das Behandlungsbad oder auf die Werkstücke gelangt, insbesondere, wenn es sich bei den Werkstücken um Fahrzeugkarosserien handelt, welche in einer Kopfüberstellung gefördert werden, ist es von Vorteil, wenn die Führungskanalabdeckung eine zwischen dem Fördermittel und den Werkstücken und/oder eine zwischen dem Fördermittel und dem Behandlungsbad angeordnete Abdeckwand umfaßt.

Bei einer bevorzugten Ausgestaltung der Führungskanalabdeckung ist vorgesehen, daß dieselbe einen Unterdruckabschnitt umfaßt, in welchem innerhalb der Führungskanalabdeckung ein Unterdruck relativ zum Umgebungsdruck erzeugbar ist. Hierdurch wird eine in das Innere der Führungskanalabdeckung hinein gerichtete Luftströmung erzeugt, welche verhindert, daß Abrieb von dem innerhalb der Führungskanalabdeckung angeordneten Fördermittel nach draußen, auf die Werkstücke oder in das Behandlungsbad, gelangt.

Ferner kann vorgesehen sein, daß die Führungskanalabdeckung einen Überdruckabschnitt umfaßt, in welchem innerhalb der Führungskanalabdeckung ein Überdruck relativ zum Umgebungsdruck erzeugbar ist. Hierdurch wird eine aus dem Innenraum der Führungskanalabdeckung nach draußen gerichtete Luftströmung erzeugt, durch welche verhindert wird, daß korrodierende Gase oder Dämpfe aus der Umgebung, insbesondere aus dem Behandlungsbad, zu dem innerhalb der Führungskanalabdeckung angeordneten Fördermittel gelangen.

Umfaßt die Führungskanalabdeckung sowohl mindestens einen Unterdruckabschnitt als auch mindestens einen Überdruckabschnitt, so sind die beiden Abschnitte vorteilhafterweise so verbunden, daß Luft aus dem Unterdruckabschnitt dem Überdruckabschnitt zuführbar ist.

Zum Aufbau des Laufwagens wurden bislang noch keine näheren Angaben gemacht.

Bei einer bevorzugten Ausgestaltung der Erfindung ist vorgesehen, daß der von dem Führungsmittel gezogene Laufwagen, auf dem ein Werkstück oder mehrere Werkstücke angeordnet sind, einen Führungsteil, der innerhalb der Führungskanalabdeckung an Laufwagen-Führungsschienen geführt ist, und einen Werkstück-Aufnahmeteil, der außerhalb der Führungskanalabdeckung angeordnet ist und an dem jeweils mindestens ein Werkstück lösbar gehalten ist, umfaßt.

Der Führungsteil und der Werkstück-Aufnahmeteil des Laufwagens können durch ein Verbindungselement miteinander verbunden sein, wobei sich das Verbindungselement durch einen Durchgangsspalt in der Führungskanalabdeckung hindurch erstreckt.

Um die Abtrennwirkung der Führungskanalabdeckung nicht zu beeinträchtigen, kann vorgesehen sein, daß der Durchgangsspalt mit einer Bürstendichtung versehen ist.

Der beim Durchfahren von Links- oder Rechtskurven auftretende Unterschied zwischen dem kleineren Innenkurvenradius und dem größeren Außenkurvenradius wird vorteilhafterweise dadurch ausgeglichen, daß der Laufwagen mindestens zwei Laufrollenanordnungen umfaßt, die auf einander gegenüberliegenden Seiten der Längsmittelebene des Laufwagens angeordnet sind, wobei mindestens eine der Laufrollenanordnungen relativ zu der Längsmittelebene des Laufwagens derart schwenkbar ist, daß sich der Abstand dieser Laufrollenanordnung von der Längsmittelebene des Laufwagens verändert.

Bei einer besonderen Ausgestaltung der erfindungsgemäßen Vorrichtung ist ferner vorgesehen, daß die Förderrichtung der Werkstücke in dem oberen Förderabschnitt eine horizontale Komponente aufweist, die im wesentlichen senkrecht zu der Förderrichtung der Werkstücke in dem Behandlungsabschnitt gerichtet ist. Hierdurch wird eine besonders deutliche Verkürzung der Vorrichtung in der Längsrichtung des Behandlungsbades erreicht.

Ferner kann vorgesehen sein, daß der obere Förderabschnitt und der Behandlungsabschnitt durch einen Verbindungsabschnitt miteinander verbunden sind, wobei die Förderbahn der Werkstücke in dem Verbindungsabschnitt in einem ersten Teilabschnitt des Verbindungsabschnitts einen ersten Bogen in einer ersten im wesentlichen vertikalen Ebene mit einem ersten Kurvenwinkel und in einem zweiten Teilabschnitt des Verbindungsabschnitts einen zweiten Bogen in einer zweiten im wesentlichen vertikalen Ebene mit einem zweiten Kurvenwinkel durchläuft, wobei die erste vertikale Ebene und die zweite vertikale Ebene quer zueinander ausgerichtet sind.

Besonders platzsparend ist eine solche Vorrichtung, wenn vorteilhafterweise vorgesehen ist, daß die erste vertikale Ebene und die zweite vertikale Ebene im wesentlichen senkrecht zueinander ausgerichtet sind.

Ferner ist vorzugsweise vorgesehen, daß der erste Kurvenwinkel und/oder der zweite Kurvenwinkel im wesentlichen 90° beträgt.

Ferner ist es besonders günstig, wenn der obere Förderabschnitt über einen weiteren Verbindungsabschnitt mit einem weiteren Behandlungsabschnitt verbunden ist und wenn die Förderbahn in dem Verbindungsabschnitt, dem oberen Förderabschnitt und dem weiteren Verbindungsabschnitt einen Bogen in Form eines nach unten offenen U durchläuft.

Die Werkstücke können in dem oberen Förderabschnitt insbesondere seitlich neben einem Fördermittel, beispielsweise einer Förderkette, der Fördervorrichtung angeordnet sein.

Wenn die Werkstücke Fahrzeugkarosserien sind, so können die Fahrzeugkarosserien insbesondere in einer Seitwärtsstellung durch den oberen Förderabschnitt gefördert werden, in welcher die Längsmittelachse der Fahrzeugkarosserien, bezüglich welcher die Fahrzeugkarosserien im wesentlichen spiegelsymmetrisch sind, im wesentlichen horizontal ausgerichtet ist.

Der vorliegenden Erfindung liegt die weitere Aufgabe zugrunde, ein Verfahren der eingangs genannten Art zu schaffen, welches mit einer Vorrichtung durchführbar ist, die einen geringen Platzbedarf, insbesondere eine geringe maximale Längsausdehnung, aufweist.

Diese Aufgabe wird erfindungsgemäß durch ein Verfahren nach Anspruch 44 gelöst.

Besondere Ausgestaltungen des erfindungsgemäßen Verfahrens sind Gegenstand der abhängigen Ansprüche 45 bis 86, deren Vorteile bereits im Zusammenhang mit den besonderen Ausgestaltungen der erfindungsgemäßen Vorrichtung erläutert worden sind.

Die erfindungsgemäße Vorrichtung und das erfindungsgemäße Verfahren bieten den Vorteil, dass über einem Behandlungsbad vorhandene Freiräume besser genutzt werden können.

Durch das Eintauchen der Werkstücke in das Behandlungsbad längs der über den Verlauf der Förderbahn vorgegebenen Eintauchkurve wird eine gründliche Ausspülung der zu behandelnden Werkstücke, insbesondere der zu behandelnden Fahrzeugkarosserien, erzielt.

Die erfindungsgemäße Vorrichtung zur Oberflächenbehandlung von Werkstücken ist besonders kompakt und kann daher auch in sehr kleinen Hallen installiert und betrieben werden.

Die erfindungsgemäße Vorrichtung bietet nicht nur den Vorteil, dass die zur Aufstellung derselben benötigte Grundfläche vergleichsweise klein ist; darüber hinaus bietet sie den Vorteil, dass die Grundfläche weitgehend einem Quadrat angenähert werden kann, so dass das Verhältnis der Gesamtwandlänge der Halle, in welcher die Vorrichtung aufgestellt wird, zur Grundfläche der Halle klein gehalten werden kann.

Die erfindungsgemäße Vorrichtung erlaubt die Verwendung von kurzen Behandlungsbädern, so dass die Investitionskosten gering gehalten werden können und auch nur kleinere Volumina von Behandlungsflüssigkeit benötigt werden.

Aufgrund der hohen Flexibilität hinsichtlich der Anordnung der verschiedenen Anlagenteile können Störkonturen in der Halle, in welcher die Vorrichtung aufzustellen ist, leicht umgangen oder umbaut werden.

Das in der Fördervorrichtung zum Einsatz kommende Fördermittel kann in einem Rücklaufabschnitt, welcher in derselben Ebene liegt wie der obere Förderabschnitt, von der Entladestation zur Beladestation zurückgefördert werden, was den Herstellungs- und den Wartungsaufwand senkt.

Sowohl die Fördervorrichtungen als auch die für Betrieb und Wartung der Behandlungsbäder erforderlichen Prozeßeinrichtungen können in einem Baukastensystem zusammengestellt werden.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf eine Vorrichtung zur Oberflächenbehandlung von Fahrzeugkarosserien, weiche sieben Behandlungsbäder und drei Fördervorrichtungen umfaßt;
- Fig. 2: eine vergrößerte schematische Draufsicht auf die erste Fördervorrichtung der Oberflächenbehandlungsvorrichtung aus Fig. 1;
- Fig. 3: eine schematische Seitenansicht des zweiten Behandlungsbades der Oberflächenbehandlungsvorrichtung mit Blickrichtung in Richtung der Pfeile 3 in Fig. 1;
- Fig. 4: einen schematischen Schnitt längs der Linie 4-4 in Fig. 3;
- Fig. 5: eine vergrößerte Darstellung des Bereichs I aus Fig. 4;
- Fig. 6: eine vergrößerte Darstellung des Bereichs II aus Fig. 4;
- Fig.7: eine schematische Draufsicht von oben auf eine Fahrzeugkarosserie mit Laufwagen und auf eine Kreuzgelenkkette der Fördervorrichtung mit Blickrichtung längs des Pfeiles 7 in Fig. 3;
- Fig. 8: eine schematische Seitenansicht einer Fahrzeugkarosserie mit Laufwagen, welcher über eine Schleppstange von der Kreuzgelenkkette gezogen wird;
- Fig. 9: eine vergrößerte Seitenansicht der Schleppstange, einer Ausgleichstange und der Kreuzgelenkkette aus Fig. 8;
- Fig. 10: eine der Fig. 8 entsprechende Seitenansicht der Fahrzeugkarosserie, des Laufwagens und der Kreuzgelenkkette in einem gekrümmten Abschnitt der Förderbahn;
- Fig. 11: eine vergrößerte Darstellung der Schleppstange, der Ausgleichstange und der Kreuzgelenkkette aus Fig. 10;
- Fig. 12: eine der Fig. 11 entsprechende Abbildung mit zusätzlicher Darstellung von zwei Laufrollenanordnungen des Laufwagens;
- Fig. 13: eine schematische Draufsicht von oben auf die Fahrzeugkarosserie mit Laufwagen und auf die Kreuzgelenkkette in einer Linkskurve;
- Fig. 14: eine schematische Seitenansicht einer zweiten Ausführungsform der Oberflächenbehandlungsvorrichtung, welche eine Fördervorrichtung umfaßt, die horizontale Förderabschnitte in drei verschiedenen Ebenen aufweist;
- Fig. 15: einen schematischen Querschnitt durch eine Fahrzeugkarosserie mit Laufwagen und durch die Kreuzgelenkkette bei einer dritten Ausführungsform der Oberflächenbehandlungsvorrichtung, bei welcher der Laufwagen über einen Mitnehmerzapfen an die Kreuzgelenkkette angekoppelt ist;
- Fig. 16: eine vergrößerte Darstellung des Bereichs I aus Fig. 15;
- Fig. 17: eine schematische Seitenansicht des Laufwagens aus Fig. 15 auf der Festseite des Laufwagens;
- Fig. 18: eine schematische Seitenansicht des Laufwagens aus Fig. 15 auf der Losseite des Laufwagens;
- Fig. 19: eine schematische Seitenansicht des Laufwagens aus Fig. 15 auf der Festseite des Laufwagens in einem gekrümmten Abschnitt der Förderbahn;
- Fig. 20: eine schematische Seitenansicht einer vierten Ausführungsform der Oberflächenbehandlungsvorrichtung, deren Fördervorrichtung eine um ihre Längsrichtung verdrillbare Kreuzgelenkkette umfaßt;
- Fig. 21: eine schematische Darstellung des Schwenkens einer Fahrzeugkarosserie um die Längsrichtung der Förderkette in einem Förderabschnitt mit wendelförmiger Förderbahn;
- Fig. 21A: eine isometrische Darstellung eines Förderabschnitts mit wendelförmigen Laufwagen-Führungsprofilen und wendelförmigen Ketten-Führungsprofilen;
- Fig. 21B: eine der Fig. 21A entsprechende Darstellung, jedoch mit Unterdrückung unsichtbarer Linien;
- Fig. 22: eine schematische Seitenansicht der Fahrzeugkarosserie mit Laufwagen und der verdrillbaren Kreuzgelenkkette;
- Fig. 23: eine vergrößerte Darstellung des Laufwagens und der verdrillbaren Kreuzgelenkkette aus Fig. 22;
- Fig. 24: eine Seitenansicht der Kreuzgelenkkette aus Fig. 23;
- Fig. 25: eine schematische Seitenansicht eines Laufwagens und einer Kreuzgelenkkette bei einer fünften Ausführungsform der Oberflächenbehandlungsvorrichtung, deren Fördervorrichtung eine Kreuzgelenkkette umfaßt, an welcher der Laufwagen um die Längsrichtung der Kette schwenkbar gehalten ist;
- Fig. 26: eine vergrößerte Darstellung des Bereichs I aus Fig. 25;
- Fig. 27: eine isometrische Darstellung eines Förderabschnitts mit wendelförmigen Laufwagen-Führungsprofilen und geradlinigen Ketten-Führungsprofilen;
- Fig. 28: eine der Fig. 27 entsprechende Darstellung, jedoch mit Unterdrückung unsichtbarer Linien;
- Fig. 29: einen schematischen Schnitt durch Ketten-Führungsprofile und Laufwagenrollen-Führungsprofile einer sechsten Ausführungsform der Oberflächenbehandlungsvorrichtung;
- Fig. 30: eine der Fig. 29 entsprechende Schnittdarstellung mit einem an den Führungsprofilen angeordneten Laufwagen;
- Fig. 31: einen schematischen Querschnitt durch Ketten-Führungsprofilrohre und Laufwagenrollen-Führungsprofilrohre einer siebten Ausführungsform der Oberflächenbehandlungsvorrichtung;
- Fig. 32: eine der Fig. 31 entsprechende Schnittdarstellung mit einem an den Führungsprofilrohren angeordneten Laufwagen;
- Fig. 33: einen schematischen Querschnitt durch Ketten-Führungsprofilrohre und Laufwagenrollen-Führungsprofilrohre einer achten Ausführungsform der Obertlächenbehandlungsvorrichtung;
- Fig. 34: eine der Fig. 33 entsprechende Schnittdarstellung mit einem an den Führungsprofilrohren angeordneten Laufwagen;
- Fig. 35: eine schematische perspektivische Darstellung einer neunten Ausführungsform der Oberflächenbehandlungsvorrichtung; und
- Fig. 36: eine schematische Draufsicht auf die neunte Ausführungsform der Oberflächenbehandlungsvorrichtung.

Gleiche oder funktional äquivalente Element sind in allen Figuren mit denselben Bezugszeichen bezeichnet.

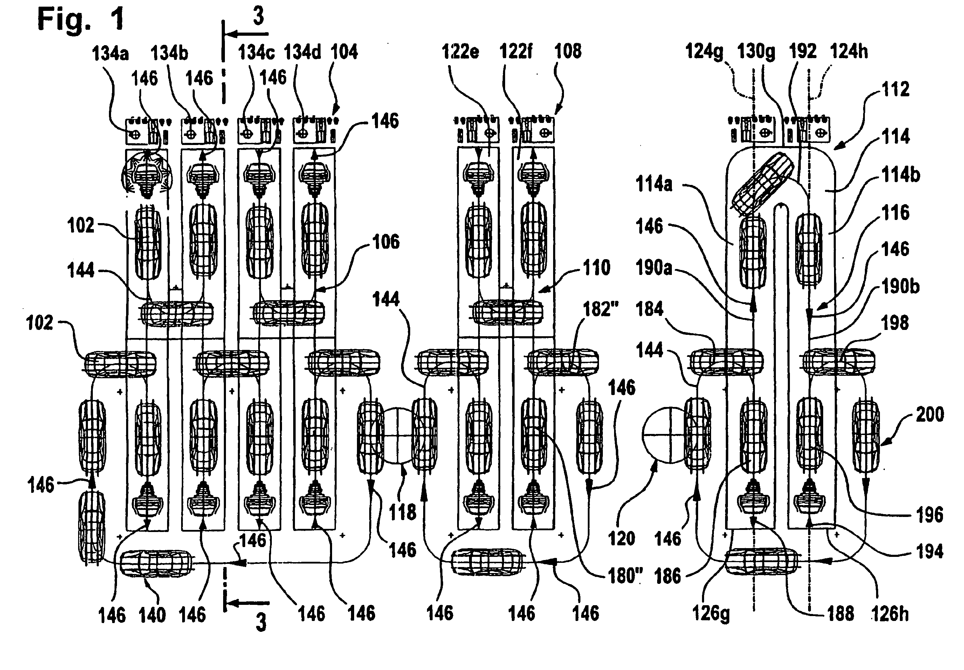

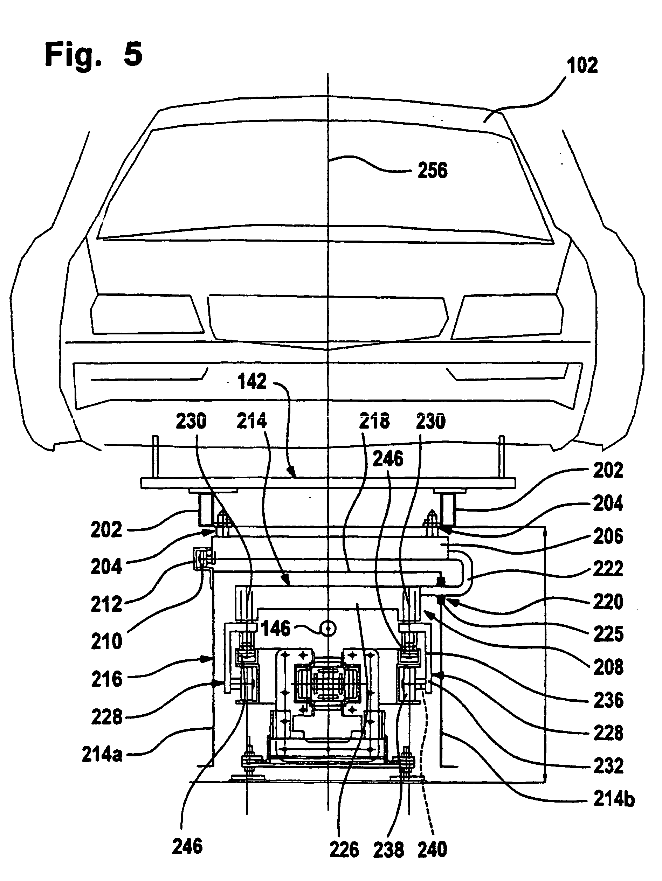

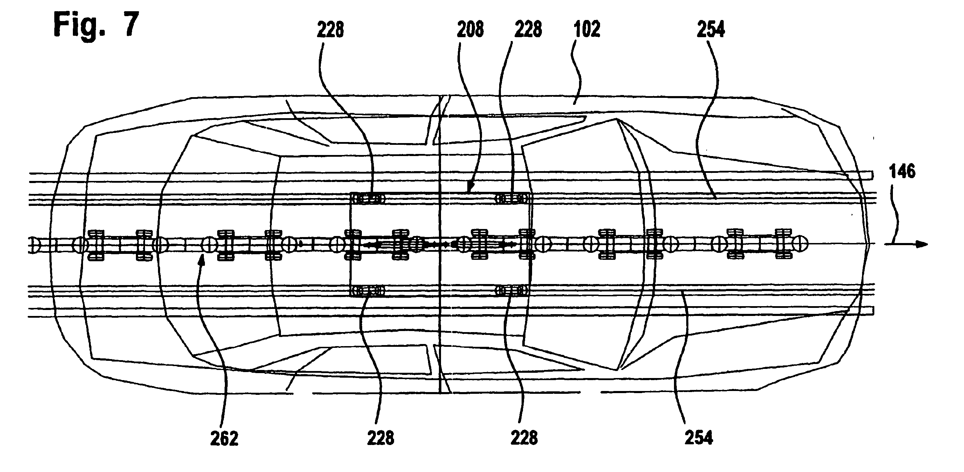

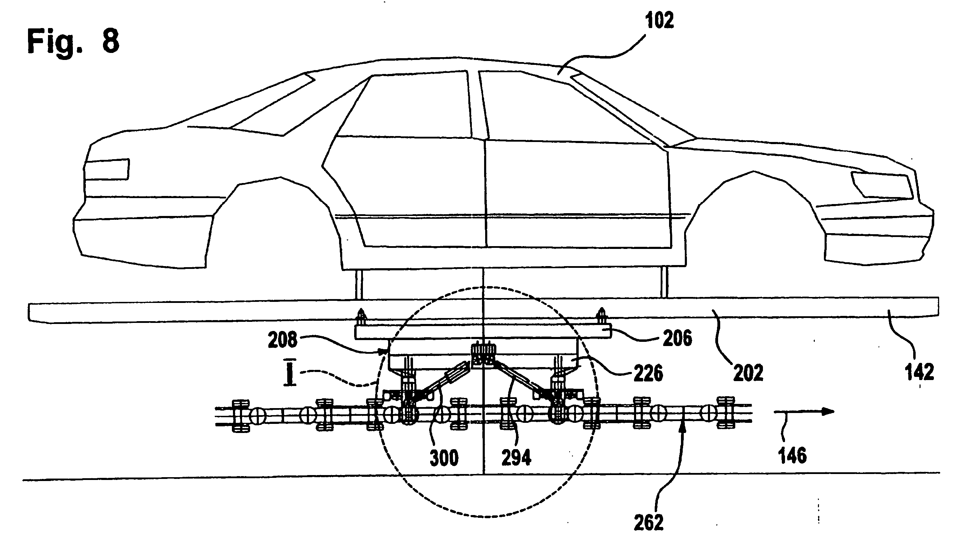

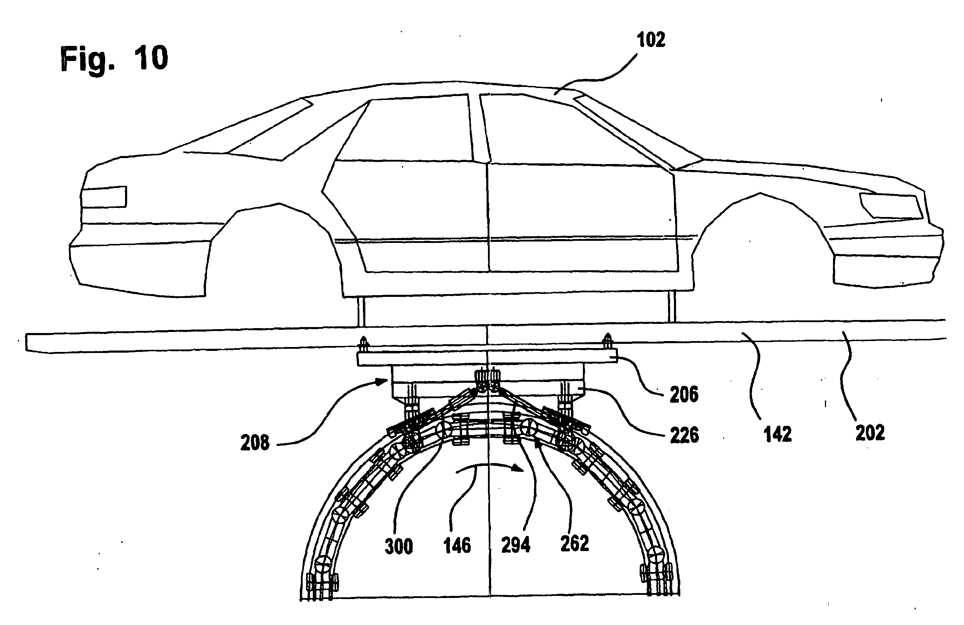

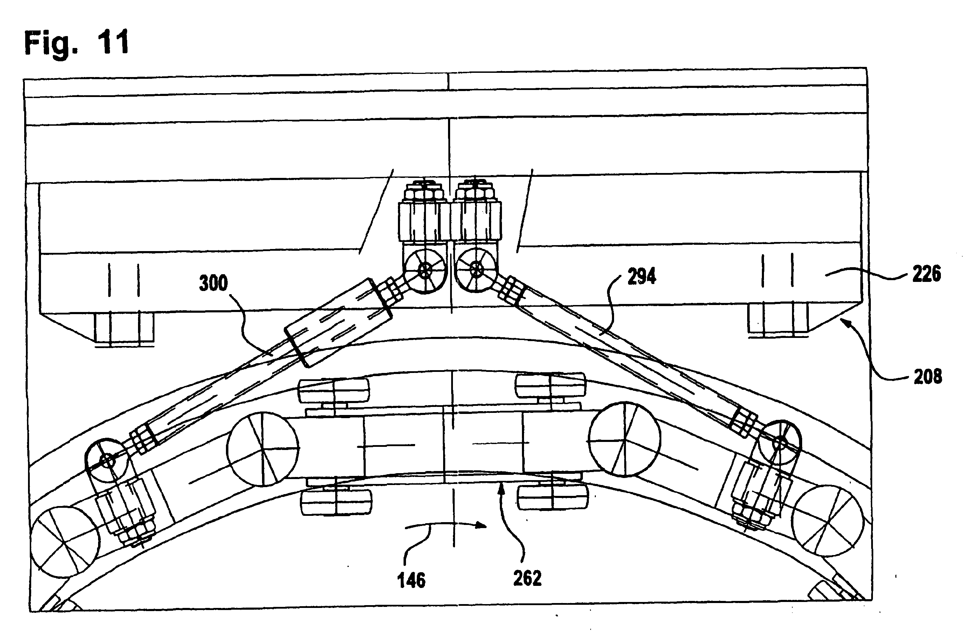

Eine in den Fig. 1 bis 13 dargestellte, als Ganzes mit 100 bezeichnete Oberflächenbehandlungsvorrichtung dient der Oberflächenbehandlung von Fahrzeugkarosserien 102 und umfaßt eine erste Gruppe 104 von Behandlungsbädern, durch welche die Fahrzeugkarosserien 102 mittels einer ersten Fördervorrichtung 106 gefördert werden, eine zweite Gruppe von Behandlungsbädern 108, durch welche die Fahrzeugkarosserien mittels einer zweiten Fördervorrichtung 110 gefördert werden, und eine dritte Gruppe von Behandlungsbädern 112, welche lediglich ein in der Draufsicht U-förmiges Behandlungsbad 114 umfaßt, durch welches die Fahrzeugkarosserien 102 mittels einer dritten Fördervorrichtung 116 gefördert werden.

Ferner umfaßt die Oberflächenbehandlungsvorrichtung 100 eine erste Umsetzvorrichtung 118, in welcher Fahrzeugkarosserien 102 von der ersten Fördervorrichtung 106 auf die zweite Fördervorrichtung 110 umgesetzt werden, und eine zweite Umsetzvorrichtung 120, in welcher Fahrzeugkarosserien von der zweiten Fördervorrichtung 110 auf die dritte Fördervorrichtung 116 umgesetzt werden.

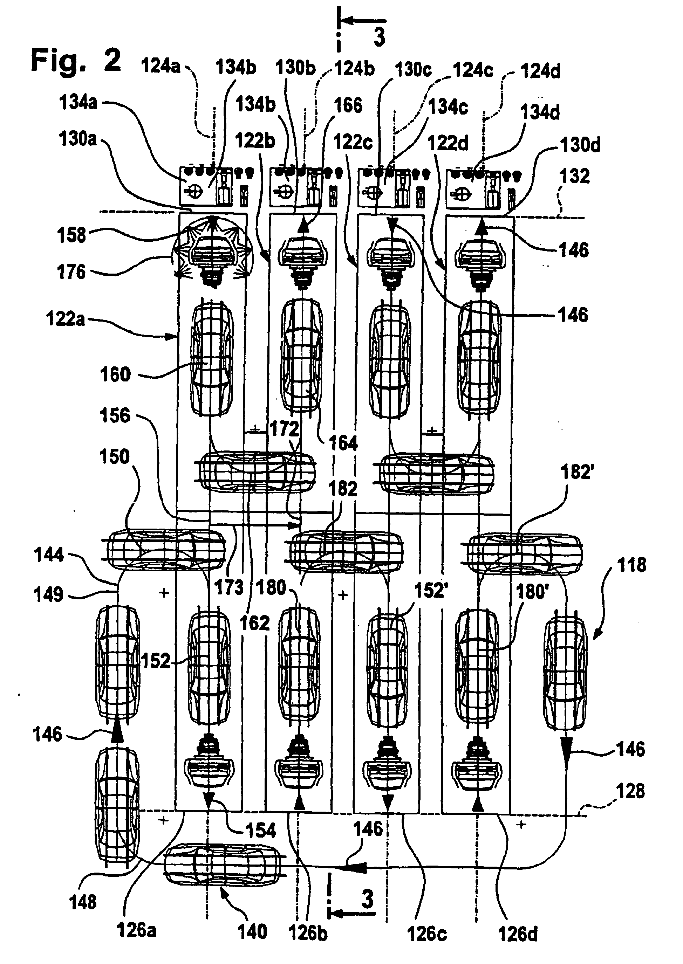

Im folgenden wird die erste Gruppe 104 von Behandlungsbädern, welche in Fig. 2 vergrößert dargestellt ist, näher erläutert werden.

Wie aus Fig. 2 zu ersehen ist, umfaßt die erste Gruppe 104 von Behandlungsbädern vier Behandlungsbäder 122a, 122b, 122c und 122d, deren Längsachsen 124a, 124b, 124c und 124d alle parallel, aber nicht kolinear zueinander, ausgerichtet sind. Vielmehr sind die Behandlungsbäder 122a bis 122d so seitlich nebeneinander angeordnet, daß ihre vorderen Stirnwände 126a bis 126d in derselben vertikalen Ebene 128 abschließen.

Da die Behandlungsbäder 122a bis 122d alle dieselbe Länge aufweisen, schließen auch deren hintere Stirnwände 130a bis 130d in derselben vertikalen Ebene 132 ab.

Hinter jeder hinteren Stirnwand 130a bis 130d der Behandlungsbäder 122a bis 122d ist jeweils eine Prozeßtechnikkabine 134a bis 134d angeordnet, in welcher die für den Betrieb und die Wartung des jeweiligen Behandlungsbads erforderlichen Prozeßtechnikeinrichtungen, beispielsweise Pumpen und Filtereinrichtungen, untergebracht sind.

Da alle Prozeßtechnikkabinen 134a bis 134d direkt nebeneinander angeordnet sind, können die für den Betrieb der ersten Gruppe 104 von Behandlungsbädern erforderlichen Verrohrungen kurz gehalten werden und werden der Betrieb und die Wartung dieser Behandlungsbäder vereinfacht, da zwischen den Prozeßtechnikkabinen 134a bis 134d nur kurze Wege zurückzulegen sind.

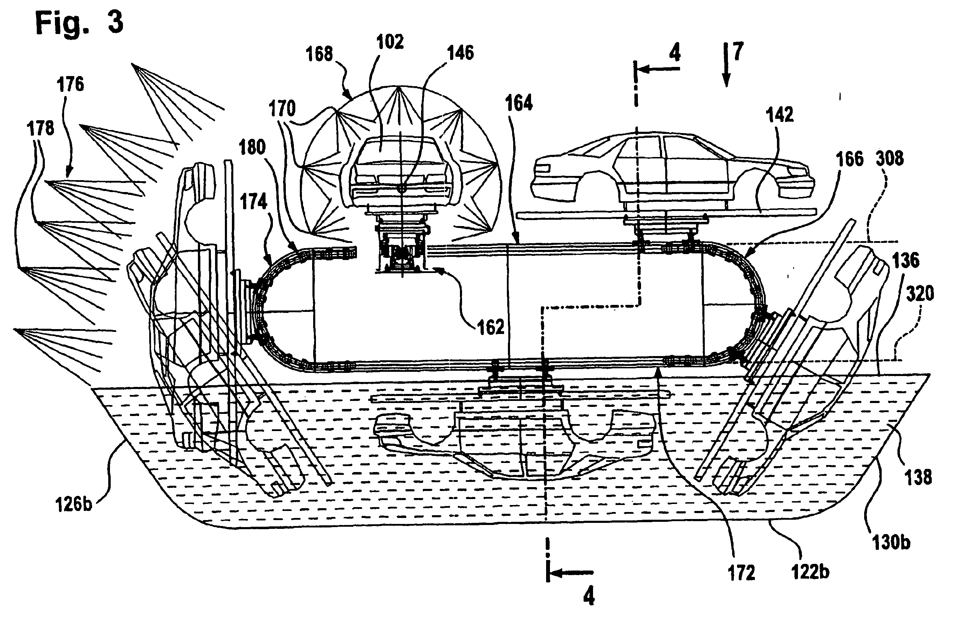

Wie am Beispiel des zweiten Behandlungsbades 122b in Fig. 3 zu sehen ist, sind die Behandlungsbäder bis zu einem Behandlungsbadspiegel 136 mit einem Volumen einer Behandlungsflüssigkeit 138 angefüllt.

Mittels der ersten Fördervorrichtung 106 werden die Fahrzeugkarosserien 102 nacheinander durch die Behandlungsflüssigkeiten 138 der Behandlungsbäder 122a bis 122d gefördert.

In einer Beladungsstation 140 (siehe Fig. 1 und 2) werden die Fahrzeugkarosserien 102, welche auf Skidrahmen 142 angeordnet sind, auf die erste Fördervorrichtung 106 aufgesetzt.

Von der Beladungsstation 140 werden die Fahrzeugkarosserien 102 längs einer Förderbahn 144, deren lokale Förderrichtung in den Figuren jeweils mittels Pfeilen 146 angegeben ist, durch die erste Gruppe 104 von Behandlungsbädern bis zu der ersten Umsetzvorrichtung 118 gefördert.

Von der Beladungsstation 140, welche auf einem oberen Förderniveau 308 oberhalb der Behandlungsbäder 122a bis 122d angeordnet ist, gelangen die Fahrzeugkarosserien 102 durch eine Rechtskurve 148 (siehe Fig. 2) in einen geradlinigen horizontalen oberen Förderabschnitt 149, welcher über eine Rechtskurve 150 mit einem Kurvenwinkel von 180° in einen geradlinigen horizontalen oberen Förderabschnitt 152 übergeht, der senkrecht über dem vorderen Teil des ersten Behandlungsbads 122a angeordnet ist und in welchem die Förderrichtung 146 parallel zur Längsachse 124a des Behandlungsbads 122a verläuft.

Der geradlinige obere Förderabschnitt 152 geht nahe des vorderen Endes des Behandlungsbades 122a über einen vertikal gerichteten Bogen 154 mit einem Kurvenwinkel von 180° in einen horizontalen geradlinigen Behandlungsabschnitt 154 über, welcher auf einem unteren Förderniveau 320 liegt und direkt unter dem geradlinigen oberen Förderabschnitt 152 angeordnet ist. In dem Behandlungsabschnitt 156 ist die Förderrichtung 146 entgegengesetzt parallel zu der Förderrichtung 146 in dem oberen Förderabschnitt 152 gerichtet.

Nahe des hinteren Endes des Behandlungsbades 122a geht der horizontal gerichtete Behandlungsabschnitt 156 über einen in einer vertikalen Ebene liegenden Bogen 158 mit einem Kurvenwinkel von 180° in einen weiteren geradlinigen, horizontalen oberen Förderabschnitt 160 über, welcher wiederum auf dem oberen Förderniveau 308 liegt.

Die Förderrichtung 146 im oberen Förderabschnitt 160, welcher direkt über dem Behandlungsabschnitt 156 angeordnet ist, ist entgegensetzt parallel zur Förderrichtung im Behandlungsabschnitt 156 und parallel zur Förderrichtung 146 im oberen Förderabschnitt 152 ausgerichtet.

Der geradlinige obere Förderabschnitt 160 geht über eine in einer horizontalen Ebene liegende Linkskurve 162 mit einem Kurvenwinkel von 180°, deren Durchmesser dem Abstand der Längsmittelachsen 124a und 124d der beiden Behandlungsbäder 122a bzw. 122b entspricht, in einen über dem zweiten Behandlungsbad 122b angeordneten geradlinigen, horizontalen oberen Förderabschnitt 164 über, in welchem die Förderrichtung 146 antiparallel zur Förderrichtung in dem oberen Förderabschnitt 160 gerichtet ist.

Wie aus Fig. 3 zu ersehen ist, ist im Bereich der Linkskurve 162 ein senkrecht zur Förderrichtung 146 ausgerichteter Spritzdüsenkranz 168 vorgesehen, welcher mehrere, beispielsweise sieben, längs eines Kreisbogens im wesentlich äquidistant verteilte Spritzdüsen 170 umfaßt, durch welche die den Spritzdüsenkranz 168 passierenden Fahrzeugkarosserien 102 mit einer Spülflüssigkeit abspritzbar sind, um Reste von an der Karosserie 102 verbliebener Behandlungsflüssigkeit aus dem ersten Behandlungsbad 122a zu entfernen, bevor die Fahrzeugkarosserie 102 in das zweite Behandlungsbad 122b eintaucht. Ein weiterer Spritzdüsenkranz 168 ist im Bereich des vertikalen Bogens 158 angeordnet (siehe Fig. 1 und 2).

An den oberen Förderabschnitt 164 schließt sich nahe des hinteren Endes des zweiten Behandlungsbads 122b ein in einer vertikalen Ebene liegender Bogen 166 an, welcher einen Kurvenwinkel von 180° aufweist und auf das untere Förderniveau 320 zurückführt.

Wie aus Fig. 3 zu ersehen ist, tauchen die Fahrzeugkarosserien 102 beim Durchlaufen des vertikalen Bogens 166 mit dem Vorderteil der Fahrzeugkarosserie voran in die Behandlungsflüssigkeit 138 des Behandlungsbades 122b ein.

Außerdem werden die Fahrzeugkarosserien 102 beim Durchlaufen des Bogens 166 von einer Standardstellung, in welcher Fensteröffnungen der jeweiligen Karosserie oberhalb der Bodengruppe der Karosserie angeordnet sind und in welcher die Fahrzeugkarosserien durch den oberen Förderabschnitt 164 gefördert werden, in eine Kopfüberstellung überführt, in welcher Fensteröffnungen der Karosserien unterhalb der Bodengruppe der Karosserien angeordnet sind.

In dieser Kopfüberstellung werden die Fahrzeugkarosserien 102 durch den sich an den Bogen 166 anschließenden Behandlungsabschnitt 172 gefördert, welcher auf dem unteren Förderniveau angeordnet ist und in welchem die Förderrichtung 146 entgegengesetzt parallel zu der Förderrichtung 146 in dem oberen Förderabschnitt 164 ausgerichtet ist.

Der Behandlungsabschnitt 172 ist direkt senkrecht unter dem oberen Förderabschnitt 164 angeordnet.

Der Beharidlungsabschnitt 172 ist parallel zu dem Behandlungsabschnitt 156 angeordnet, aber in einer quer zur Vertikalen und quer zur Förderrichtung 146 in den Behandlungsabschnitten 156 und 172 gerichteten, insbesondere horizontalen, Richtung, die in Fig. 2 durch den Pfeil 173 angegeben ist, gegen den Behandlungsabschnitt 156 versetzt angeordnet.

Beim Durchlaufen des Behandlungsabschnitts 172 sind die Fahrzeugkarosserien 102 vollständig in die Behandlungsflüssigkeit 138 eingetaucht.

Nahe des vorderen Endes des Behandlungsbades 122b geht der geradlinige Behandlungsabschnitt 172 in einen vertikalen Bogen 174 über, welcher einen Kurvenwinkel von 180° aufweist und zurück auf das obere Förderniveau führt.

Beim Durchlaufen des Bogens 174 tauchen die Fahrzeugkarosserien 102, mit dem Vorderteil voran, aus der Behandlungsflüssigkeit 138 des zweiten Behandlungsbades 122b aus.

Wie aus Fig. 3 zu ersehen ist, ist im Bereich des vertikalen Bogens 174 eine Spritzdüsenanordnung 176 vorgesehen, welche mehrere, beispielsweise sechs, längs der Austauchkontur der Fahrzeugkarosserien 102 verteilte Spritzdüsen 178 umfaßt. Mittels diesen Spritzdüsen 178 sind auf die Fahrzeugkarosserien 102 gerichtete Spülflüssigkeitsstrahlen erzeugbar, durch weiche an den Fahrzeugkarosserien 102 verbliebene Behandlungsflüssigkeit aus dem Behandlungsbad 122b abgespült wird, bevor die Fahrzeugkarosserien 102 zu dem nächsten Behandlungsbad 122c weiter transportiert werden.

An das obere Ende des vertikalen Bogens 174 schließt sich ein geradliniger horizontaler oberer Förderabschnitt 180 an, welcher wiederum auf dem oberen Förderniveau 308 liegt und in welchem die Förderrichtung 146 antiparallel zu der Förderrichtung 146 im Behandlungsabschnitt 172 und parallel zur Förderrichtung in dem oberen Förderabschnitt 164 ausgerichtet ist.

Wie am besten aus Fig. 2 zu ersehen ist, geht dieser geradlinige obere Förderabschnitt 180 über eine horizontale Rechtskurve 182 mit einem Kurvenwinkel von 180° in einen horizontalen oberen Förderabschnitt 152' über, welcher in derselben Weise über dem dritten Behandlungsbad 122c angeordnet ist wie der vorstehend bereits beschriebene geradlinige obere Förderabschnitt 152 über dem ersten Behandlungsbad 122a.

Der weitere Verlauf der Förderbahn 144 durch das dritte Behandlungsbad 122c und das vierte Behandlungsbad 122d entspricht der vorstehend bereits beschriebenen Förderbahn durch die ersten beiden Behandlungsbäder 122a, 122b, so daß auf eine detaillierte Beschreibung verzichtet werden kann.

Nach dem Austauchen aus dem vierten Behandlungsbad 122d werden die Fahrzeugkarosserien aus einem geradlinigen oberen Förderabschnitt 180', welcher sich auf dem oberen Förderniveau 308 befindet, durch eine horizontale Rechtskurve 182' mit einem Kurvenwinkel von 180° in die erste Umsetzvorrichtung 118 gefördert, in welcher die Fahrzeugkarosserien 102 zusammen mit dem jeweiligen Skidrahmen 142 von der ersten Fördervorrichtung 106 abgenommen und auf die zweite Fördervorrichtung 110 der zweiten Gruppe 108 von Behandlungsbädern aufgesetzt werden.

Wie aus Fig. 1 zu ersehen ist, verläuft die Förderbahn 144 der zweiten Fördervorrichtung 110 durch die beiden Behandlungsbäder 122e und 122f der zweiten Gruppe 108 von Behandlungsbädern in derselben Weise wie die Förderbahn 144 der ersten Fördervorrichtung 106 durch die Behandlungsbäder 122a und 122b, so daß auf eine detaillierte Beschreibung des Aufbaus dieser Förderbahn verzichtet werden kann.

Nach dem Austauchen aus dem letzten Behandlungsbad 122f der zweiten Gruppe 108 von Behandlungsbädern gelangen die Fahrzeugkarosserien 102 aus einem auf dem oberen Förderniveau gelegenen geradlinigen oberen Förderabschnitt 180" durch eine horizontale Rechtskurve 182" mit einem Kurvenradius von 180° in die zweite Umsetzvorrichtung 120, in welcher die Fahrzeugkarosserien 102 von der zweiten Fördervorrichtung 110 abgenommen und auf die dritte Fördervorrichtung 116 aufgesetzt werden.

Wie aus der Fig. 1 zu ersehen ist, umfaßt die dritte Gruppe 112 von Behandlungsbädern nur das in der Draufsicht U-förmige Behandlungsbad 114.

Die Förderbahn 144 der dritten Fördervorrichtung 116 durch das Behandlungsbad 114 setzt sich wie folgt zusammen:

Von der auf dem oberen Förderniveau gelegenen zweiten Umsetzvorrichtung 120 werden die Fahrzeugkarosserien durch eine horizontale Rechtskurve 184 mit einem Kurvenwinkel von 180° in einen über dem linken Schenkel 114a des Behandlungsbads angeordneten horizontalen, geradlinigen oberen Förderabschnitt 186 gefördert, in welchem die Förderrichtung 146 parallel zur Längsachse 124g des linken Schenkels 114a des Behandlungsbads 114 und zu der vorderen Stirnwand 126g dieses Schenkels des Behandlungsbads 114 hin gerichtet ist.

Nahe des vorderen Endes des Schenkels 114a des Behandlungsbads 114 führt ein vertikaler Bogen 188 mit einem Kurvenwinkel von 180° von dem oberen Förderniveau auf das untere Förderniveau.

An den vertikalen Bogen 188 schließt sich ein linker Behandlungsabschnitt 190a an, welcher geradlinig und horizontal ausgerichtet ist und in welchem die Förderrichtung 146 antiparallel zu der Förderrichtung 146 in dem oberen Förderabschnitt 186 ausgerichtet ist.

Nahe der hinteren Stirnwand 130g des Behandlungsbads 114 werden die in der Kopfüberstellung in die Behandlungsflüssigkeit des Behandlungsbads 114 eingetauchten Fahrzeugkarosserien 102 durch eine auf dem unteren Förderniveau liegende horizontale Rechtskurve 192 mit einem Kurvenwinkel von 180° von dem linken Schenkel 114a des Behandlungsbads 114 in dessen rechten Schenkel 114b gefördert, ohne aus der Behandlungsflüssigkeit auszutauchen.

Dort schließt sich an die Rechtskurve 192 ein geradliniger, horizontaler rechter Behandlungsabschnitt 190b an, in welchem die Förderrichtung 146 antiparallel zu der Förderrichtung in dem linken Behandlungsabschnitt 190a ausgerichtet ist.

Nahe der vorderen Stirnwand 126h des rechten Schenkels 114b des Behandlungsbads 114 geht der rechte Behandlungsabschnitt 190b in einen vertikalen Bogen 194 mit einem Kurvenwinkel von 180° über, welcher von dem unteren Förderniveau zurück auf das obere Förderniveau führt.

Aus einem sich an den vertikalen Bogen 194 anschließenden horizontalen geradlinigen oberen Förderabschnitt 196, welcher vertikal über dem rechten Behandlungsabschnitt 190b angeordnet ist und in welchem die Förderrichtung 146 antiparallel zu der Förderrichtung 146 in dem Behandlungsabschnitt 190b gerichtet ist, gelangen die Fahrzeugkarosserien 102 durch eine horizontale Rechtskurve 198 mit einem Kurvenwinkel von 180° in eine auf dem oberen Förderniveau befindliche Entnahmestation 200, in welcher die Fahrzeugkarosserien 102 von der dritten Fördervorrichtung 116 abgenommen und einer Weiterbehandlung, beispielsweise einer Trocknung, zugeführt werden.

Der Aufbau der Fördervorrichtungen 106, 110 und 116 wird nachfolgend am Beispiel der ersten Fördervorrichtung 106 beschrieben.

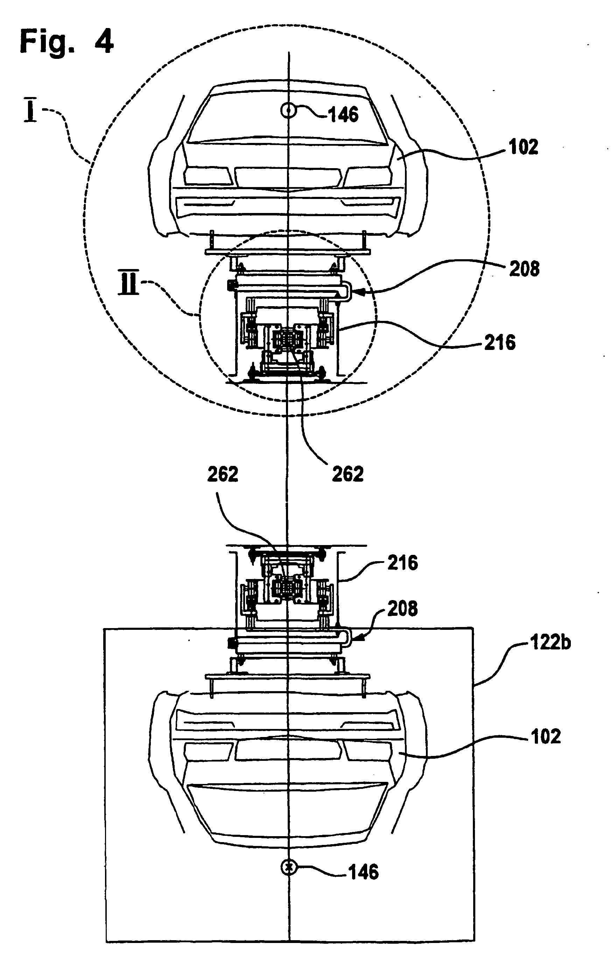

Wie aus den Fig. 4 bis 9 zu ersehen ist, ist jede der Fahrzeugkarosserien 102 auf einem Skidrahmen 142 mit zwei parallelen Skidkufen 202 angeordnet, welcher mittels an sich bekannter Spannvorrichtungen 204 an einer im wesentlichen plattenförmigen Aufnahmeplattform 206 eines als ganzes mit 208 bezeichneten Laufwagens gehalten ist.

Die Aufnahmeplattform 206 stützt sich an einer ihrer Längsseiten mittels an der Aufnahmeplattform 206 drehbar gehaltener Stützrollen 210 an einem Stützrollen-Führungsprofil 212 ab, welches einen U-förmigen Querschnitt mit horizontal gerichteten Schenkeln aufweist, wobei die Stützrollen 210 auf dem unteren Schenkel des Stützrollen-Führungsprofils 212 abrollen.

Bei der Beschreibung des Laufwagens, der Führungsprofile und der Förderkette beziehen sich die Angaben "horizontal" und "vertikal" auf die Ausrichtung der betreffenden Elemente in einem horizontalen Förderabschnitt. Die Angaben "oben" und "unten" beziehen sich auf die Anordnung der betreffenden Elemente in einem horizontalen Förderabschnitt, durch welchen die Fahrzeugkarosserien in der Standardstellung gefördert werden.

Das Stützrollen-Führungsprofil 212 ist am oberen Rand einer vertikalen Seitenwand 214a einer Führungskanalabdeckung 216 festgelegt, welche außer der Seitenwand 214a eine derselben gegenüberliegende weitere Seitenwand 214b und eine die Seitenwände 214a, 214b miteinander verbindende, parallel zu der Aufnahmeplattform 206 ausgerichtete Deckenwand 218 umfaßt.

Nahe des oberen Randes der Seitenwand 214b ist in derselben ein parallel zur Förderrichtung 146 verlaufender Durchgangsspalt 220 angeordnet, durch welchen sich ein im wesentlichen U-förmiger Haltebügel 222 hindurch erstreckt, welcher die den Stützrollen 210 gegenüberliegende Längsseite der Aufnahmeplattform 206 mit einem innerhalb der Führungskanalabdeckung 216 angeordneten Führungsteil 224 des Laufwagens 208 verbindet.

Der nicht von dem Haltebügel 222 durchgesetzte Bereich des Durchgangsspalts 220 wird von einer Bürstendichtung 225 abgedeckt.

Der Führungsteil 224 des Laufwagens 208 umfaßt eine im wesentlichen quaderförmige Führungsteil-Plattform 226, welche parallel zu der Aufnahmeplattform 206 ausgerichtet ist. In jedem der vier Eckbereiche der Führungsteil-Plattform 226 ist jeweils eine Laufrollenanordnung 228 um eine vertikale Achse 230 schwenkbar an der Führungsteil-Plattform 226 gelagert.

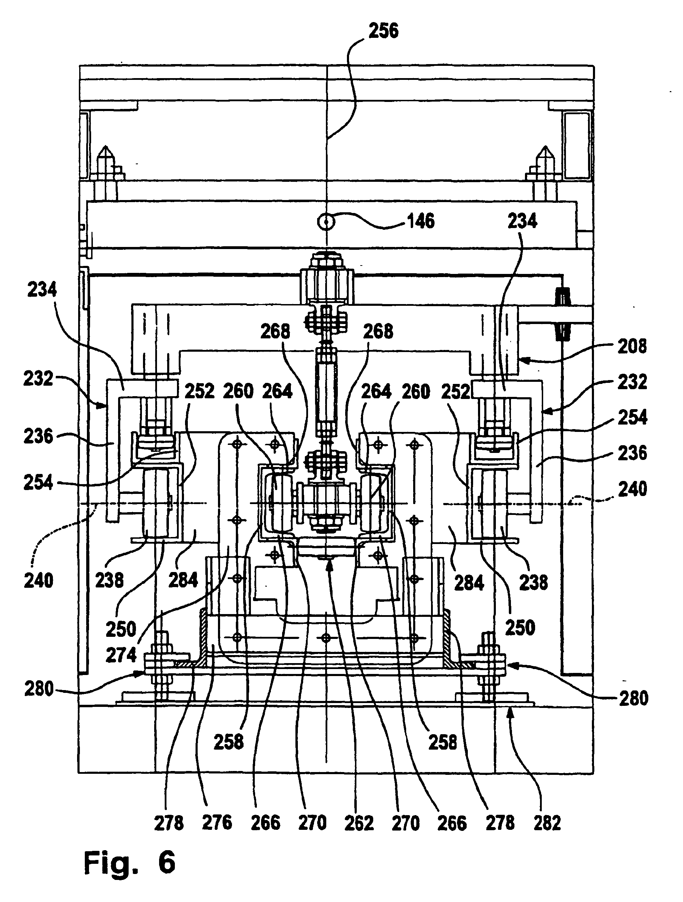

Jede Laufrollenanordnung 228 umfaßt einen Lagerwinkel 232 (siehe Fig. 6) mit einem kurzen oberen horizontalen Schenkel 234 und einem längeren vertikalen unteren Schenkel 236. Am unteren Ende jedes vertikalen Schenkels 236 ist jeweils eine Laufrolle 238 um eine horizontale Drehachse 240 drehbar gelagert.

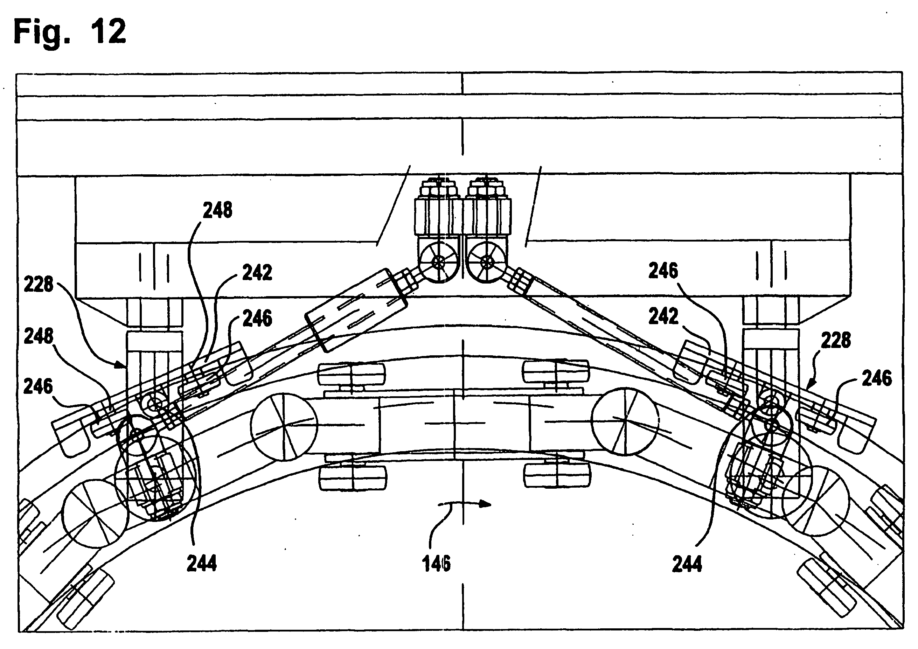

Ferner ist an jedem Lagerwinkel 232 eine (in Fig. 12 dargestellte) Wippe 242 um eine horizontale Drehachse 244 schwenkbar gehalten.

Die horizontale Schwenkachse 244 der Wippe 242 ist parallel zu der horizontalen Drehachse 240 der Laufrolle 238 und in der Längsrichtung des vertikalen Schenkels 236 des Lagerwinkels 232 direkt über der horizontalen Drehachse 240 angeordnet.

Wie am besten aus Fig. 12 zu ersehen ist, ist (in der Förderrichtung 146 gesehen) vor und hinter der horizontalen Schwenkachse 244 jeder Wippe 242 jeweils eine Führungsrolle 246 um eine zur Längsrichtung der Wippe 242 senkrechte Drehachse 248 drehbar gelagert.

Wie am besten aus der vergrößerten Darstellung der Fig. 6 zu ersehen ist, rollen die Laufrollen 238 des Laufwagens 208 auf den unteren Schenkeln 250 zweier Laufrollen-Führungsprofile 252 ab, welche U-förmige Querschnitte aufweisen, deren offene Seiten einander abgewandt sind und deren Schenkel horizontal ausgerichtet sind.

Die Längsrichtung der Laufrollen-Führungsprofile 252 legt die Förderrichtung 146 und damit den Verlauf der Förderbahn 144 fest.

Die Führungsrollen 246 der Laufrollenanordnungen 228 werden in zwei Führungsrollen-Führungsprofilen 254 geführt, welche jeweils einen nach oben geöffneten U-förmigen Querschnitt aufweisen und sich parallel zu den Laufrollen-Führungsprofilen 252 erstrecken.

Die Führungsrollen-Führungsprofile 254 und die Laufrollen-Führungsprofile 252 sind jeweils paarweise symmetrisch zu einer gemeinsamen Längsmittelebene 256 angeordnet.

Mittig zwischen den Laufrollen-Führungsprofilen 252 sind zwei parallel zu denselben ausgerichtete Ketten-Führungsprofile 258 angeordnet, welche hutförmige Querschnitte aufweisen, deren offene Seiten einander zugewandt sind.

Im mittleren Bereich jeden Ketten-Führungsprofils 258 sind Kettenlaufrollen 260 einer im folgenden noch näher zu beschreibenden Kreuzgelenkkette 262 an oberen und unteren horizontalen Schenkeln 264 bzw. 266 geführt.

An den oberen und unteren vertikalen Schenkeln 268 bzw. 270 jeden Ketten-Führungsprofils 258 sind Kettenführungsrollen 272 der Kreuzgelenkkette 262 geführt.

Die einander gegenüberstehenden Ketten-Führungsprofile 258 sind über Joche 274, weiche längs der Förderrichtung 146 voneinander beabstandet sind, miteinander und mit Quertraversen 276 verbunden, welche sich zwischen jeweils zwei Längsträgern 278 erstrecken.

Die Längsträger 278 weisen einen gewinkelten Querschnitt auf, erstrecken sich längs der Förderrichtung 146 und sind mittels in der Längsrichtung der Längsträger 278 voneinander beabstandeten Klemmeinrichtungen 280 an einer nur schematisch dargestellten, als ganzes mit 282 bezeichneten Haltekonstruktion der Fördervorrichtung 106 gehalten.

Auch die Laufrollen-Führungsprofile 252 und die Führungsrollen-Führungsprofile 254 sind über Halteplatten 284 mit den Jochen 274 und somit mit den Längsträgern 278 und der Haltekonstruktion 282 verbunden.

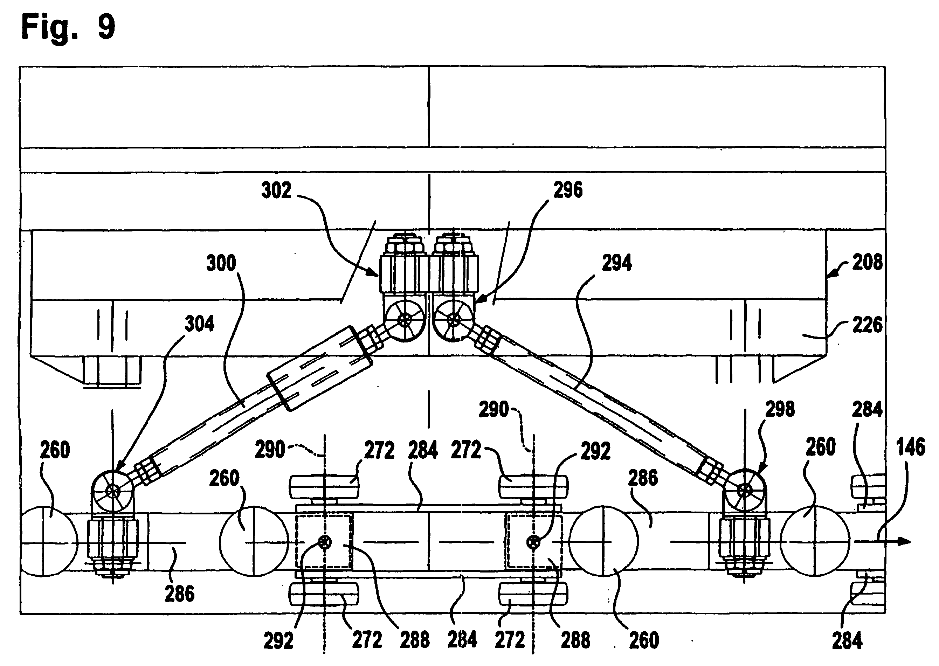

Der Aufbau der Kreuzgelenkkette 262 ist am besten aus Fig. 9 zu ersehen.

Die Kreuzgelenkkette 262 setzt sich aus Paaren von Horizontallaschen 284 und Paaren von Vertikallaschen 286 zusammen, welche in der Längsrichtung der Kreuzgelenkkette 262 aufeinander folgen.

Jedes Paar von Horizontallaschen 284 ist an seinen Enden an den horizontalen Seitenflächen eines in Fig. 9 in gebrochenen Linien dargestellten Gelenkblocks 288 um eine vertikale Schwenkachse 290 schwenkbar gehalten.

Auch jedes Paar von Vertikallaschen 286 ist an seinen Enden an vertikalen Seitenflächen jeweils eines Gelenkblocks 288 um jeweils eine horizontale Schwenkachse 292 schwenkbar gehalten.

Auf diese Weise können aufeinanderfolgende Laschenpaare der Kreuzgelenkkette 262 sowohl um vertikale Schwenkachsen 290 als auch um horizontale Schwenkachsen 292 relativ zueinander verschwenkt werden, so daß die Kreuzgelenkkette 262 sowohl horizontale als auch vertikale Bögen durchlaufen kann.

Jeweils zwei Kettenführungsrollen 272 sind an jeder Horizontallasche 284 um eine vertikale Drehachse 290 drehbar gehalten.

Jeweils zwei Kettenlaufrollen 260 sind an jeder Vertikallasche 286 der Kreuzgelenkkette 262 um horizontale Drehachsen drehbar gehalten.

Die Kreuzgelenkkette 262 der Fördervorrichtung 106 wird mittels einer zwischen der ersten Umsetzvorrichtung 118 und der Beladungsstation 140 angeordneten Antriebseinrichtung, welche beispielsweise ein in die Kreuzgelenkkette 262 eingreifendes Antriebsrad oder eine in die Kreuzgelenkkette 262 eingreifende Caterpillarkette umfaßt, zu einer Umlaufbewegung längs der Förderbahn 144 angetrieben.

Jeder Laufwagen 208 mit der darauf angeordneten Fahrzeugkarosserie 102 wird mittels einer Schleppstange 294, die einerseits an einem an der Führungsteil-Plattform 226 des Laufwagens 208 festgelegten Lagerbock 296 und andererseits an einem an zwei Vertikallaschen 286 der Kreuzgelenkkette 262 festgelegten Lagerbock 298 angelenkt ist, von der Kreuzgelenkkette 262 gezogen und auf diese Weise längs der Förderbahn 144 bewegt.

Die Bewegung längs der Förderbahn 144 kann dabei kontinuierlich oder aber taktweise erfolgen.

Zusätzlich zu der Schleppstange 294 ist jeder Laufwagen 208 mittels einer Ausgleichstange 300, die einerseits an einem Lagerbock 302, welcher an der Führungsteil-Plattform 226 des Laufwagens 208 festgelegt ist, und andererseits an einem Lagerbock 304, welcher an zwei Vertikallaschen 286 der Kreuzgelenkkette 262 festgelegt ist, angelenkt ist, an der Kreuzgelenkkette 262 gesichert.

Dabei ist die Ausgleichsstange 300 als längenveränderliche Teleskopstange ausgebildet, die gegen die Rückstellkraft einer Feder ausziehbar ist, um eine beim Durchlaufen gekrümmter Abschnitte der Förderbahn 144 auftretende Veränderung des Abstands zwischen der Führungsteil-Plattform 226 und der Kreuzgelenkkette 262 auszugleichen.

Um den Unterschied zwischen dem kleineren Kurveninnenradius und dem grö-ßeren Kurvenaußenradius beim Durchfahren von Linkskurven oder Rechtskurven ausgleichen zu können, sind die Laufrollenanordnungen 282 auf einer Seite des Laufwagens 208, beispielsweise auf dessen (in der Förderrichtung 146 gesehen) linken Seite, welche im folgenden als die "Losseite" des Laufwagens 208 bezeichnet werden wird, so ausgebildet, daß die vertikale Schwenkachse 230, um welche die betreffende Laufrollenanordnung 282 relativ zu der Führungsteil-Plattform 226 schwenkbar ist, die horizontale Drehachse 240 der Laufrolle 238 und die horizontale Schwenkachse 244 der Wippe 242 nicht schneidet, sondern um eine Strecke d versetzt zu der vertikalen Ebene, in welcher die vorstehend genannten horizontalen Achsen angeordnet sind, verläuft. Durch diesen Versatz wird erreicht, daß der Abstand der Laufrollen 238 und der Führungsrollen 246 der Laufrollenanordnungen 228 von der Längsmittelebene 256 der Laufrollen-Führungsprofile 252 auf der Losseite des Laufwagens 208 variabel ist und sich beim Durchlaufen von Links- oder Rechtskurven entsprechend anpassen kann.

Bei den Laufrollenanordnungen 228, die auf der der Losseite gegenüberliegenden "Festseite" des Laufwagens 208 angeordnet sind, schneidet hingegen die vertikale Schwenkachse 230 der betreffenden Laufrollenanordnung 228 sowohl die horizontale Schwenkachse 244 der Wippe 242 als auch die horizontale Drehachse 240 der zugeordneten Laufrolle 238.

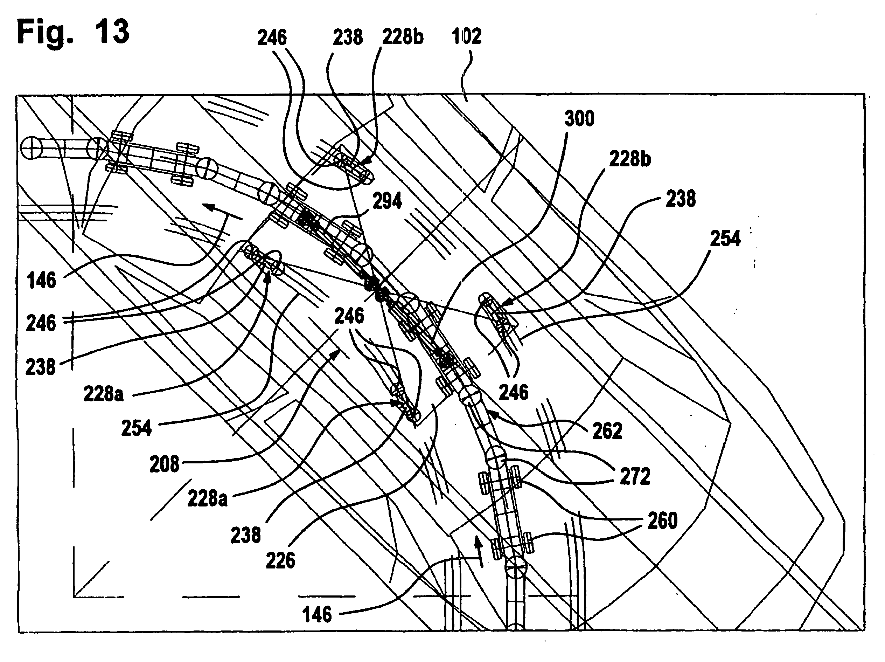

Die Ausrichtung der Laufrollenanordnungen 228a auf der Losseite des Laufwagens 208 und der Laufrollenanordnungen 228b auf der Festseite des Laufwagens 208 ist in Fig. 13 für das Durchlaufen einer Linkskurve schematisch dargestellt.

Die zweite Fördervorrichtung 110 und die dritte Fördervorrichtung 116 sind in entsprechender Weise wie die vorstehend im einzelnen beschriebene erste Fördervorrichtung 106 ausgebildet, so daß insoweit auf die Beschreibung der ersten Fördervorrichtung 106 verwiesen werden kann.

Die vorstehend beschriebene Oberflächenbehandlungsvorrichtung 100 funktioniert wie folgt:

Die Fördervorrichtungen 106, 110 und 116 werden in Betrieb genommen, indem die jeweiligen Kreuzgelenkketten 262, welche endlos geschlossen sind, mittels der jeweiligen Antriebseinheit zu einer (kontinuierlichen oder getakteten) Umlaufbewegung längs der jeweiligen Förderbahn 144 angetrieben werden.

Die der Oberflächenbehandlung 100 zu unterziehenden Fahrzeugkarosserien 102, welche auf Skidrahmen 142 angeordnet sind, werden in der Beladungsstation 140 der ersten Fördervorrichtung 106 auf einen Laufwagen 208 dieser Fördervorrichtung aufgesetzt und mittels der Spannvorrichtungen 204 lösbar an der Aufnahmeplattform 206 des Laufwagens 208 festgelegt.

Anschließend werden die Fahrzeugkarosserien 102 längs der vorstehend beschriebenen Förderbahn 144 durch die vier Behandlungsbäder 122a bis 122d der ersten Gruppe 104 von Behandlungsbädern gefördert.

Anschließend werden die Fahrzeugkarosserien 102 in der ersten Umsetzvorrichtung 118 von dem jeweiligen Laufwagen 208 der ersten Fördervorrichtung 106 gelöst, auf einen Laufwagen 208 der zweiten Fördervorrichtung 110 umgesetzt und an demselben mittels der Spannvorrichtungen 204 lösbar festgelegt.

Anschließend werden die Fahrzeugkarosserien 102 durch die beiden Behandlungsbäder 122e, 122f der zweiten Gruppe 108 von. Behandlungsbädern gefördert.

In der zweiten Umsetzvorrichtung 120 werden die Fahrzeugkarosserien 102 von dem Laufwagen 208 der zweiten Fördervorrichtung 110 gelöst, auf einen Laufwagen 208 der dritten Fördervorrichtung 116 umgesetzt und an demselben lösbar festgelegt.

Anschließend werden die Fahrzeugkarosserien 102 durch das Behandlungsbad 114 gefördert und schließlich in der Entnahmestation 200 von dem Laufwagen 208 der dritten Fördervorrichtung 116 gelöst und einer Weiterbehandlung, beispielsweise einer Trocknung, zugeführt.

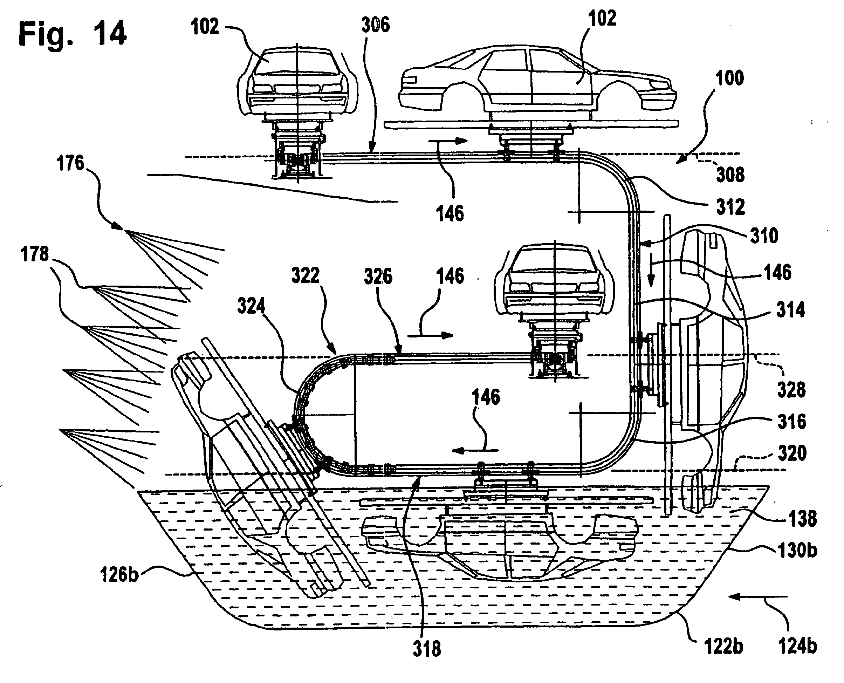

Eine in Fig. 14 dargestellte zweite Ausführungsform einer Oberflächenbehandlungsvorrichtung 100 unterscheidet sich von der vorstehend beschriebenen ersten Ausführungsform dadurch, daß nicht alle oberen Förderabschnitte der Fördervorrichtungen auf demselben oberen Förderniveau liegen, sondern statt dessen mindestens zwei in unterschiedlichen Höhen über den Behandlungsbädern angeordnete obere Förderniveaus existieren und mindestens zwei horizontale obere Förderabschnitte einer Fördervorrichtung vertikal übereinander angeordnet sind. Dieser Aufbau wird nachstehend unter Bezugnahme auf die

Fig. 14 am Beispiel des Abschnitts der ersten Fördervorrichtung 106, in welchem die Fahrzeugkarosserien 102 durch das zweite Behandlungsbad 122b gefördert werden, erläutert.

Wie aus Fig. 14 zu ersehen ist, werden die Fahrzeugkarosserien 102, von dem ersten Behandlungsbad 122a her kommend, durch eine Linkskurve in einen geradlinigen oberen Einlauf-Förderabschnitt 306 gefördert, welcher auf dem obersten Förderniveau 308 der Fördervorrichtung liegt und parallel zu der Längsachse 124b des Behandlungsbads 122b ausgerichtet ist.

An den Einlauf-Förderabschnitt 306 schließt sich ein Verbindungsabschnitt 310 an, welcher einen ersten vertikalen Bogen 312 mit einem Kurvenwinkel von 90°, einen sich daran anschließenden geradlinigen vertikalen Förderabschnitt 314 und einen sich daran anschließenden zweiten vertikalen Bogen 316 mit einem Kurvenwinkel von 90° umfaßt, wobei die beiden vertikalen Bögen 312 und 316 so relativ zueinander ausgerichtet sind, daß die Fahrzeugkarosserien 102 beim Durchlaufen des Verbindungsabschnitts 310 insgesamt um einen Winkel von 180° von der Standardstellung in die Kopfüberstellung gedreht werden.

An den zweiten vertikalen Bogen 316 des Verbindungsabschnitts 310 schließt sich ein horizontaler geradliniger Behandlungsabschnitt 318 der Fördervorrichtung an, welcher auf dem untersten Förderniveau 320 der Fördervorrichtung liegt, welcher vertikal unter dem Einlauf-Förderabschnitt 306 angeordnet ist und in welchem die Förderrichtung 146 antiparallel zu der Förderrichtung 146 in dem Einlauf-Förderabschnitt 306 gerichtet ist.

Von dem Behandlungsabschnitt 318 gelangen die Fahrzeugkarosserien 102 durch einen weiteren Verbindungsabschnitt 322, welcher einen vertikalen Bogen 324 mit einem Kurvenwinkel von 180° umfaßt, in einen horizontalen geradlinigen Auslauf-Förderabschnitt 326, welcher auf einem mittleren Förderniveau 328 zwischen dem Einlauf-Förderabschnitt 306 und dem Behandlungsabschnitt 318 angeordnet ist und in welchem die Förderrichtung 146 parallel zu der Förderrichtung im Einlauf-Förderabschnitt 306 und antiparallel zur Förderrichtung im Behandlungsabschnitt 318 gerichtet ist.

Von dem Auslauf-Förderabschnitt 326 gelangen die Fahrzeugkarosserien 102 über eine Rechtskurve mit einem Kurvenwinkel von 90° auf einen (nicht dargestellten) schrägen Förderabschnitt, welcher von dem mittleren Förderniveau 328 auf das oberste Förderniveau 308 führt, so daß die Fahrzeugkarosserien 102 von dem Niveau des Auslauf-Förderabschnitts 326 des zweiten Behandlungsbads 122b auf das Niveau des Einlauf-Förderabschnitts des darauffolgenden dritten Behandlungsbads 122c gebracht werden.

Dadurch, daß der Einlauf-Förderabschnitt 306 und der Auslauf-Förderabschnitt 326 nicht, wie bei der vorstehend beschriebenen ersten Ausführungsform, auf demselben Förderniveau hintereinander angeordnet sind, sondern statt dessen auf zwei verschiedenen Förderniveaus übereinander angeordnet sind, kann die Gesamtlänge des durch das Behandlungsbad 122b führenden Förderabschnitts der Fördervorrichtung 106 vermindert und infolgedessen die Länge des Behandlungsbades 122b verringert werden.

Im übrigen stimmt die zweite Ausführungsform einer Oberflächenbehandlungsvorrichtung 100 hinsichtlich Aufbau und Funktion mit der ersten Ausführungsform überein, auf deren vorstehende Beschreibung insoweit Bezug genommen wird.

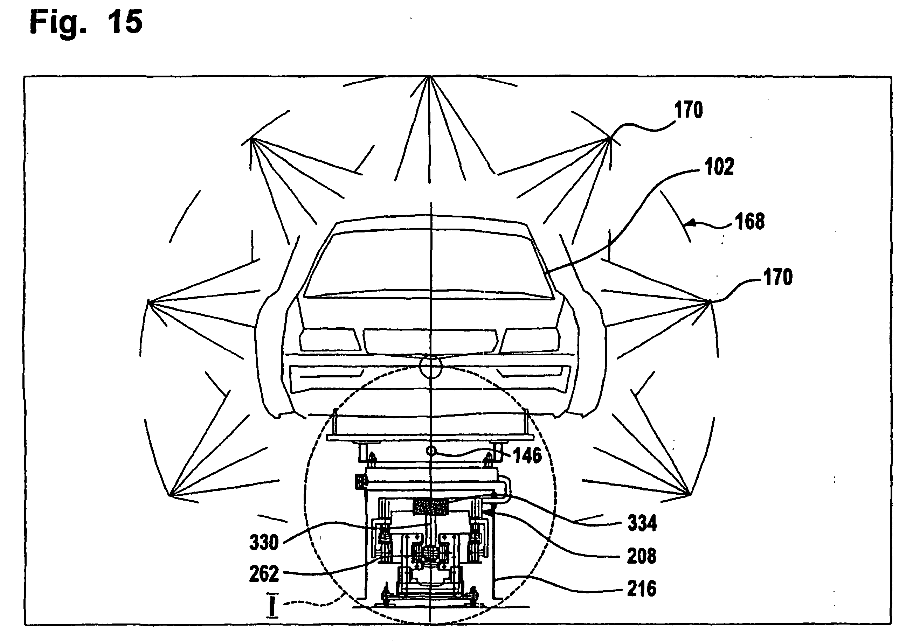

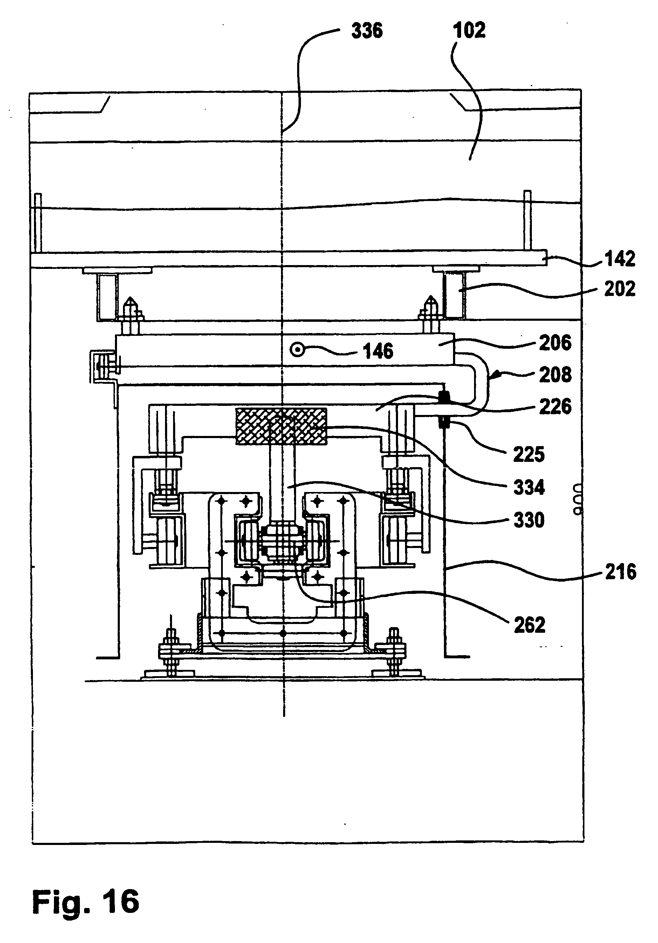

Eine in den Fig. 15 bis 19 dargestellte dritte Ausführungsform einer Oberflächenbehandlungsvorrichtung 100 unterscheidet sich von den vorstehend beschriebenen Ausführungsformen dadurch, daß die Kopplung der Laufwagen 208 an die Kreuzgelenkkette 262 nicht mittels einer am Laufwagen 208 und an der Kreuzgelenkkette 262 angelenkten Schleppstange, sondern statt dessen mittels eines in einer Mitnehmeraufnahme verschieblich geführten Mitnehmerzapfens erfolgt.

Wie aus den Fig. 15 bis 19 zu ersehen ist, ist für jeden Laufwagen 208 ein Mitnehmerzapfen 330 vorgesehen, welcher an seinem unteren Ende an einem Paar von Vertikallaschen 286 der Kreuzgelenkkette 262 festgelegt ist und dessen oberes Ende in eine im wesentlichen zylindrische Aufnahmedurchgangsöffnung 332 einer an der Führungsteil-Plattform 226 des Laufwagens 208 festgelegten Mitnehmeraufnahme 334 eingreift.

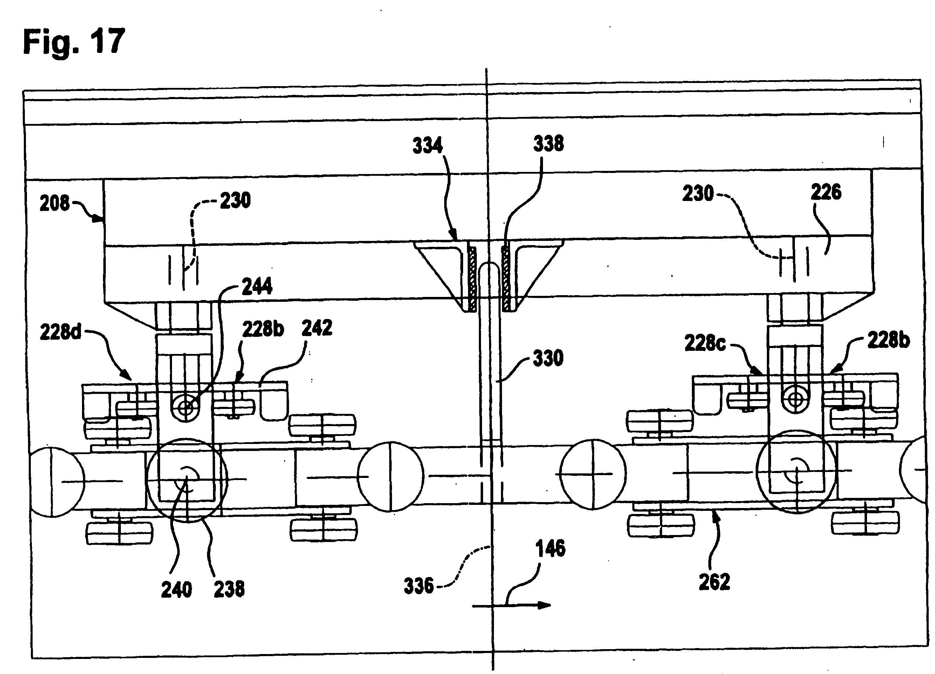

Wie aus den Fig. 17 bis 19 zu ersehen ist, ist die Mitnehmeraufnahme 334 im wesentlichen mittig zwischen den (in der Förderrichtung 146 gesehen) vorderen Laufrollenanordnungen 228c und den (in der Förderrichtung 146 gesehen) hinteren Laufrollenanordnungen 228d angeordnet.

Der Mitnehmerzapfen 330 ist längs seiner Längsrichtung 336 verschieblich in der Mitnehmeraufnahme 334 geführt, so daß eine Variation des Abstandes zwischen der Kreuzgelenkkette 262 und der Mitnehmeraufnahme 334 des Laufwagens 208 ausgeglichen werden kann.

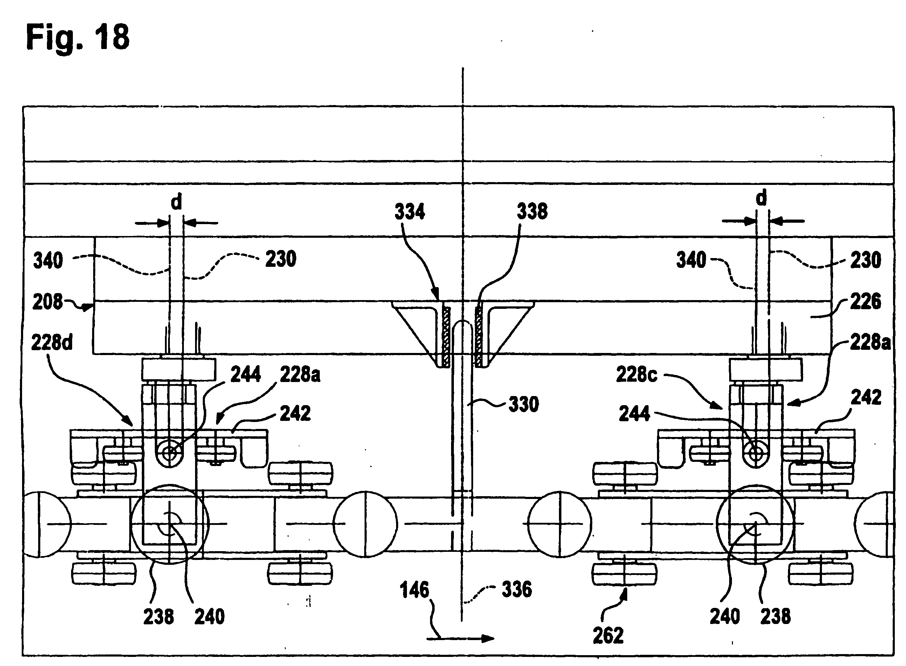

In geradlinigen Förderabschnitten (siehe Fig. 17 und 18) ist dieser Abstand groß, so daß das obere Ende des Mitnehmerzapfens 330 innerhalb der Mitnehmeraufnahme 334 angeordnet ist.

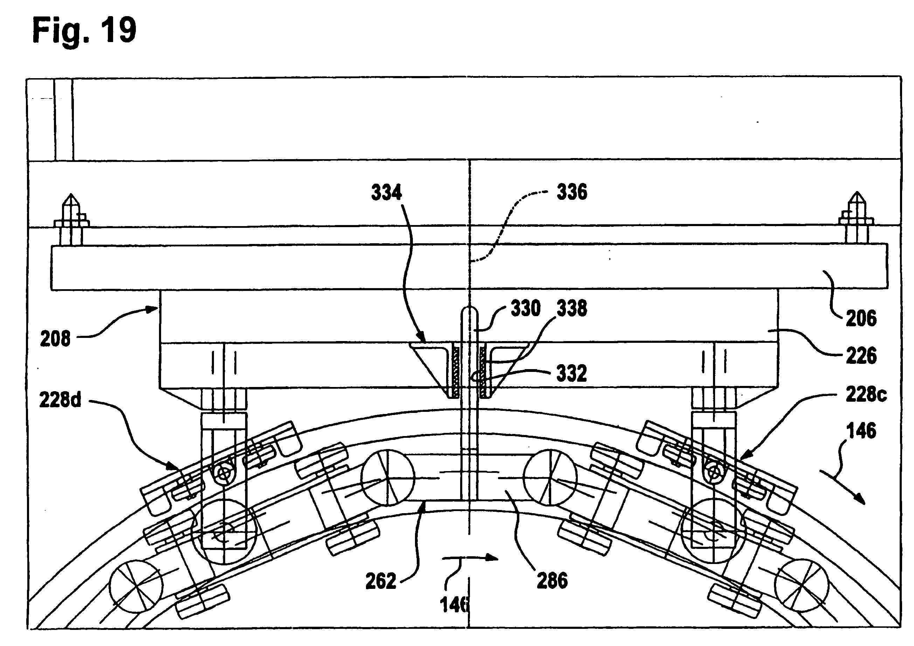

In gekrümmten Förderabschnitten (siehe Fig. 19) ist dieser Abstand jedoch kleiner, so daß der Mitnehmerzapfen 330 die Mitnehmeraufnahme 334 durchgreift.

Bei Bewegung der Kreuzgelenkkette 262 längs der Förderrichtung 146 drückt der Mitnehmerzapfen 330 gegen die (in der Förderrichtung 146 gesehen) vorne liegende Innenwandfläche der Mitnehmeraufnahme 334, so daß der Laufwagen 208 von dem Mitnehmerzapfen 330 mitgenommen und dadurch die Bewegung der Kreuzgelenkkette 262 auf den Laufwagen 208 übertragen wird.

Um bei einer Beschleunigung oder Verzögerung der Kreuzgelenkkette 262 auftretende Stöße zwischen dem Mitnehmerzapfen 330 und der Mitnehmeraufnahme 334 zu dämpfen, ist vorgesehen, daß die Mitnehmeraufnahme 334 mit einem Futter 338 aus einem elastischen Material ausgekleidet ist.

In Fig. 17 ist die Festseite des Laufwagens 208 dargestellt. Aus dieser Darstellung ist zu ersehen, daß bei den auf dieser Seite angeordneten Laufrollenanordnungen 228b jeweils die vertikale Schwenkachse 230 der Laufrollenanordnung 228b sowohl die horizontale Drehachse 240 der zugeordneten Laufrollen 238 als auch die horizontale Schwenkachse 244 der zugeordneten Wippe 242 rechtwinklig schneidet, so daß kein Versatz auftritt.

In Fig. 18 ist die Losseite des Laufwagens 208 dargestellt. Aus dieser Darstellung ist zu ersehen, daß bei den auf der Losseite angeordneten Laufrollenanordnungen 228a die vertikale Schwenkachse 230 der jeweiligen Laufrollenanordnung 228a weder die horizontale Drehachse 240 der zugeordneten Laufrolle 238 noch die horizontale Schwenkachse 244 der zugeordneten Wippe 242 schneidet, sondern vielmehr um den Abstand d gegenüber der Senkrechten 340 durch die horizontale Drehachse 240 der Laufrolle 238 und die horizontale Schwenkachse 244 der Wippe 242 versetzt ist, wie dies bereits vorstehend im Zusammenhang mit der ersten Ausführungsform beschrieben worden ist.

Alternativ oder ergänzend zu einer Festlegung des Mitnehmerzapfens an der Kreuzgelenkkette 252 und einer Festlegung der Mitnehmeraufnahme 334 an dem Laufwagen 208 kann auch vorgesehen sein, daß der Mitnehmerzapfen 330 an dem Laufwagen 208 und die damit zusammenwirkende Mitnehmeraufnahme 334 an der Kreuzgelenkkette 262 angeordnet ist.

Im übrigen stimmt die dritte Ausführungsform einer Oberflächenbehandlungsvorrichtung 100 hinsichtlich Aufbau und Funktion mit der ersten oder der zweiten Ausführungsform überein, auf deren vorstehende Beschreibung insoweit Bezug genommen wird.

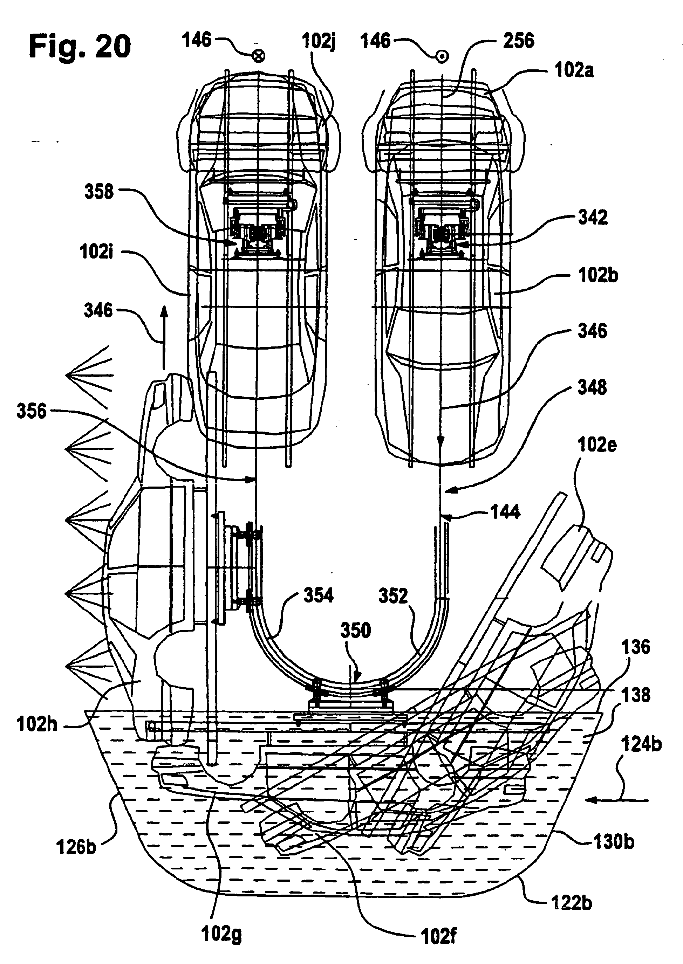

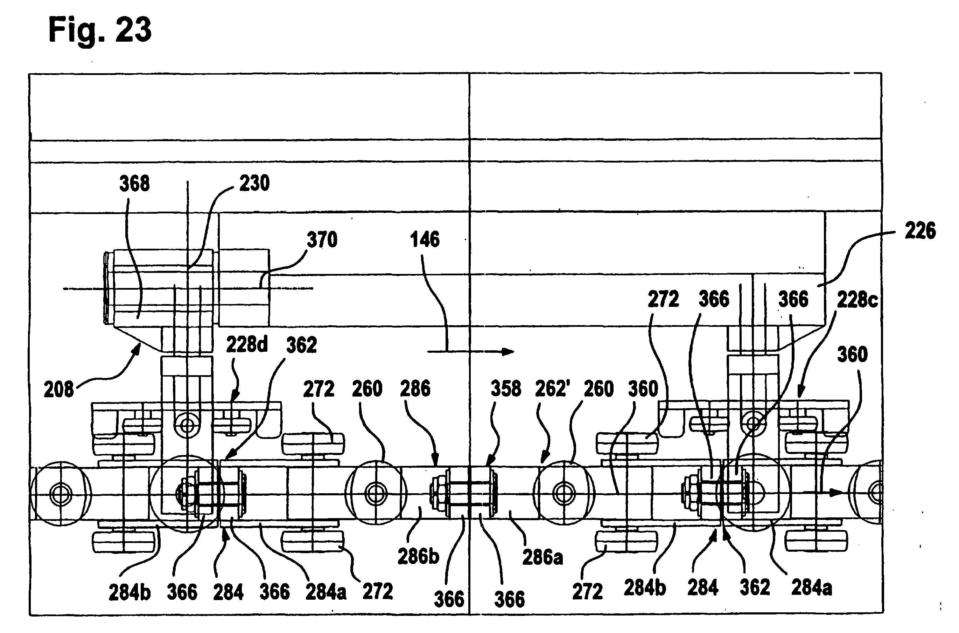

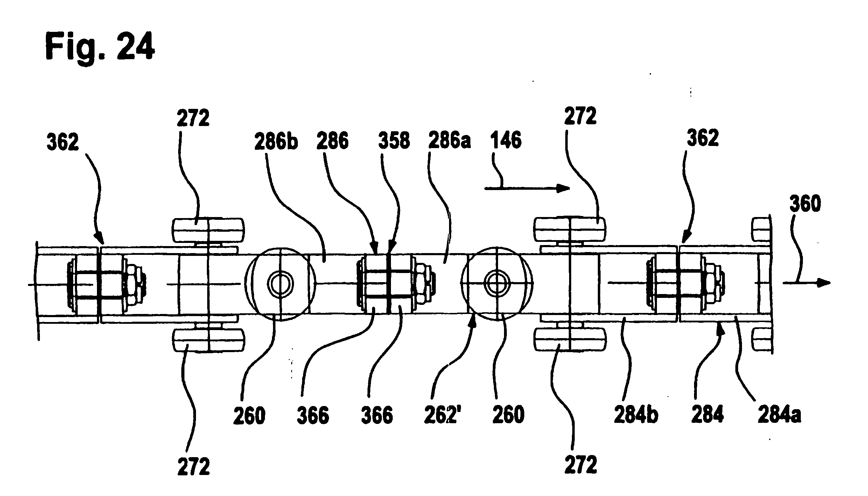

Eine in den Fig. 20 bis 24 dargestellte vierte Ausführungsform einer Oberflächenbehandlungsvorrichtung 100 unterscheidet sich von den vorstehend beschriebenen Ausführungsformen dadurch, daß die Förderbahn 144 der Fördervorrichtung nicht nur geradlinige oder in einer feststehenden Ebene (insbesondere in einer horizontalen oder vertikalen Ebene) gekrümmte Förderabschnitte, sondern zusätzlich auch wendel- oder schraubenförmig gekrümmte Förderabschnitte aufweist.

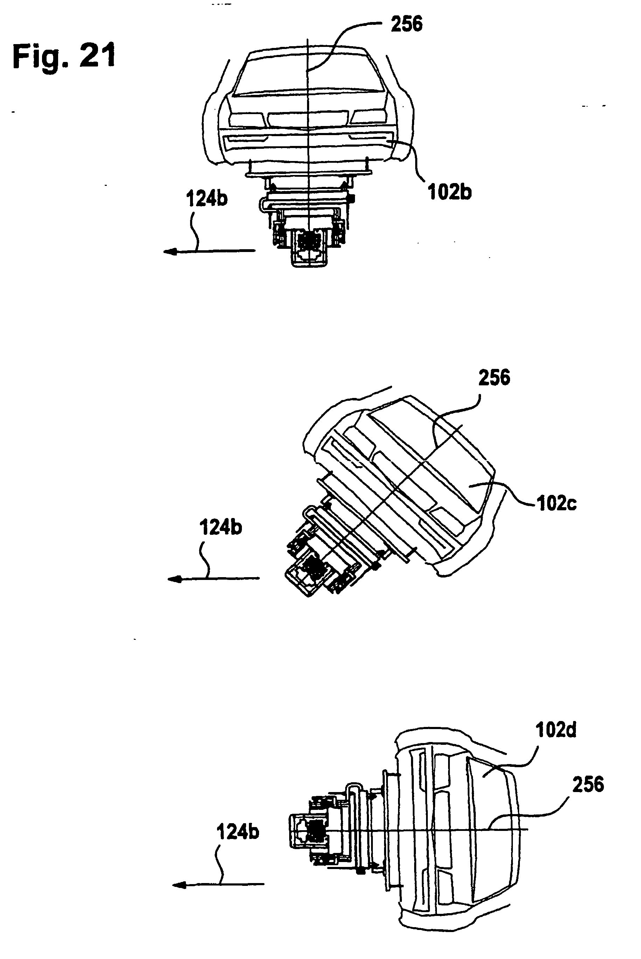

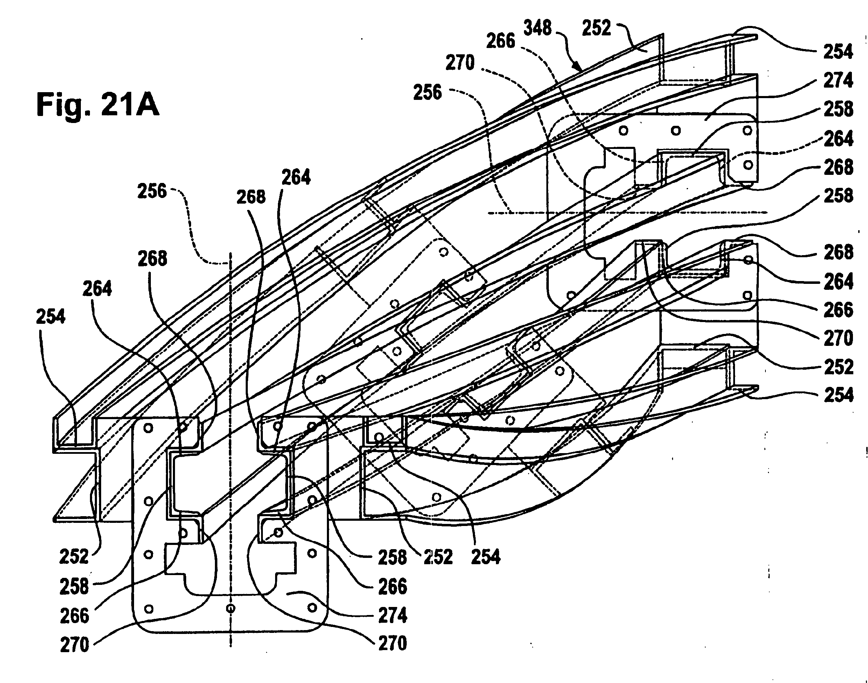

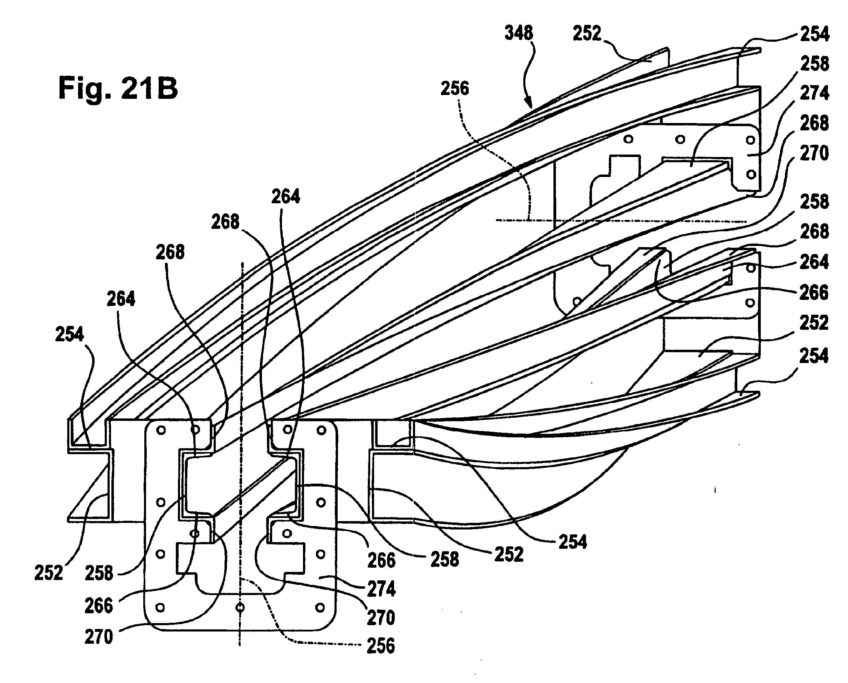

In den Fig. 20, 21, 21A und 21B ist ein solcher wendelförmig gekrümmter Förderabschnitt dargestellt.

Die Förderbahn 144 umfaßt bei dieser Ausführungsform einen horizontalen geradlinigen oberen Förderabschnitt 342, in welchem die Förderrichtung 146 senkrecht zur Längsachse 124b des Behandlungsbads 122b gerichtet ist.

An diesen oberen Förderabschnitt 342 schließt sich ein vertikaler Bogen mit einem Kurvenwinkel von 90° an.

Nach Durchlaufen dieses Bogens ist eine Fahrzeugkarosserie aus der mit 102a bezeichneten horizontalen Standardstellung in die mit 102b bezeichnete vertikale Stellung, in welcher die Fahrzeugkarosserie-Längsachse 346 vertikal nach unten weist, gedreht worden.

An diesen Bogen schließt sich ein wendelförmiger Verbindungsabschnitt 348 an, in dessen Verlauf die Längsmittelebene 256 der Laufrollen-Führungsprofile 252 und damit die Längsmittelebene der Fahrzeugkarosserie 102 um 90° aus der in Fig. 21 mit 102b bezeichneten Stellung über die mit 102c bezeichnete Zwischenstellung in die mit 102d bezeichnete Endstellung gedreht wird, in welcher die Längsmittelebene 256 parallel zur Längsachse 124b des Behandlungsbads 122b ausgerichtet ist.

Um diese Drehung der Längsmittelebene 256 zu bewirken, sind die Laufrollen-Führungsprofile 252 und die Führungsrollen-Führungsprofile 254 in diesem Verbindungsabschnitt 348 wendelförmig um die Längsachse der Kreuzgelenkkette 262 gekrümmt.

Ebenso sind in diesem Verbindungsabschnitt 348 die Ketten-Führungsprofile 258 um die Längsachse der Kreuzgelenkkette 262 gekrümmt.

Die wendelförmige Krümmung der Laufrollen-Führungsprofile 252, der Führungsrollen-Führungsprofile 254 und der Ketten-Führungsprofile 258 ist aus den Fig. 21A und 21B zu ersehen, welche den Verlauf dieser Profile in dem Verbindungsabschnitt 348 zeigen. Die Längsmittelebene 256 wird in diesem Verbindungsabschnitt um einen Winkel von 90° gedreht.

An den wendelförmigen Verbindungsabschnitt 348 schließt sich nach unten ein vertikaler Eintauchbogen 352 mit einem Kurvenwinkel von 90° an, auf welchen ein vertikaler Austauchbogen 354 mit einem Kurvenwinkel von ebenfalls 90° folgt (siehe Fig. 20).

Beim Durchlaufen des vertikalen Eintauchbogens 352 taucht die Fahrzeugkarosserie mit der Vorderseite voran in die Behandlungsflüssigkeit 138 des Behandlungsbades 122b ein (siehe Stellungen 102e und 102f in Fig. 20), bis die Fahrzeugkarosserie 102 in der mit 102g bezeichneten Kopfüberstellung vollständig in die Behandlungsflüssigkeit 138 eingetaucht ist.

Beim Durchlaufen des sich daran anschließenden vertikalen Austauchbogens 354 taucht die Fahrzeugkarosserie mit der Vorderseite voran aus der Behandlungsflüssigkeit 138 des Behandlungsbades 122b aus, bis die in Fig. 20 mit 102h bezeichnete Vertikalstellung der Fahrzeugkarosserie erreicht ist, in welcher die Längsachse 346 der Fahrzeugkarosserie 102 senkrecht nach oben weist.

Beim Durchlaufen des Eintauchbogens 352 und des Austauchbogens 354 bleibt die Längsmittelebene 256 der Laufrollen-Führungsprofile und damit die Längsmittelebene der Fahrzeugkarosserien 102 stets vertikal und parallel zur Längsachse 124b des Behandlungsbads 122b ausgerichtet.

Eine besonders kurze Behandlungsbadlänge wird erreicht, wenn sich der Austauchbogen 354 unmittelbar an den Eintauchbogen 352 des Behandlungsabschnitts 350 anschließt.

In diesem Fall umfaßt der Behandlungsabschnitt 350, bei dessen Durchlaufen die Fahrzeugkarosserien 102 vollständig in die Behandlungsflüssigkeit 138 eingetaucht sind, lediglich den Endbereich des Eintauchbogens 352 und den Anfangsbereich des Austauchbogens 354.

Wird eine längere Verweildauer der Fahrzeugkarosserie in eingetauchtem Zustand in dem Behandlungsbad 122b gewünscht, so kann zwischen dem Eintauchbogen 352 und dem Austauchbogen 354 ein zusätzlicher geradliniger Förderabschnitt vorgesehen, sein.

An das obere Ende des vertikalen Austauchbogens 354 schließt sich nach oben ein wendelförmiger Verbindungsabschnitt 356 an, in dessen Verlauf die Längsmittelebene 256 der Laufrollen-Führungsprofile 252 und damit die Längsmittelebene der Fahrzeugkarosserien 102 aus der in Fig. 20 mit 102h bezeichneten Stellung, in welcher die Längsmittelebene 256 parallel zu der Längsachse 124b des Behandlungsbads 122b ausgerichtet ist, kontinuierlich in die mit 102i bezeichnete Stellung überführt wird, in welcher die Längsmittelebene 256 vertikal und senkrecht zu der Längsachse 124b ausgerichtet ist.

Der Aufbau des Verbindungsabschnitts 356 entspricht dem des Verbindungsabschnitts 348, wobei die wendelförmig gekrümmten Führungsprofile jedoch den entgegengesetzten Drehsinn aufweisen.

An den wendelförmig gekrümmten Verbindungsabschnitt 356 schließt sich nach oben ein vertikaler Bogen mit einem Kurvenwinkel von 90° an, welcher die Fahrzeugkarosserien aus der mit 102i bezeichneten Vertikalstellung in die mit 102j bezeichnete horizontale Standardstellung überführt.

An diesen vertikalen Bogen schließt sich ein horizontaler, geradliniger oberer Förderabschnitt 358 an, welcher parallel zu dem oberen Förderabschnitt 342 ausgerichtet ist und in welchem die Förderrichtung 146 antiparallel zu der Förderrichtung 146 in dem oberen Förderabschnitt 342 ausgerichtet ist.

Damit die Kreuzgelenkkette 262' bei dieser vierten Ausführungsform die wendelförmig gekrümmten Verbindungsabschnitte 348 und 356 durchlaufen kann, muß die Kreuzgelenkkette 262' um ihre Längsrichtung verdrillbar sein.

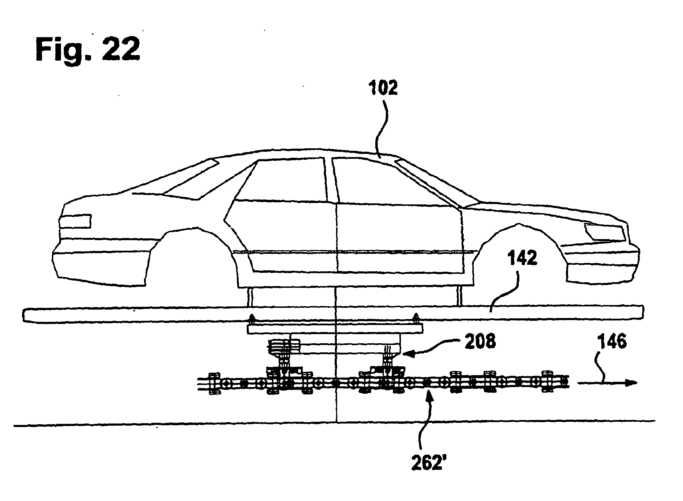

Diese Verdrillbarkeit wird, wie aus den Fig. 22 bis 24 zu ersehen ist, dadurch erreicht, daß jede der Vertikallaschen 286 in zwei längs der Längsrichtung 360 der Kreuzgelenkkette 262' aufeinanderfolgende Teile 286a und 286b unterteilt ist, wobei die beiden Teile der Vertikallasche 286 durch ein Gelenk 358 um die Längsrichtung 360 der Kreuzgelenkkette 262' schwenkbar miteinander verbunden sind.

Ferner sind auch alle Horizontallaschen 284 in jeweils einen (in der Längsrichtung 360 der Kreuzgelenkkette 262' gesehen) vorderen Laschenteil 284a und einen hinteren Laschenteil 284b unterteilt, wobei beide Laschenteile mittels eines Gelenks 362 um die Längsrichtung 360 der Kreuzgelenkkette 262' schwenkbar miteinander verbunden sind.

Jedes der Gelenke 358, 362 umfaßt jeweils einen im wesentlichen zylindrischen Verbindungsbolzen 364, welcher sowohl in dem vorderen Laschenteil 284a, 286a als auch in dem jeweils hinteren Laschenteil 284b, 286b in jeweils einem Lager 366, welches drehfest mit dem betreffenden Laschenteil verbunden ist, drehbar gelagert ist.

Damit die Laufrollen 238 und die Führungsrollen 246 des Laufwagens 208 die wendelförmig gekrümmten Abschnitte der Laufrollen-Führungsprofile 252 bzw. der Führungsrollen-Führungsprofile 254 durchlaufen können, ist es ferner erforderlich, daß die (in der Förderrichtung 146 gesehen) hinteren Laufrollenanordnungen 228d relativ zu den vorderen Laufrollenanordnungen 228c des Laufwagens 208 um eine parallel zur Förderrichtung 146 ausgerichtete Schwenkachse schwenkbar sind.

Dies wird dadurch erreicht, daß bei dem Laufwagen 208 der vierten Ausführungsform die hinteren Laufrollenanordnungen 228d nicht direkt an der Führungsteil-Plattform 226 gehalten sind, sondern diese Laufrollenanordnungen 228d vielmehr um ihre vertikale Schwenkachse 230 schwenkbar an jeweils einer Lagerbuchse 368 gehalten sind, welche ihrerseits um eine zur Längsachse der Führungsteil-Plattform 226 parallele Schwenkachse 370 schwenkbar an dem hinteren Ende der Führungsteil-Plattform 226 des Laufwagens 208 gehalten ist.

Im übrigen stimmt die vierte Ausführungsform einer Oberflächenbehandlungsvorrichtung hinsichtlich Aufbau und Funktion mit der ersten bis dritten Ausführungsform überein, auf deren vorstehende Beschreibung insoweit Bezug genommen wird.

Insbesondere kann bei der vierten Ausführungsform die Kopplung der Laufwagen 208 an die Kreuzgelenkkette 262' mittels eines in einer Mitnehmeraufnahme verschieblich geführten Mitnehmerzapfens (wie bei der dritten Ausführungsform) oder mittels einer am Laufwagen 208 und an der Kreuzgelenkkette 262' angelenkten Schleppstange (wie bei der ersten Ausführungsform) erfolgen.

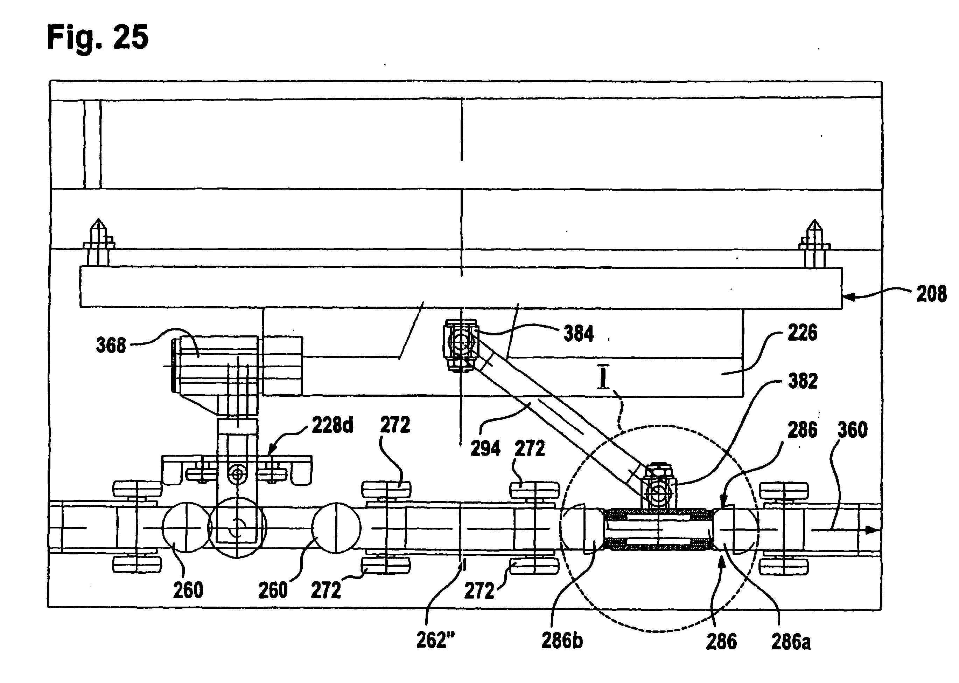

Eine in den Fig. 25 bis 28 dargestellte fünfte Ausführungsform einer Oberflächenbehandlungsvorrichtung 100 unterscheidet sich von der vorstehend beschriebenen vierten Ausführungsform dadurch, daß in den wendelförmigen Förderabschnitten der Fördervorrichtungen lediglich die Laufwagen 208 mit den darauf angeordneten Fahrzeugkarosserien 102 eine wendelförmige Bewegung ausführen, während die Kreuzgelenkkette 262" bei dieser fünften Ausführungsform nicht um ihre Längsrichtung 360 verdrillt wird.

Dementsprechend sind bei der fünften Ausführungsform nur die Laufrollen-Führungsprofile 252 und die Führungsrollen-Führungsprofile 254 wendelförmig ausgestaltet, während die Ketten-Führungsprofile 258 keine Verdrillung aufweisen.

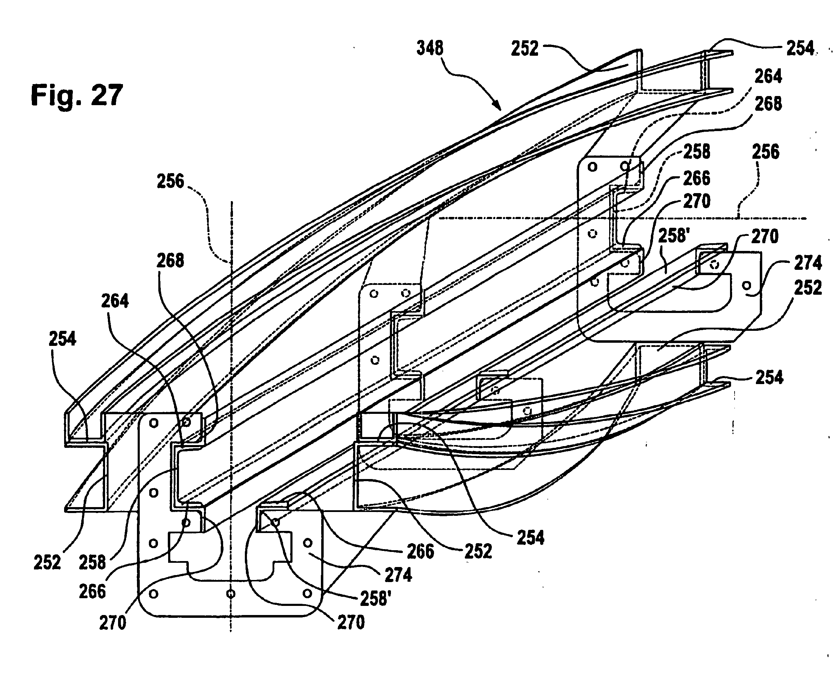

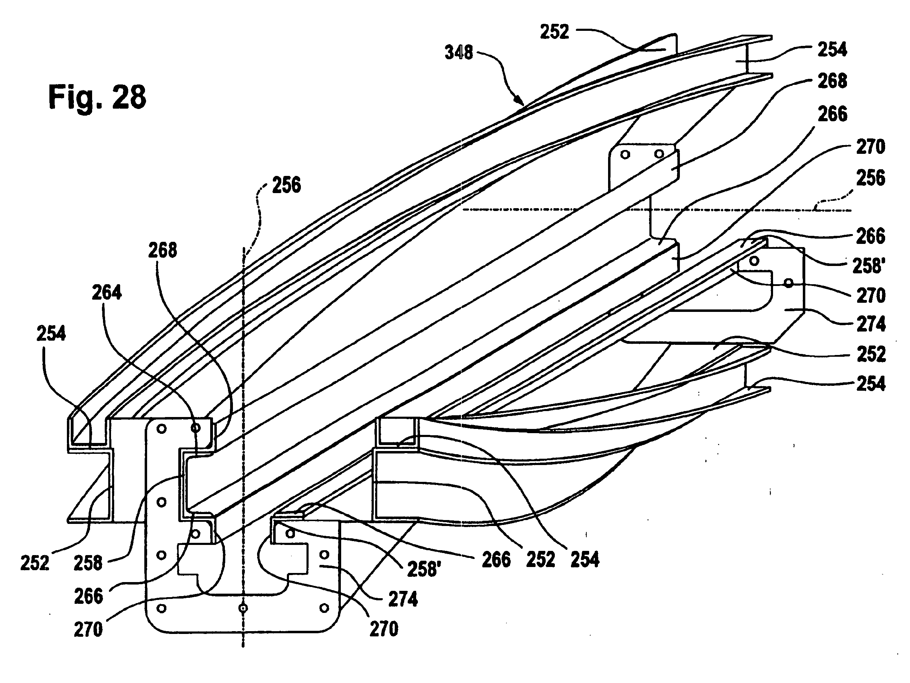

Die wendelförmige Krümmung der Laufrollen-Führungsprofile 252 und der Führungsrollen-Führungsprofile 254 und der geradlinige Verlauf der Ketten-Führungsprofile 258 in einem solchen wendelförmigen Förderabschnitt ist in den Fig. 27 und 28 dargestellt. Die Längsmittelebene 256 wird in diesem Förderabschnitt um 90° gedreht.

Um dennoch die wendelförmigen Förderabschnitte der Fördervorrichtungen durchlaufen zu können, müssen die Laufwagen 208 der fünften Ausführungsform daher um die Längsrichtung 360 der Kreuzgelenkkette 262" schwenkbar sein.

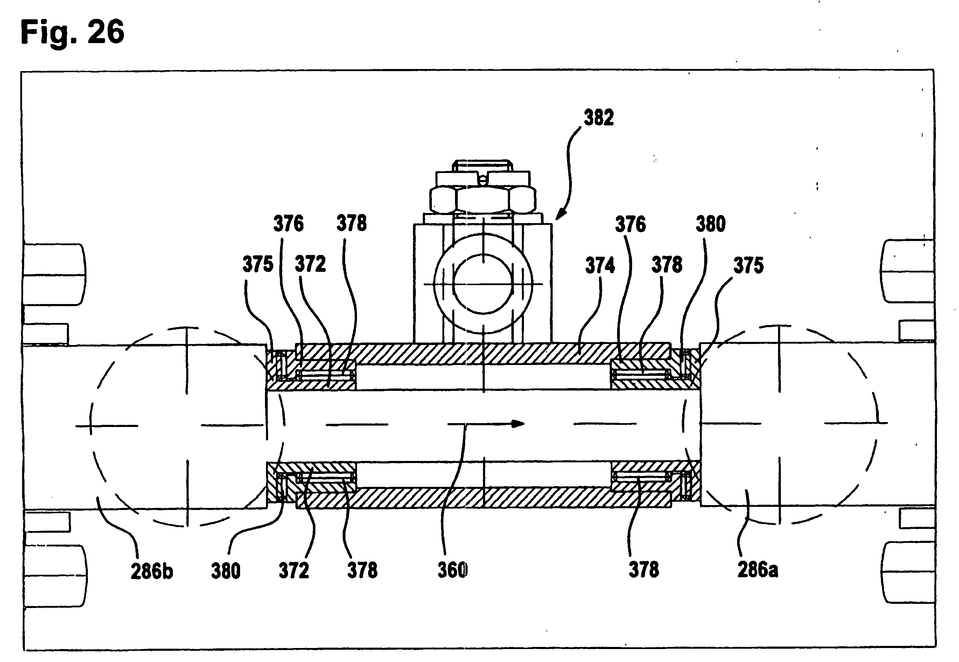

Wie aus den Fig. 25 und 26 zu ersehen ist, wird diese Schwenkbarkeit des Laufwagens 208 relativ zu der Kreuzgelenkkette 262" dadurch erreicht, daß die Vertikallaschen 286 eines Vertikallaschenpaares in einen vorderen Laschenteil 286a und einen hinteren Laschenteil 286b unterteilt sind, wobei die vorderen Laschenteile 286a und die hinteren Laschenteile 286b mittels eines zylindrischen Verbindungsrohrs 372 miteinander verbunden sind.

Das.Verbindungsrohr 372 ist an beiden Enden mit jeweils einem radial abstehenden Bund 375 versehen.

Das Verbindungsrohr 372 ist von einer hohlzylindrischen Hülse 374 umgeben, in deren beide Enden jeweils ein ringförmiges Kragenteil 376 eingesetzt ist, das sich über jeweils ein Radiallager 378 an der Mantelfläche des Verbindungsrohrs 372 und über jeweils ein Axiallager 380 an jeweils an einem der Bunde 375 der Hülse 374 abstützt.

Auf diese Weise ist die Hülse 374 um die Längsachse der Hülse 374, welche mit der Längsrichtung 360 der Kreuzgelenkkette 262" übereinstimmt, schwenkbar an dem Verbindungsrohr 372 gehalten.

An der Umfangswand der Hülse 374 ist ein Lagerbock 382 festgelegt, an welchem ein Ende einer Schleppstange 294 angelenkt ist (siehe Fig. 25).

Das entgegengesetzte Ende der Schleppstange 294 ist an einem Lagerbock 384 angelenkt, welcher an der Führungsteil-Plattform 226 des Laufwagens 208 festgelegt ist. Somit wird der Laufwagen 208 von der Kreuzgelenkkette 262" mittels der Schleppstange 294 gezogen, wobei der Laufwagen 208 aufgrund der Schwenkbarkeit der Hülse 374 relativ zu der Längsrichtung 360 der Kreuzgelenkkette 262" schwenkbar ist.

Um die Schwenkbewegung der Schleppstange 294 um die Längsrichtung 360 der Kreuzgelenkkette 262" zu ermöglichen, wird bei dieser Ausführungsform auf diejenigen Teile der Ketten-Führungsprofile 258 verzichtet, welche in dem von der Schleppstange 294 bei ihrer Schwenkbewegung überstrichenen Bereich liegen würden.

So wird beispielsweise in dem in den Fig. 27 und 28 dargestellten Förderabschnitt auf den oberen vertikalen Schenkel 268 und auf den oberen horizontalen Schenkel 264 sowie auf den den oberen horizontalen Schenkel 264 mit dem unteren horizontalen Schenkel 266 verbindenden vertikalen Steg des rechten Ketten-Führungsprofils 258' verzichtet, damit die Schleppstange 294 in diesem Förderabschnitt aus der Vertikalen um 90° im Uhrzeigersinn um die Längsrichtung der Kreuzgelenkkette 262" geschwenkt werden kann.

Die Laufrollenanordnungen 228d sind bei dieser fünften Ausführungsform in derselben Weise relativ zu der Führungsteil-Plattform 226 des Laufwagens 208 schwenkbar angeordnet wie bei der vierten Ausführungsform.

Um die Schwenkbewegung der Hülse 374 um die Längsrichtung 360 der Kreuzgelenkkette 262" in einem Förderabschnitt mit wendelförmig gekrümmten Laufwagen-Führungsprofilen zu unterstützen, kann vorgesehen sein, daß an der Hülse 374, insbesondere an dem Lagerbock 382, ein Führungselement, beispielsweise eine Führungsrolle, angeordnet ist, welche an einer zusätzlichen Kulissenführung so geführt ist, daß die Hülse 374 der Schwenkbewegung der Schleppstange 294 folgt. Dies ist insbesondere dann von Vorteil, wenn aufgrund ungünstiger Hebelverhältnisse nur ein kleines Drehmoment vom Laufwagen 208 über die Schleppstange 294 auf die Hülse 374 übertragen werden kann.

Im übrigen stimmt die fünfte Ausführungsform einer Oberflächenbehandlungsvorrichtung hinsichtlich Aufbau und Funktion mit der vierten Ausführungsform überein, auf deren vorstehende Beschreibung insoweit Bezug genommen wird.

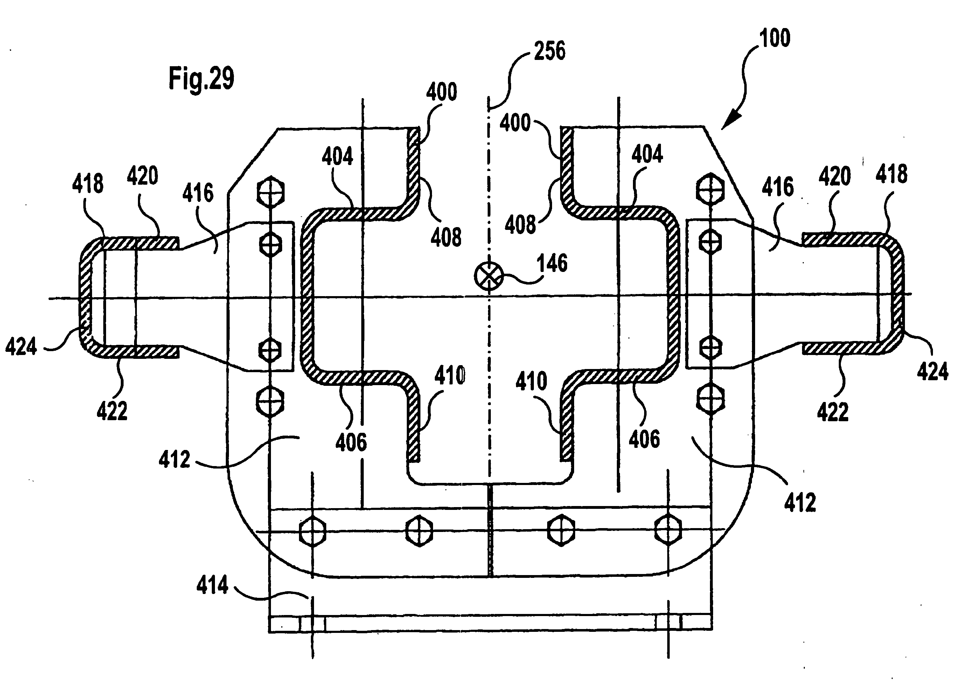

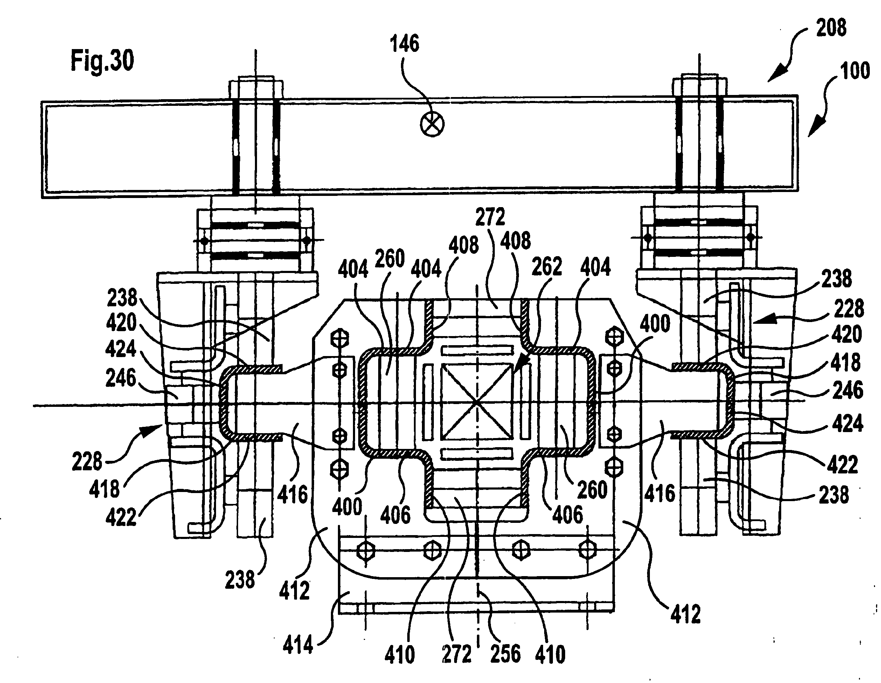

Eine in den Fig. 29 und 30 dargestellte sechste Ausführungsform einer Oberflächenbehandlungsvorrichtung 100 unterscheidet sich von der vorstehend unter Bezugnahme auf die Fig. 1 bis 13 beschriebenen ersten Ausführungsform durch die Ausgestaltung der Führungsrollen-Führungsprofile und der Laufrollen-Führungsprofile sowie durch die Anordnung der Laufrollen und der Führungsrollen des Laufwagens 208.

Wie am besten aus Fig. 29 zu ersehen ist, sind bei dieser Ausführungsform zwei Ketten-Führungsprofile 400 vorgesehen, welche hutförmige Querschnitte aufweisen, deren offene Seiten einander zugewandt sind.

Im mittleren Bereich jeden Ketten-Führungsprofils 400 sind Kettenlaufrollen 260 der Kreuzgelenkkette 262 an oberen und unteren horizontalen Schenkeln 404 bzw. 406 geführt (siehe Fig. 30).

An den oberen und unteren vertikalen Schenkeln 408 bzw. 410 jeden Ketten-Führungsprofils 400 sind Kettenführungsrollen 272 der Kreuzgelenkkette 262 geführt.

Die einander gegenüberstehenden Ketten-Führungsprofile 400 sind über Joche 412, welche längs der Förderrichtung 146 voneinander beabstandet sind, miteinander und mit Quertraversen 414 verbunden, welche sich jeweils zwischen zwei (nicht dargestellten) Längsträgern erstrecken, die längs der Förderrichtung 146 verlaufen und mittels in der Längsrichtung der Längsträger voneinander beabstandeten Klemmeinrichtungen an einer Haltekonstruktion der Fördervorrichtung gehalten sind.

Von jedem der Joche 412 erstreckt sich jeweils eine Halteplatte 416 von der gemeinsamen Längsmittelebene 256 der Ketten-Führungsprofile 400 weg nach außen.

Am äußeren Ende jeder Halteplatte 416 ist jeweils ein Laufwagenrollen-Führungsprofil 418 gehalten, welches jeweils die Form eines C aufweist, dessen offene Seite der Längsmittelebene 256 zugewandt ist.

Jedes der Laufwagenrollen-Führungsprofile 418 umfaßt einen oberen Schenkel 420 und einen unteren Schenkel 422, an welchen Laufrollen 238 des Laufwagens 208 abrollen, sowie einen den oberen Schenkel 420 und den unteren Schenkel 422 miteinander verbindenden Steg 424, an welchem Führungsrollen 246 des Laufwagens 208 abrollen (siehe Fig. 30).

Bei dieser sechsten Ausführungsform umfaßt also jede Laufrollenanordnung 228 des Laufwagens 208 nicht nur eine, sondern zwei Laufrollen 238, welche auf einander gegenüberliegenden Seiten des Laufwagenrollen-Führungsprofils 418 angeordnet sind.

Im übrigen stimmt die sechste Ausführungsform einer Oberflächenbehandlungsvorrichtung hinsichtlich Aufbau und Funktion mit der ersten Ausführungsform überein, auf deren vorstehende Beschreibung insoweit Bezug genommen wird.

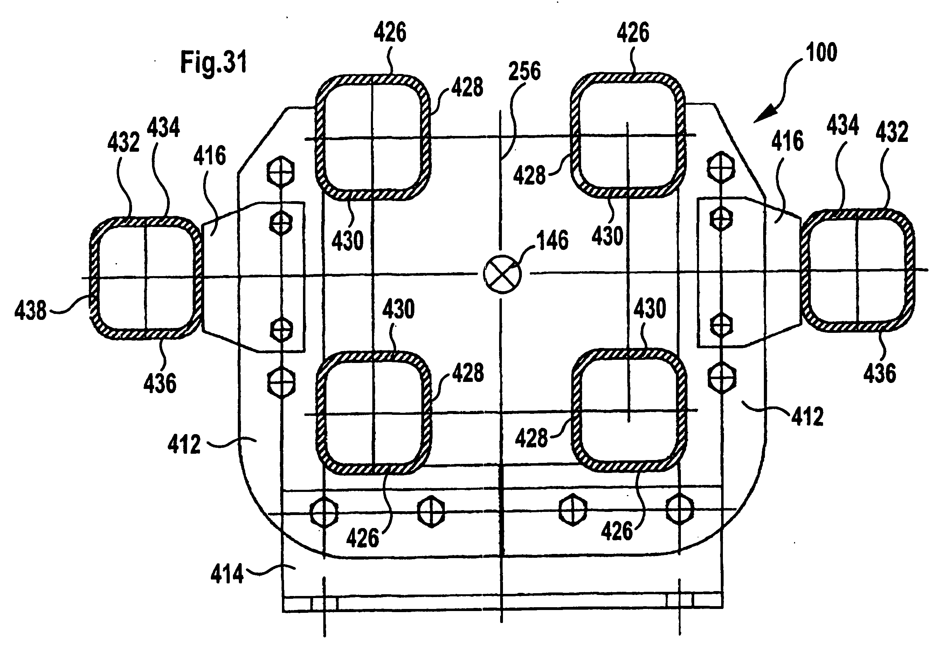

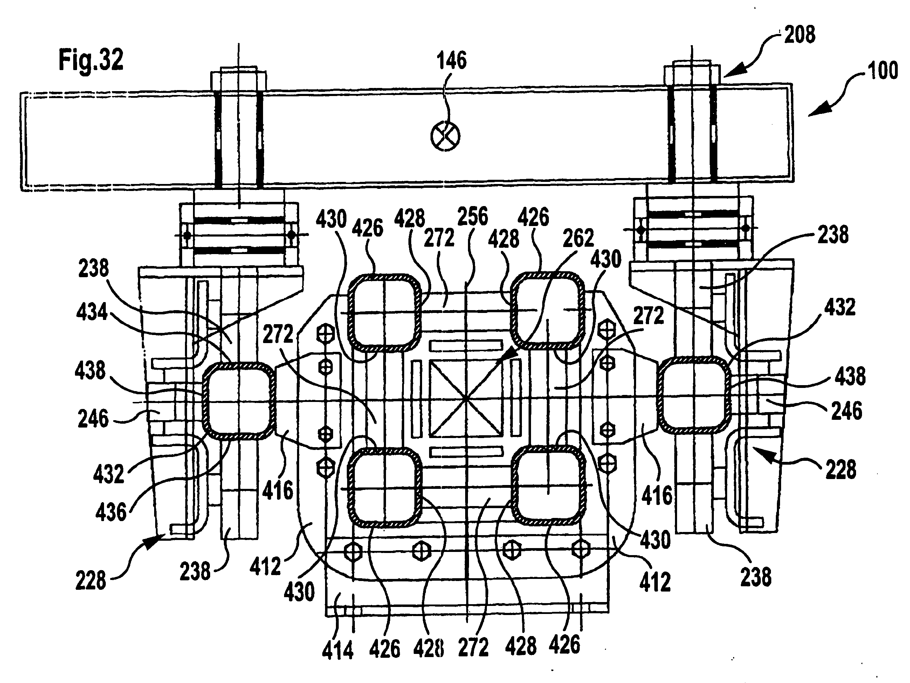

Eine in den Fig. 31 und 32 dargestellte siebte Ausführungsform einer Oberflächenbehandlungsvorrichtung 100 unterscheidet sich von der vorstehend beschriebenen sechsten Ausführungsform hinsichtlich der Ausgestaltung der Ketten-Führungsprofile und der Laufwagenrollen-Führungsprofile.

Wie aus den Fig. 31 und 32 zu ersehen ist, sind bei der siebten Ausführungsform zu beiden Seiten der Längsmittelebene 256 statt eines im Querschnitt hutförmigen Ketten-Führungsprofils jeweils zwei vertikal übereinander angeordnete, voneinander beabstandete Ketten-Führungsprofilrohre 426 vorgesehen, welche jeweils als Hohlkörper mit einem ungefähr quadratischen Querschnitt mit abgerundeten Ecken ausgebildet sind.

Jedes der Ketten-Führungsprofilrohre 426 weist jeweils eine vertikale Kettenrollen-Führungsfläche 428 und jeweils eine horizontale Kettenrollen-Führungsfläche 430 auf, an denen Kettenführungsrollen 272 der Kreuzgelenkkette 262 geführt sind.

Die auf derselben Seite der Längsmittelebene 256 angeordneten Ketten-Führungsprofilrohre 426 sind jeweils über Joche 412 miteinander verbunden, weiche längs der Förderrichtung 146 voneinander beabstandet sind. Die einander gegenüberstehenden Joche 412 sind mittels Quertraversen 414 miteinander verbunden.

An jedem der Joche 412 ist jeweils eine Halteplatte 416 angeordnet, welche sich von dem betreffenden Joch aus von der Längsmittelebene 256 weg nach außen erstreckt und an ihrem äußeren Ende jeweils ein Laufwagenrollen-Führungsprofilrohr 432 trägt, welches als Hohlkörper ausgebildet ist und einen im Querschnitt quadratischen Mantel mit abgerundeten Ecken aufweist.

Jedes der Laufwagenrollen-Führungsprofilrohre 432 weist eine obere Laufwagenrollen-Führungsfläche 434 und eine untere Laufwagenrollen-Führungsfläche 436 auf, wobei an den Laufwagenrollen-Führungsflächen 432 und 436 jeweils Laufrollen 238 der Laufrollenanordnungen 228 des Laufwagens 208 abrollen.

An ihren der Längsmittelebene 256 abgewandten Rändern sind die Laufwagenrollen-Führungsflächen 434 und 436 über eine vertikal ausgerichtete Führungsrollen-Führungsfläche 438 miteinander verbunden, an welcher jeweils eine Führungsrolle 246 einer Laufrollenanordnung 228 des Laufwagens 208 abrollt.

Im übrigen stimmt die siebte Ausführungsform einer Oberflächenbehandlungsvorrichtung hinsichtlich Aufbau und Funktion mit der sechsten Ausführungsform überein, auf deren vorstehende Beschreibung insoweit Bezug genommen wird.

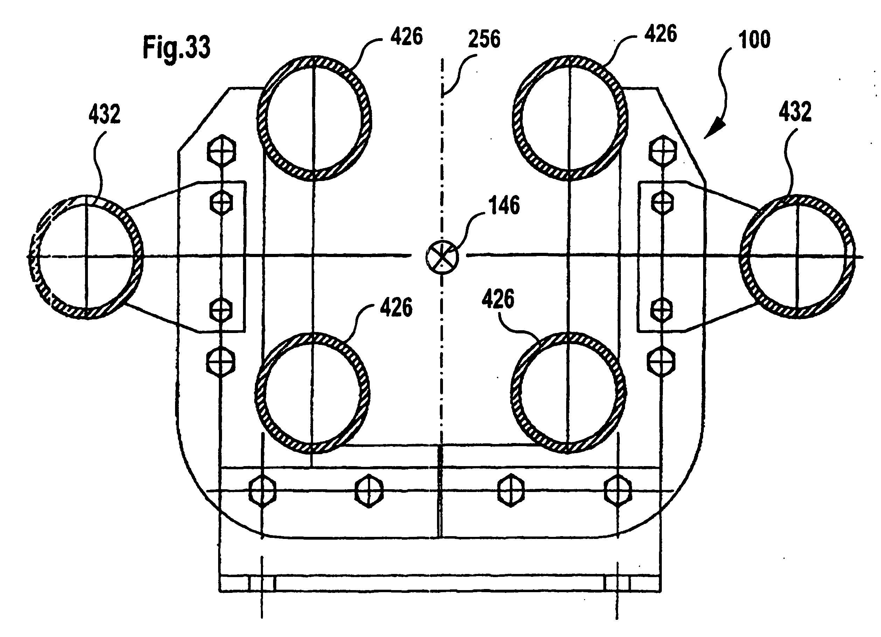

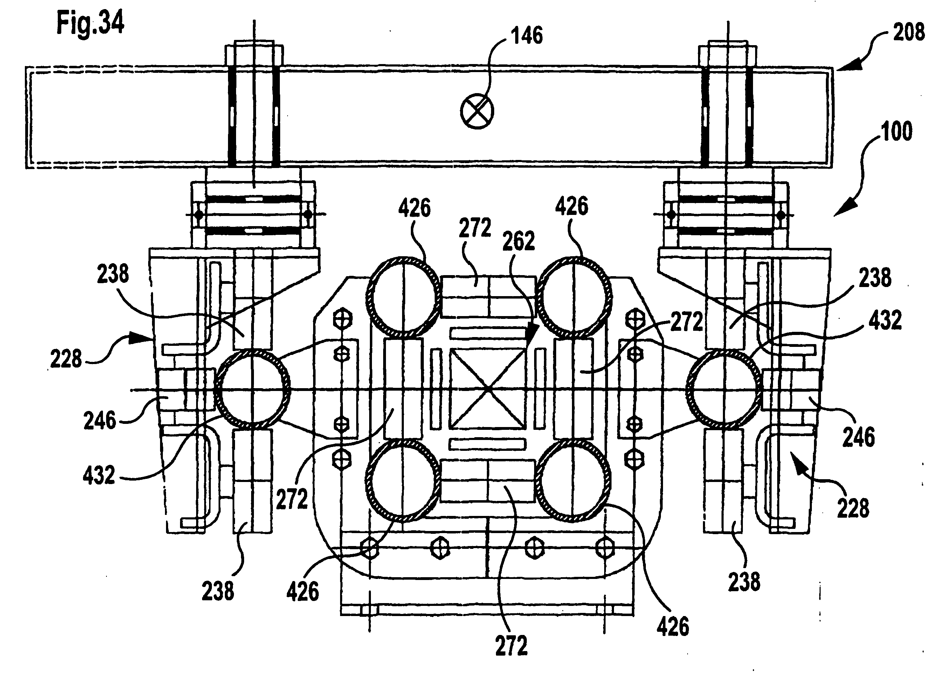

Eine in den Fig. 33 und 34 dargestellte achte Ausführungsform einer Oberflächenbehandlungsvorrichtung unterscheidet sich von der vorstehend beschriebenen siebten Ausführungsform lediglich dadurch, daß die Ketten-Führungsprofilrohre 426 und die Laufwagenrollen-Führungsprofilrohre 432 keine im wesentlichen quadratischen Querschnitte, sondern statt dessen im wesentlichen hohlzylindrische Querschnitte aufweisen.

Folglich stehen die Kettenführungsrollen 272 der Kreuzgelenkkette 262, welche an den Ketten-Führungsprofilrohren 426 der achten Ausführungsform abrollen, nicht in Flächenkontakt, sondern nur in Punktkontakt mit den Ketten-Führungsprofilrohren 426.

Ebenso stehen die Laufrollen 238 und die Führungsrollen 246 der Laufrollenanordnungen 228 des Laufwagens 208, welche an den Laufwagenrollen-Führungsprofilrohren 432 der achten Ausführungsform abrollen, nicht in Flächenkontakt, sondern lediglich in Punktkontakt mit der Umfangsfläche der Laufwagenrollen-Führungsprofilrohre 432.

Im übrigen stimmt die achte Ausführungsform einer Oberflächenbehandlungsvorrichtung hinsichtlich Aufbau und Funktion mit der siebten Ausführungsform überein, auf deren vorstehende Beschreibung insoweit Bezug genommen wird.

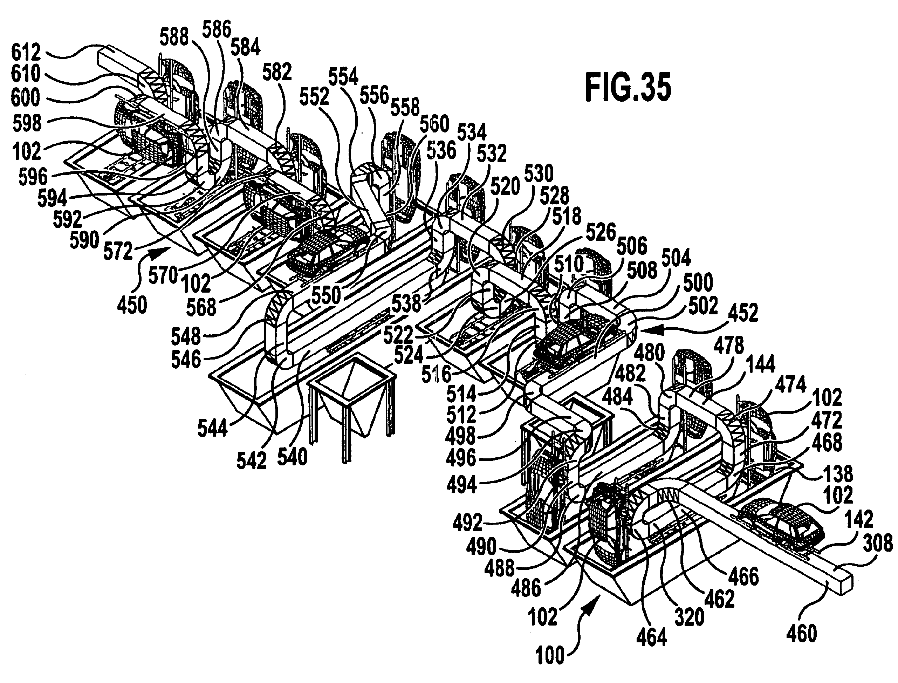

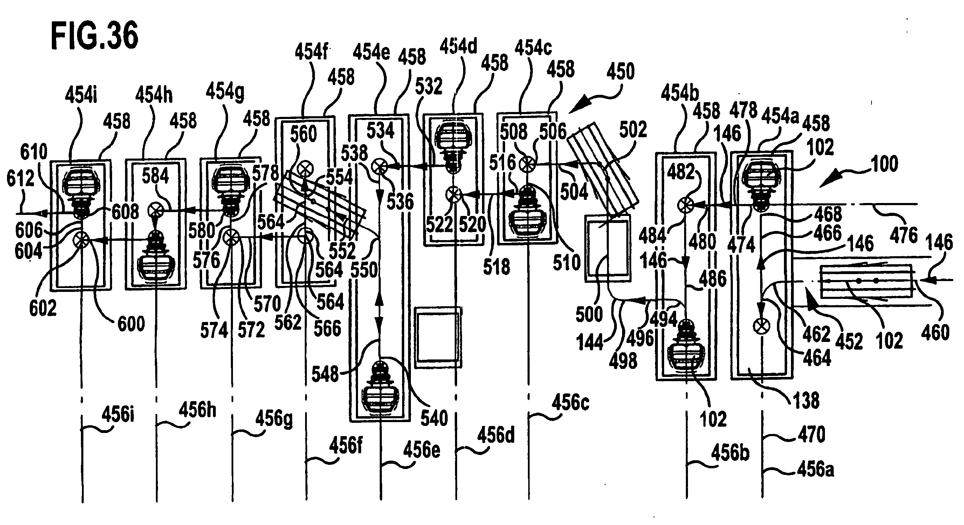

Eine in den Fig. 35 und 36 dargestellte neunte Ausführungsform einer Oberflächenbehandlungsvorrichtung 100 unterscheidet sich von der vorstehend unter Bezugnahme auf die Fig. 1 bis 13 beschriebenen ersten Ausführungsform dadurch, daß die zu fördernden Fahrzeugkarosserien 102 zwischen aufeinanderfolgenden Behandlungsbädern längs einer Förderbahn gefördert werden, welche die Form eines in einer vertikalen Ebene liegenden, nach unten offenen U aufweist.

Ferner werden die Fahrzeugkarosserien 102 bei dieser Ausführungsform in einem zwischen zwei Behandlungsbädern liegenden oberen Förderabschnitt in einer Seitwärtsstellung gefördert, in welcher die Längsmittelebene der Fahrzeugkarosserien nicht vertikal, sondern im wesentlichen horizontal ausgerichtet ist.

Die neunte Ausführungsform einer Oberflächenbehandlungsvorrichtung 100 umfaßt eine Gruppe 450 von Behandlungsbädern, durch welche die Fahrzeugkarosserien 102 mittels einer Fördervorrichtung 452 gefördert werden.

Wie aus den Fig. 35 und 36 zu ersehen ist, umfaßt die Gruppe 450 von Behandlungsbädern neun Behandlungsbäder 454a bis 454i, deren Längsachsen 456a bis 456i alle parallel, aber nicht kolinear zueinander ausgerichtet sind. Vielmehr sind die Behandlungsbäder 454a, 454b, 454g, 454h und 454i so seitlich nebeneinander angeordnet, daß ihre hinteren Stirnwände 458 in derselben vertikalen Ebene abschließen.

Ebenso sind die Behandlungsbäder 454c bis 454f so seitlich nebeneinander angeordnet, daß ihre hinteren Stirnwände 458 in derselben vertikalen Ebene abschließen.

Alle Behandlungsbäder 454a bis 454i sind bis zu einem Behandlungsbadspiegel 136 mit einem Volumen einer Behandlungsflüssigkeit 138 angefüllt.

Mittels der Fördervorrichtung 452 werden die Fahrzeugkarosserien 102 nacheinander durch die Behandlungsflüssigkeiten 138 der Behandlungsbäder 454a bis 454i gefördert.

Von einer (nicht dargestellten) Beladungsstation, in welcher die Fahrzeugkarosserien 102, weiche auf Skidrahmen 142 angeordnet sind, auf jeweils einen Laufwagen 208 der Fördervorrichtung 452 aufgesetzt werden, werden die Fahrzeugkarosserien 102 längs einer Förderbahn 144, deren lokale Förderrichtung in den Figuren jeweils mittels Pfeilen 146 angegeben ist, durch die Gruppe 450 von Behandlungsbädern bis zu einer (nicht dargestellten) Entnahmestation gefördert.

Von der Beladungsstation, welche auf einem oberen Förderniveau 308 oberhalb der Behandlungsbäder 454a bis 454i angeordnet ist, gelangen die Fahrzeugkarosserien 102 in einen geradlinigen horizontalen oberen Förderabschnitt 460, welcher über eine Linkskurve 462 mit einem Kurvenwinkel von 90° in einen vertikal ausgerichteten Bogen 464 mit einem Kurvenwinkel von 180° übergeht.

Der Bogen 164 geht an seinem unteren Ende in einen horizontalen geradlinigen Behandlungsabschnitt 466 über, welcher auf einem unteren Förderniveau 320 liegt. Durch den horizontalen geradlinigen Behandlungsabschnitt 466 werden die Fahrzeugkarosserien 102 in einer Kopfüberstellung gefördert, in welcher Fensteröffnungen der Karossieren unterhalb der Bodengruppe der Karosserien angeordnet sind.

Beim Durchlaufen des Behandlungsabschnitts 466 sind die Fahrzeugkarosserien 102 vollständig in die Behandlungsflüssigkeit 138 eingetaucht.

Nahe des hinteren Endes des Behandlungsbades 454a geht der geradlinige horizontale Behandlungsabschnitt 466 in einen vertikalen Bogen 468 mit einem Kurvenwinkel von 90° über, welcher in einer parallel zur Längsachse des Behandlungsbads 456a liegenden vertikalen Ebene 470 verläuft. An das obere Ende des Bogens 468 schließt sich ein geradliniger vertikaler Förderabschnitt 472 an, der an seinem oberen Ende in einen weiteren vertikalen Bogen 474 mit einem Kurvenwinkel von 90° übergeht, welcher in einer zu der Längsachse 456a des Behandlungsbads 455a senkrechten Ebene 476 verläuft.

Beim Durchlaufen des Bogens 474 werden die Fahrzeugkarosserien 102 aus einer vertikalen Stellung, in welcher die Längsmittelebene jeder Fahrzeugkarosserie 102 im wesentlichen vertikal ausgerichtet ist, in eine Seitwärtsstellung überführt, in welcher die Längsmittelebene der Fahrzeugkarosserien 102 im wesentlichen horizontal ausgerichtet ist.

An das obere Ende des vertikalen Bogens 474 schließt sich ein geradliniger horizontaler oberer Förderabschnitt 478 an, durch welchen die Fahrzeugkarosserien in der Seitwärtsstellung gefördert werden. Die Förderrichtung 146 ist in dem oberen Förderabschnitt 478 senkrecht zu der Förderrichtung 146 in dem horizontalen Behandlungsabschnitt 466 ausgerichtet.

Während die Fahrzeugkarosserien 102 durch den oberen Förderabschnitt 478 gefördert werden, sind die Fahrzeugkarosserien 102 seitlich neben einer Förderkette 262 der Fördervorrichtung 452 angeordnet.

An das Ende des horizontalen oberen Förderabschnitts 478 schließt sich ein vertikal ausgerichteter Bogen 480 mit einem Kurvenwinkel von 90° an, welcher in derselben vertikalen Ebene 476 liegt wie der vertikale Bogen 474.

Beim Durchlaufen des vertikalen Bogens 480 werden die Fahrzeugkarosserien 102 aus der Seitwärtsstellung in eine Abwärtsstellung überführt, in welcher die Längsmittelebene der Fahrzeugkarosserien 102 wieder vertikal ausgerichtet ist.

An den vertikalen Bogen 480 schließt sich nach unten ein geradliniger vertikaler Förderabschnitt 482 an, der an seinem unteren Ende in einen vertikalen Bogen 484 mit einem Kurvenwinkel von 90° übergeht, welcher in einer zu der vertikalen Ebene 470 des vertikalen Bogens 468 parallelen vertikalen Ebene liegt.

Beim Durchlaufen des vertikalen Bogens 484 werden die Fahrzeugkarosserien 102 von der Abwärtsstellung in die Kopfüberstellung gebracht.

An das untere Ende des vertikalen Bogens 484 schließt sich ein horizontaler Behandlungsabschnitt 486 an, welcher parallel zu dem horizontalen Behandlungsabschnitt 466 ausgerichtet ist.

Der weitere Verlauf der Förderbahn 144 umfaßt nacheinander einen parallel zur Längsachse 456b liegenden vertikalen Bogen 488 mit einem Kurvenwinkel von 90°, einen vertikalen Förderabschnitt 490, einen senkrecht zur Längsachse 456b liegenden vertikalen Bogen 492 mit einem Kurvenwinkel von 90°, eine Linkskurve 494 mit einem Kurvenwinkel von 90°, einen horizontalen Förderabschnitt 496, eine Rechtskurve 498 mit einem Kurvenwinkel von 90°, einen horizontalen Förderabschnitt 500, eine Linkskurve 502 mit einem Kurvenwinkel von 90°, einen horizontalen Förderabschnitt 504, einen senkrecht zur Längsachse 456c liegenden vertikalen Bogen 506 mit einem Kurvenwinkel von 90°, einen vertikalen Förderabschnitt 508, einen parallel zur Längsachse 456c gerichteten vertikalen Bogen 510 mit einem Kurvenwinkel von 90°, einen parallel zur Längsachse 456c liegenden vertikalen Bogen 512 mit einem Bogenwinkel von 90°, einen vertikalen Förderabschnitt 514, einen senkrecht zur Längsachse 456c liegenden vertikalen Bogen 516 mit einem Kurvenwinkel von 90°, einen horizontalen Förderabschnitt 518, einen senkrecht zur Längsachse 456d liegenden vertikalen Bogen 520 mit einem Kurvenwinkel von 90°, einen vertikalen Förderabschnitt 522, einen parallel zur Längsachse 456d liegenden vertikalen Bogen 524 mit einem Kurvenwinkel von 90°, einen parallel zur Längsachse 456d liegenden vertikalen Bogen 526 mit einem Kurvenwinkel von 90°, einen vertikalen Förderabschnitt 528, einen senkrecht zur Längsachse 456d liegenden vertikalen Bogen 530 mit einem Kurvenwinkel von 90°, einen horizontalen Förderabschnitt 532, einen senkrecht zur Längsachse 456e liegenden vertikalen Bogen 534 mit einem Kurvenwinkel von 90°, einen vertikalen Förderabschnitt 536, einen parallel zur Längsachse 456e liegenden vertikalen Bogen 538 mit einem Kurvenwinkel von 90°, einen horizontalen Behandlungsabschnitt 540, einen parallel zur Längsachse 456e liegenden vertikalen Bogen 542 mit einem Kurvenwinkel von 90°, einen vertikalen Förderabschnitt 544, einen parallel zur Längsachse 456e liegenden vertikalen Bogen 546 mit einem Kurvenwinkel von 90°, einen horizontalen Förderabschnitt 548, eine Linkskurve 550 mit einem Kurvenwinkel von 60°, einen horizontalen Förderabschnitt 552, eine Rechtskurve 554 mit einem Kurvenwinkel von 60°, einen parallel zur Längsachse 456f liegenden vertikalen Bogen 556 mit einem Kurvenwinkel von 90°, einen vertikalen Förderabschnitt 558, einen parallel zur Längsachse 456f liegenden vertikalen Bogen 560 mit einem Kurvenwinkel von 90°, einen horizontalen Behandlungsabschnitt 562, einen parallel zur Längsachse 456f liegenden vertikalen Bogen 564 mit einem Kurvenwinkel von 90°, einen vertikalen Förderabschnitt 566, einen senkrecht zur Längsachse 456f liegenden vertikalen Bogen 568 mit einem Kurvenwinkel von 90°, einen horizontalen Förderabschnitt 570, einen senkrecht zur Längsachse 456g liegenden vertikalen Bogen 572 mit einem Kurvenwinkel von 90°, einen vertikalen Förderabschnitt 574, einen parallel zur Längsachse 456g liegenden vertikalen Bogen 576 mit einem Kurvenwinkel von 90°, einen parallel zur Längsachse 456g liegenden vertikalen Bogen 578 mit einem Kurvenwinkel von 90°, einen vertikalen Förderabschnitt 580, einen senkrecht zur Längsachse 456g liegenden vertikalen Bogen 582 mit einem Kurvenwinkel von 90°, einen horizontalen Förderabschnitt 584, einen senkrecht zur Längsachse 456h liegenden vertikalen Bogen 586 mit einem Kurvenwinkel von 90°, einen vertikalen Förderabschnitt 588, einen parallel zur Längsachse 456h liegenden vertikalen Bogen 590 mit einem Kurvenwinkel von 90°, einen parallel zur Längsachse 456h liegenden vertikalen Bogen 592 mit einem Kurvenwinkel von 90°, einen vertikalen Förderabschnitt 594, einen senkrecht zur Längsachse 456h liegenden vertikalen Bogen 596 mit einem Kurvenwinkel von 90°, einen horizontalen Förderabschnitt 598, einen senkrecht zur Längsachse 456i liegenden vertikalen Bogen 600 mit einem Kurvenwinkel von 90°, einen vertikalen Förderabschnitt 602, einen parallel zur Längsachse 456i liegenden vertikalen Bogen 604 mit einem Kurvenwinkel von 90°, einen parallel zur Längsachse 456i liegenden vertikalen Bogen 606 mit einem Kurvenwinkel von 90°, einen vertikalen Förderabschnitt 608, einen senkrecht zur Längsachse 456i liegenden vertikalen Bogen 610 mit einem Kurvenwinkel von 90° und schließlich einen horizontalen Förderabschnitt 612, welcher zu der (nicht dargestellten) Entladestation führt.

Im übrigen stimmt der Aufbau der neunten Ausführungsform einer Oberflächenbehandlungsvorrichtung 100 hinsichtlich Aufbau und Funktion mit der ersten Ausführungsform überein, auf deren vorstehende Beschreibung insoweit Bezug genommen wird.

## Patentansprüche

1. Vorrichtung zur Oberflächenbehandlung von Werkstücken, insbesondere von Fahrzeugkarosserien (102), umfassend mindestens ein Behandlungsbad (122a bis 122f, 114) zur Oberflächenbehandlung der Werkstücke und mindestens eine Fördervorrichtung (106, 110, 116) zum Fördern der Werkstücke durch das Behandlungsbad, welche einen Behandlungsabschnitt (172; 318), in dem die Werkstücke durch das Behandlungsbad gefördert werden, und mindestens einen oberen Förderabschnitt (164, 180; 306, 326), durch den die Werkstücke vor und/oder nach dem Fördern durch das Behandlungsbad gefördert werden und der oberhalb des Behandlungsabschnitts angeordnet ist, umfasst,
wobei der obere Förderabschnitt (164, 180; 306, 326) senkrecht über dem Behandlungsabschnitt (172; 318) angeordnet ist,
**dadurch gekennzeichnet, dass**
die Fördervorrichtung (106, 110, 116) auch mindestens einen Zuführ- oder Abführabschnitt (150, 162, 182, 182', 182", 184, 198) umfasst, der seitlich neben dem Behandlungsabschnitt (172; 318) angeordnet ist und in dem die Förderrichtung (146) der Werkstücke eine horizontale Komponente aufweist, die quer zu der Förderrichtung der Werkstücke in dem Behandlungsabschnitt (172; 318) gerichtet ist.

2. Vorrichtung nach Anspruch 1, **dadurch gekennzeichnet, dass** sich der obere Förderabschnitt (164, 180; 306, 326) im wesentlichen parallel zu dem Behandlungsabschnitt (172; 318) erstreckt.

3. Vorrichtung nach einem der Ansprüche 1 oder 2, **dadurch gekennzeichnet, dass** die Förderrichtung (146) der Werkstücke in dem oberen Förderabschnitt (164, 180; 306, 326) im wesentlichen antiparallel zu der Förderrichtung (146) der Werkstücke in dem Behandlungsabschnitt (172; 318) gerichtet ist.

4. Vorrichtung nach einem der Ansprüche 1 bis 3, **dadurch gekennzeichnet, dass** die Förderrichtung (146) der Werkstücke in dem Behandlungsabschnitt (172) im wesentlichen horizontal gerichtet ist.

5. Vorrichtung nach einem der Ansprüche 1 bis 4, **dadurch gekennzeichnet, dass** die Förderrichtung (146) der Werkstücke in dem oberen Förderabschnitt (164, 180; 306, 326) im wesentlichen horizontal gerichtet ist.

6. Vorrichtung nach einem der Ansprüche 1 bis 5, **dadurch gekennzeichnet, dass** der obere Förderabschnitt (164, 180; 306, 326) und der Behandlungsabschnitt (172) durch einen Verbindungsabschnitt (166, 174; 310, 322) miteinander verbunden sind, wobei die Werkstücke in dem Verbindungsabschnitt (166, 174; 310, 322) längs einer zumindest abschnittsweise gekrümmten Förderbahn (144) gefördert werden.

7. Vorrichtung nach Anspruch 6, **dadurch gekennzeichnet, dass** die Werkstücke beim Durchlaufen des Verbindungsabschnitts (166, 174; 310, 322) um einen Winkel von ungefähr 180° relativ zu einem ortsfesten Bezugssystem gedreht werden.

8. Vorrichtung nach einem der Ansprüche 6 oder 7, **dadurch gekennzeichnet, dass** der Verbindungsabschnitt (310; 322) einen Abschnitt (314) umfasst, durch welchen die Werkstücke längs einer im wesentlichen vertikalen Förderrichtung (146) gefördert werden.

9. Vorrichtung nach einem der Ansprüche 1 bis 8, **dadurch gekennzeichnet, dass** die Werkstücke Fahrzeugkarosserien (102) sind und dass die Fahrzeugkarosserien (102) in einer Kopfüberstellung durch den Behandlungsabschnitt (172; 318) gefördert werden.

10. Vorrichtung nach einem der Ansprüche 1 bis 9, **dadurch gekennzeichnet, dass** die Werkstücke Fahrzeugkarosserien (102) sind und dass die Fahrzeugkarosserien (102) in einer Standardstellung durch den oberen Förderabschnitt (164, 180; 306, 326) gefördert werden.

11. Vorrichtung nach einem der Ansprüche 1 bis 10, **dadurch gekennzeichnet, dass** der Zuführ- oder Abführabschnitt (150, 162, 182, 182', 182", 184, 198) eine, vorzugsweise horizontal ausgerichtete, Linkskurve oder Rechtskurve umfasst, die unmittelbar mit dem oberen Förderabschnitt (164, 180, 306, 326) verbunden ist.

12. Vorrichtung nach einem der Ansprüche 1 bis 11, **dadurch gekennzeichnet, dass** die Fördervorrichtung (106) in mindestens drei Förderniveaus (308, 320, 328) übereinander angeordnete Förderabschnitte (306, 318, 326) mit zumindest abschnittsweise im wesentlichen horizontaler Förderrichtung (146) umfasst.

13. Vorrichtung nach einem der Ansprüche 1 bis 12, **dadurch gekennzeichnet, dass** die Werkstücke in dem Behandlungsabschnitt (172; 318) zumindest abschnittsweise längs einer gekrümmten Förderbahn (144) gefördert werden.

14. Vorrichtung nach einem der Ansprüche 1 bis 13, **dadurch gekennzeichnet, dass** die Vorrichtung mindestens zwei Behandlungsbäder (122a bis 122f) umfasst und dass die Behandlungsabschnitte, in welchen die Werkstücke durch die Behandlungsbäder gefördert werden, in einer quer zu der Förderrichtung (146) in mindestens einem der Behandlungsabschnitte gerichteten Richtung zueinander versetzt angeordnet sind.

15. Vorrichtung nach Anspruch 14, **dadurch gekennzeichnet, dass** mindestens zwei Behandlungsbäder (122a bis 122f) seitlich nebeneinander angeordnet sind.

16. Vorrichtung nach Anspruch 15, **dadurch gekennzeichnet, dass** mindestens zwei Behandlungsbäder (122a bis 122f) in einer zur Längsrichtung (124a bis 124f) der Behandlungsbäder senkrechten Richtung zueinander versetzte Stirnwände (126a bis 126f; 130a bis 130f) aufweisen.

17. Vorrichtung nach einem der Ansprüche 15 oder 16, **dadurch gekennzeichnet, dass** jedem der Behandlungsbäder (122a bis 122f) jeweils eine Prozesstechnikkabine (134a bis 134f) zugeordnet ist und dass die Prozesstechnikkabinen einander benachbart angeordnet sind.

18. Vorrichtung nach einem der Ansprüche 1 bis 17, **dadurch gekennzeichnet, dass** die Fördervorrichtung (106, 110, 116) ein einsträngiges Fördermittel (262; 262';262") umfasst.

19. Vorrichtung nach Anspruch 18, **dadurch gekennzeichnet, dass** die lokale Längsmittelebene des Fördermittels (262; 262') im wesentlichen mit der lokalen Längsmittelebene (256) der geförderten Werkstücke übereinstimmt.

20. Vorrichtung nach einem der Ansprüche 1 bis 19, **dadurch gekennzeichnet, dass** die Fördervorrichtung (106, 110, 116) eine Kreuzgelenkkette (262; 262'; 262") umfasst.

21. Vorrichtung nach einem der Ansprüche 1 bis 20, **dadurch gekennzeichnet, dass** die Werkstücke auf jeweils einem Laufwagen (208) angeordnet sind, der von einem Fördermittel (262; 262'; 262") gezogen wird.

22. Vorrichtung nach Anspruch 21, **dadurch gekennzeichnet, dass** der Laufwagen (208) über ein Verbindungselement (294) gelenkig mit dem Fördermittel (262; 262") verbunden ist.

23. Vorrichtung nach Anspruch 21, **dadurch gekennzeichnet, dass** der Laufwagen (208) mittels eines Mitnehmers (330), der verschieblich in einer Mitnehmeraufnahme (334) aufgenommen ist, von dem Fördermittel (262) gezogen wird.

24. Vorrichtung nach Anspruch 23, **dadurch gekennzeichnet, dass** der Mitnehmer (330) an dem Fördermittel (262) und die Mitnehmeraufnahme (334) an dem Laufwagen (208) angeordnet ist.

25. Vorrichtung nach einem der Ansprüche 21 bis 24, **dadurch gekennzeichnet, dass** der Laufwagen (208) um die Längsrichtung (360) des Fördermittels (262") schwenkbar ist.

26. Vorrichtung nach einem der Ansprüche 1 bis 25, **dadurch gekennzeichnet, dass** die Fördervorrichtung (106, 110, 116) ein Fördermittel (262') umfasst, welches um seine Längsrichtung (360) verdrillbar ist.

27. Vorrichtung nach Anspruch 26, **dadurch gekennzeichnet, dass** die Fördervorrichtung (106, 110, 116) als Fördermittel eine Kreuzgelenkkette (262') umfasst, welche Kettenlaschen (284, 286) mit jeweils mindestens zwei in der Längsrichtung (360) der Kette aufeinanderfolgenden Abschnitten (284a, 284b, 286a, 286b), welche relativ zueinander um die Längsrichtung der Kette verschwenkbar sind, aufweist.

28. Vorrichtung nach einem der Ansprüche 1 bis 27, **dadurch gekennzeichnet, dass** die Fördervorrichtung (106, 110, 116) ein Fördermittel (262; 262'; 262") umfasst, welches innerhalb einer Führungskanalabdeckung (216) angeordnet ist.

29. Vorrichtung nach Anspruch 28, **dadurch gekennzeichnet, dass** die Führungskanalabdeckung (216) eine zwischen dem Fördermittel (262; 262'; 262") und den Werkstücken und/oder eine zwischen dem Fördermittel (262; 262'; 262") und dem Behandlungsbad (122a bis 122f, 114) angeordnete Abdeckwand (218) umfasst.

30. Vorrichtung nach einem der Ansprüche 28 oder 29, **dadurch gekennzeichnet, dass** die Führungskanalabdeckung (216) einen Unterdruckabschnitt umfasst, in welchem innerhalb der Führungskanalabdeckung ein Unterdruck relativ zum Umgebungsdruck erzeugbar ist.

31. Vorrichtung nach einem der Ansprüche 28 bis 30, **dadurch gekennzeichnet, dass** die Führungskanalabdeckung (216) einen Überdruckabschnitt umfasst, in welchem innerhalb der Führungskanalabdeckung ein Überdruck relativ zum Umgebungsdruck erzeugbar ist.

32. Vorrichtung nach einem der Ansprüche 30 oder 31, **dadurch gekennzeichnet, dass** die Führungskanalabdeckung (216) mindestens einen Unterdruckabschnitt und mindestens einen Überdruckabschnitt umfasst, wobei Luft aus dem Unterdruckabschnitt dem Überdruckabschnitt zuführbar ist.

33. Vorrichtung nach einem der Ansprüche 28 bis 32, **dadurch gekennzeichnet, dass** die Werkstücke auf jeweils einem Laufwagen (208) angeordnet sind, der von dem Führungsmittel (262; 262'; 262") gezogen wird, wobei der Laufwagen einen Führungsteil (224), der innerhalb der Führungskanalabdeckung (216) an Laufwagen-Führungsschienen (252, 254) geführt ist, und einen Werkstück-Aufnahmeteil (206), der außerhalb der Führungskanalabdeckung angeordnet ist und an dem jeweils ein Werkstück lösbar gehalten ist, umfasst.

34. Vorrichtung nach Anspruch 33, **dadurch gekennzeichnet, dass** der Führungsteil (224) und der Werkstück-Aufnahmeteil (206) des Laufwagens (208) durch ein Verbindungselement (222) miteinander verbunden sind, wobei sich das Verbindungselement durch einen Durchgangsspalt (220) in der Führungskanalabdeckung (216) hindurch erstreckt.

35. Vorrichtung nach Anspruch 34, **dadurch gekennzeichnet, dass** der Durchgangsspalt (220) mit einer Bürstendichtung (225) versehen ist.

36. Vorrichtung nach einem der Ansprüche 21 bis 35, **dadurch gekennzeichnet, dass** der Laufwagen (208) mindestens zwei Laufrollenanordnungen (228a, 228b) umfasst, die auf einander gegenüberliegenden Seiten der Längsmittelebene (256) des Laufwagens angeordnet sind, wobei mindestens eine der Laufrollenanordnungen (228a) relativ zu der Längsmittelebene (256) des Laufwagens (208) derart schwenkbar ist, dass sich der Abstand dieser Laufrollenanordnung von der Längsmittelebene (256) des Laufwagens (208) verändert.

37. Vorrichtung nach einem der Ansprüche 1 bis 36, **dadurch gekennzeichnet, dass** die Förderrichtung (146) der Werkstücke in dem oberen Förderabschnitt (478) eine horizontale Komponente aufweist, die im wesentlichen senkrecht zu der Förderrichtung (146) der Werkstücke in dem Behandlungsabschnitt (466) gerichtet ist.

38. Vorrichtung nach einem der Ansprüche 1 bis 37, **dadurch gekennzeichnet, dass** der obere Förderabschnitt (478) und der Behandlungsabschnitt (466) durch einen Verbindungsabschnitt (468, 472, 474) miteinander verbunden sind, wobei die Förderbahn (144) der Werkstücke in dem Verbindungsabschnitt in einem ersten Teilabschnitt des Verbindungsabschnitts einen ersten Bogen (468) in einer ersten im wesentlichen vertikalen Ebene (470) mit einem ersten Kurvenwinkel und in einem zweiten Teilabschnitt des Verbindungsabschnitts einen zweiten Bogen (474) in einer zweiten im wesentlichen vertikalen Ebene (476) mit einem zweiten Kurvenwinkel durchläuft, wobei die erste vertikale Ebene (470) und die zweite vertikale Ebene (476) quer zueinander ausgerichtet sind.

39. Vorrichtung nach Anspruch 38, **dadurch gekennzeichnet, dass** die erste vertikale Ebene (470) und die zweite vertikale Ebene (476) im wesentlichen senkrecht zueinander ausgerichtet sind.

40. Vorrichtung nach einem der Ansprüche 38 oder 39, **dadurch gekennzeichnet, dass** der erste Kurvenwinkel und/oder der zweite Kurvenwinkel im wesentlichen 90° beträgt.

41. Vorrichtung nach einem der Ansprüche 38 bis 40, **dadurch gekennzeichnet, dass** der obere Förderabschnitt (478) über einen weiteren Verbindungsabschnitt (480, 482, 484) mit einem weiteren Behandlungsabschnitt (486) verbunden ist und dass die Förderbahn (144) in dem Verbindungsabschnitt, dem oberen Förderabschnitt und dem weiteren Verbindungsabschnitt einen Bogen in Form eines nach unten offenen U durchläuft.

42. Vorrichtung nach einem der Ansprüche 1 bis 41, **dadurch gekennzeichnet, dass** die Werkstücke in dem oberen Förderabschnitt (478) seitlich neben einem Fördermittel, insbesondere einer Förderkette, der Fördervorrichtung angeordnet sind.

43. Vorrichtung nach einem der Ansprüche 1 bis 42, **dadurch gekennzeichnet, dass** die Werkstücke Fahrzeugkarosserien (102) sind und dass die Fahrzeugkarosserien (102) in einer Seitwärtsstellung durch den oberen Förderabschnitt (478) gefördert werden.

44. Verfahren zur Oberflächenbehandlung von Werkstücken, insbesondere von Fahrzeugkarosserien (102), wobei die Werkstücke mittels mindestens einer Fördervorrichtung (106, 110, 116) durch mindestens ein Behandlungsbad (122a bis 122f, 114) zur Oberflächenbehandlung der Werkstücke gefördert werden, wobei die Fördervorrichtung einen Behandlungsabschnitt (172; 318), in dem die Werkstücke durch das Behandlungsbad gefördert werden, und mindestens einen oberen Förderabschnitt (164, 180; 306, 326), durch den die Werkstücke vor und/oder nach dem Fördern durch das Behandlungsbad gefördert werden und der oberhalb des Behandlungsabschnitts angeordnet ist, umfasst, wobei eine Fördervorrichtung verwendet wird, bei der der obere Förderabschnitt (164, 180; 306, 326) senkrecht über dem Behandlungsabschnitt (172; 318) angeordnet ist,
**dadurch gekennzeichnet, dass**
die verwendete auch Fördervorrichtung mindestens einen Zuführ- oder Abführabschnitt (150, 162, 182, 182', 182", 184, 198) umfasst, der seitlich neben dem Behandlungsabschnitt (172; 318) angeordnet ist und in dem die Förderrichtung (146) der Werkstücke eine horizontale Komponente aufweist, die quer zu der Förderrichtung der Werkstücke in dem Behandlungsabschnitt (172; 318) gerichtet ist.

45. Verfahren nach Anspruch 44, **dadurch gekennzeichnet, dass** sich der obere Förderabschnitt (164, 180; 306, 326) im wesentlichen parallel zu dem Behandlungsabschnitt (172; 318) erstreckt.

46. Verfahren nach einem der Ansprüche 44 oder 45, **dadurch gekennzeichnet, dass** die Förderrichtung (146) der Werkstücke in dem oberen Förderabschnitt (164, 180; 306, 326) im wesentlichen antiparallel zu der Förderrichtung (146) der Werkstücke in dem Behandlungsabschnitt (172; 318) gerichtet ist.

47. Verfahren nach einem der Ansprüche 44 bis 46, **dadurch gekennzeichnet, dass** die Förderrichtung (146) der Werkstücke in dem Behandlungsabschnitt (172) im wesentlichen horizontal gerichtet ist.

48. Verfahren nach einem der Ansprüche 44 bis 47, **dadurch gekennzeichnet, dass** die Förderrichtung (146) der Werkstücke in dem oberen Förderabschnitt (164, 180; 306, 326) im wesentlichen horizontal gerichtet ist.

49. Verfahren nach einem der Ansprüche 44 bis 48, **dadurch gekennzeichnet, dass** der obere Förderabschnitt (164, 180; 306, 326) und der Behandlungsabschnitt (172) durch einen Verbindungsabschnitt (166, 174; 310, 322) miteinander verbunden sind, wobei die Werkstücke in dem Verbindungsabschnitt (166, 174; 310, 322) längs einer zumindest abschnittsweise gekrümmten Förderbahn (144) gefördert werden.

50. Verfahren nach Anspruch 49, **dadurch gekennzeichnet, dass** die Werkstücke beim Durchlaufen des Verbindungsabschnitts (166, 174; 310, 322) um einen Winkel von ungefähr 180° relativ zu einem ortsfesten Bezugssystem gedreht werden.

51. Verfahren nach einem der Ansprüche 49 oder 50, **dadurch gekennzeichnet, dass** der Verbindungsabschnitt (310; 322) einen Abschnitt (314) umfasst, durch welchen die Werkstücke längs einer im wesentlichen vertikalen Förderrichtung (146) gefördert werden.

52. Verfahren nach einem der Ansprüche 44 bis 51, **dadurch gekennzeichnet, dass** die Werkstücke Fahrzeugkarosserien (102) sind und dass die Fahrzeugkarosserien (102) in einer Kopfüberstellung durch den Behandlungsabschnitt (172; 318) gefördert werden.

53. Verfahren nach einem der Ansprüche 44 bis 52, **dadurch gekennzeichnet, dass** die Werkstücke Fahrzeugkarosserien (102) sind und dass die Fahr**zeugkarosserien** (102) in einer Standardstellung durch den oberen Förderabschnitt (164, 180; 306, 326) gefördert werden.

54. Verfahren nach einem der Ansprüche 44 bis 53, **dadurch gekennzeichnet, dass** der Zuführ- oder Abführabschnitt (150, 162, 182, 182', 182", 184, 198) eine, vorzugsweise horizontal ausgerichtete, Linkskurve oder Rechtskurve umfasst, die unmittelbar mit dem oberen Förderabschnitt (164, 180, 306, 326) verbunden ist.

55. Verfahren nach einem der Ansprüche 44 bis 54, **dadurch gekennzeichnet, dass** die Fördervorrichtung (106) in mindestens drei Förderniveaus (308, 320, 328) übereinander angeordnete Förderabschnitte (306, 318, 326) mit zumindest abschnittsweise im wesentlichen horizontaler Förderrichtung (146) umfasst.

56. Verfahren nach einem der Ansprüche 44 bis 55, **dadurch gekennzeichnet, dass** die Werkstücke in dem Behandlungsabschnitt (172; 318) zumindest abschnittsweise längs einer gekrümmten Förderbahn (144) gefördert werden.

57. Verfahren nach einem der Ansprüche 44 bis 56, **dadurch gekennzeichnet, dass** die Vorrichtung mindestens zwei Behandlungsbäder (122a bis 122f) umfasst und dass die Behandlungsabschnitte, in welchen die Werkstücke durch die Behandlungsbäder gefördert werden, in einer quer zu der Förderrichtung (146) in mindestens einem der Behandlungsabschnitte gerichteten Richtung zueinander versetzt angeordnet sind.

58. Verfahren nach Anspruch 57, **dadurch gekennzeichnet, dass** mindestens zwei Behandlungsbäder (122a bis 122f) seitlich nebeneinander angeordnet sind.

59. Verfahren nach Anspruch 58, **dadurch gekennzeichnet, dass** mindestens zwei Behandlungsbäder (122a bis 122f) in einer zur Längsrichtung (124a bis 124f) der Behandlungsbäder senkrechten Richtung zueinander versetzte Stirnwände (126a bis 126f; 130a bis 130f) aufweisen.

60. Verfahren nach einem der Ansprüche 57 oder 58, **dadurch gekennzeichnet, dass** jedem der Behandlungsbäder (122a bis 122f) jeweils eine Prozesstechnikkabine (134a bis 134f) zugeordnet ist und dass die Prozesstechnikkabinen einander benachbart angeordnet sind.

61. Verfahren nach einem der Ansprüche 44 bis 60, **dadurch gekennzeichnet, dass** die Fördervorrichtung (106, 110, 116) ein einsträngiges Fördermittel (262; 262';262") umfasst.

62. Verfahren nach Anspruch 61, **dadurch gekennzeichnet, dass** die lokale Längsmittelebene des Fördermittels (262; 262') im wesentlichen mit der lokalen Längsmittelebene (256) der geförderten Werkstücke übereinstimmt.

63. Verfahren nach einem der Ansprüche 44 bis 62, **dadurch gekennzeichnet, dass** die Fördervorrichtung (106, 110, 116) eine Kreuzgelenkkette (262; 262'; 262") umfasst.

64. Verfahren nach einem der Ansprüche 44 bis 63, **dadurch gekennzeichnet, dass** die Werkstücke auf jeweils einem Laufwagen (208) angeordnet sind, der von einem Fördermittel (262; 262'; 262") gezogen wird.

65. Verfahren nach Anspruch 64, **dadurch gekennzeichnet, dass** der Laufwagen (208) über ein Verbindungselement (294) gelenkig mit dem Fördermittel (262; 262") verbunden ist.

66. Verfahren nach Anspruch 64, **dadurch gekennzeichnet, dass** der Laufwagen (208) mittels eines Mitnehmers (330), der verschieblich in einer Mitnehmeraufnahme (334) aufgenommen ist, von dem Fördermittel (262) gezogen wird.

67. Verfahren nach Anspruch 66, **dadurch gekennzeichnet, dass** der Mitnehmer (330) an dem Fördermittel (262) und die Mitnehmeraufnahme (334) an dem Laufwagen (208) angeordnet ist.

68. Verfahren nach einem der Ansprüche 64 bis 67, **dadurch gekennzeichnet, dass** der Laufwagen (208) um die Längsrichtung (360) des Fördermittels (262") schwenkbar ist.

69. Verfahren nach einem der Ansprüche 44 bis 68, **dadurch gekennzeichnet, dass** die Fördervorrichtung (106, 110, 116) ein Fördermittel (262') umfasst, welches um seine Längsrichtung (360) verdrillbar ist.

70. Verfahren nach Anspruch 69, **dadurch gekennzeichnet, dass** die Fördervorrichtung (106, 110, 116) als Fördermittel eine Kreuzgelenkkette (262') umfasst, welche Kettenlaschen (284, 286) mit jeweils mindestens zwei in der Längsrichtung (360) der Kette aufeinanderfolgenden Abschnitten (284a, 284b, 286a, 286b), weiche relativ zueinander um die Längsrichtung der Kette verschwenkbar sind, aufweist.

71. Verfahren nach einem der Ansprüche 44 bis 70, **dadurch gekennzeichnet, dass** die Fördervorrichtung (106, 110, 116) ein Fördermittel (262; 262'; 262") umfasst, welches innerhalb einer Führungskanalabdeckung (216) angeordnet ist.

72. Verfahren nach Anspruch 71, **dadurch gekennzeichnet, dass** die Führungskanalabdeckung (216) eine zwischen dem Fördermittel (262; 262'; 262") und den Werkstücken und/oder eine zwischen dem Fördermittel (262; 262'; 262") und dem Behandlungsbad (122a bis 122f, 114) angeordnete Abdeckwand (218) umfasst.

73. Verfahren nach einem der Ansprüche 71 oder 72, **dadurch gekennzeichnet, dass** die Führungskanalabdeckung (216) einen Unterdruckabschnitt umfasst, in welchem innerhalb der Führungskanalabdeckung ein Unterdruck relativ zum Umgebungsdruck erzeugbar ist.

74. Verfahren nach einem der Ansprüche 71 bis 73, **dadurch gekennzeichnet, dass** die Führungskanalabdeckung (216) einen Überdruckabschnitt umfasst, in welchem innerhalb der Führungskanalabdeckung ein Überdruck relativ zum Umgebungsdruck erzeugbar ist.

75. Verfahren nach einem der Ansprüche 73 oder 74, **dadurch gekennzeichnet, dass** die Führungskanalabdeckung (216) mindestens einen Unterdruckabschnitt und mindestens einen Überdruckabschnitt umfasst, wobei Luft aus dem Unterdruckabschnitt dem Überdruckabschnitt zuführbar ist.

76. Verfahren nach einem der Ansprüche 71 bis 75, **dadurch gekennzeichnet, dass** die Werkstücke auf jeweils einem Laufwagen (208) angeordnet sind, der von dem Führungsmittel (262; 262'; 262") gezogen wird,
wobei der Laufwagen einen Führungsteil (224), der innerhalb der Führungskanalabdeckung (216) an Laufwagen-Führungsschienen (252, 254) geführt ist, und einen Werkstück-Aufnahmeteil (206), der außerhalb der Führungskanalabdeckung angeordnet ist und an dem jeweils ein Werkstück lösbar gehalten ist, umfasst.

77. Verfahren nach Anspruch 76, **dadurch gekennzeichnet, dass** der Führungsteil (224) und der Werkstück-Aufnahmeteil (206) des Laufwagens (208) durch ein Verbindungselement (222) miteinander verbunden sind,
wobei sich das Verbindungselement durch einen Durchgangsspalt (220) in der Führungskanalabdeckung (216) hindurch erstreckt.

78. Verfahren nach Anspruch 77, **dadurch gekennzeichnet, dass** der Durchgangsspalt (220) mit einer Bürstendichtung (225) versehen ist.

79. Verfahren nach einem der Ansprüche 64 bis 78, **dadurch gekennzeichnet, dass** der Laufwagen (208) mindestens zwei Laufrollenanordnungen (228a, 228b) umfasst, die auf einander gegenüberliegenden Seiten der Längsmittelebene (256) des Laufwagens angeordnet sind, wobei mindestens eine der Laufrollenanordnungen (228a) relativ zu der Längsmittelebene (256) des Laufwagens (208) derart schwenkbar ist, dass sich der Abstand dieser Laufrollenanordnung von der Längsmittelebene (256) des Laufwagens (208) verändert..

80. Verfahren nach einem der Ansprüche 44 bis 79, **dadurch gekennzeichnet, dass** die Förderrichtung (146) der Werkstücke in dem oberen Förderabschnitt (478) eine horizontale Komponente aufweist, die im wesentlichen senkrecht zu der Förderrichtung (146) der Werkstücke in dem Behandlungsabschnitt (466) gerichtet ist.

81. Verfahren nach einen der Ansprüche 44 bis 80, **dadurch gekennzeichnet, dass** der obere Förderabschnitt (478) und der Behandlungsabschnitt (466) durch einen Verbindungsabschnitt (468, 472, 474) miteinander verbunden sind, wobei die Förderbahn (144) der Werkstücke in dem Verbindungsabschnitt in einem ersten Teilabschnitt des Verbindungsabschnitts einen ersten Bogen (468) in einer ersten im wesentlichen vertikalen Ebene (470) mit einem ersten Kurvenwinkel und in einem zweiten Teilabschnitt des Verbindungsabschnitts einen zweiten Bogen (474) in einer zweiten im wesentlichen vertikalen Ebene (476) mit einem zweiten Kurvenwinkel durchläuft, wobei die erste vertikale Ebene (470) und die zweite vertikale Ebene (476) quer zueinander ausgerichtet sind.

82. Verfahren nach Anspruch 81, **dadurch gekennzeichnet, dass** die erste vertikale Ebene (470) und die zweite vertikale Ebene (476) im wesentlichen senkrecht zueinander ausgerichtet sind.

83. Verfahren nach einem der Ansprüche 81 oder 82, **dadurch gekennzeichnet, dass** der erste Kurvenwinkel und/oder der zweite Kurvenwinkel im wesentlichen 90° beträgt.

84. Verfahren nach einem der Ansprüche 81 bis 83, **dadurch gekennzeichnet, dass** der obere Förderabschnitt (478) über einen weiteren Verbindungsabschnitt (480, 482, 484) mit einem weiteren Behandlungsabschnitt (486) verbunden ist und dass die Förderbahn (144) in dem Verbindungsabschnitt, dem oberen Förderabschnitt und dem weiteren Verbindungsabschnitt einen Bogen in Form eines nach unten offenen U durchläuft.

85. Verfahren nach einem der Ansprüche 44 bis 84, **dadurch gekennzeichnet, dass** die Werkstücke in dem oberen Förderabschnitt (478) seitlich neben einem Fördermittel, insbesondere einer Förderkette, der Fördervorrichtung (452) angeordnet sind.

86. Verfahren nach einem der Ansprüche 44 bis 85, **dadurch gekennzeichnet, dass** die Werkstücke Fahrzeugkarosserien (102) sind und dass die Fahrzeugkarosserien (102) in einer Seitwärtsstellung durch den oberen Förderabschnitt (478) gefördert werden.

## Claims

1. Device for the surface treatment of workpieces, in particular vehicle bodies (102), comprising at least one treatment bath (122a to 122f, 114) for the surface treatment of the workpieces and at least one conveyor device (106, 110, 116) for conveying the workpieces through the treatment bath, which conveyor device comprises a treatment section (172; 318), in which the workpieces are conveyed through the treatment bath, and at least one upper conveyor section (164, 180; 306, 326), through which the workpieces are conveyed before and/or after conveyance through the treatment bath and which is arranged above the treatment section, wherein the upper conveyor section (164, 180; 306, 326) is arranged vertically above the treatment section (172; 318), **characterised in that** the conveyor device (106, 110 116) also comprises at least one supply or removal section (150, 162, 182, 182', 182", 184, 198), which is arranged laterally of the treatment section (172; 318) and in which the conveying direction (146) of the workpieces has a horizontal component, which is directed transversely to the conveying direction of the workpieces in the treatment section (172; 318).

2. Device according to claim 1, **characterised in that** the upper conveyor section (164, 180; 306, 326) extends substantially parallel to the treatment section (172; 318).

3. Device according to either of claims 1 or 2, **characterised in that** the conveying direction (146) of the workpieces in the upper conveyor section (164, 180; 306, 326) is directed substantially antiparallel to the conveying direction (146) of the workpieces in the treatment section (172; 318).

4. Device according to any one of claims 1 to 3, **characterised in that** the conveying direction (146) of the workpieces in the treatment section (172) is directed substantially horizontally.

5. Device according to any one of claims 1 to 4, **characterised in that** the conveying direction (146) of the workpieces in the upper conveyor section (164, 180; 306, 326) is directed substantially horizontally.

6. Device according to any one of claims 1 to 5, **characterised in that** the upper conveyor section (164, 180; 306, 326) and the treatment section (172) are connected to one another by a connecting section (166, 174; 310, 322), the workpieces in the connecting section (166, 174; 310, 322) being conveyed along a conveyor path (144) which is curved at least in sections.

7. Device according to claim 6, **characterised in that** the workpieces are rotated about an angle of about 180° relative to a stationary reference system when running through the connecting section (166, 174; 310, 322).

8. Device according to either of claims 6 or 7, **characterised in that** the connecting section (310; 322) comprises a section (314), through which the workpieces are conveyed along a substantially vertical conveying direction (146).

9. Device according to any one of claims 1 to 8, **characterised in that** the workpieces are vehicle bodies (102) and **in that** the vehicle bodies (102) are conveyed through the treatment section (172; 318) in an upside down position.

10. Device according to any one of claims 1 to 9, **characterised in that** the workpieces are vehicle bodies (102) and **in that** the vehicle bodies (102) are conveyed through the upper conveyor section (164, 180; 306, 326) in a standard position.

11. Device according to any one of claims 1 to 10, **characterised in that** the supply or removal section (150, 162, 182, 182', 182", 184, 198), comprises a preferably horizontally oriented left curve or right curve, which is directly connected to the upper conveyor section (164, 180; 306, 326).

12. Device according to any one of claims 1 to 11, **characterised in that** the conveyor device (106) comprises, in at least three conveying levels (308, 320, 328), conveyor sections (306, 318, 326) arranged one above the other with a conveying direction (146) which is substantially horizontal at least in sections.

13. Device according to any one of claims 1 to 12, **characterised in that** the workpieces in the treatment section (172; 318) are conveyed along a curved conveyor path (144), at least in sections.

14. Device according to any one of claims 1 to 13, **characterised in that** the device comprises at least two treatment baths (122a to 122f) and **in that** the treatment sections, in which the workpieces are conveyed through the treatment baths, are arranged offset with respect to one another in a direction oriented transversely to the conveying direction (146) in at least one of the treatment sections.

15. Device according to claim 14, **characterised in that** at least two treatment baths (122a to 122f) are arranged laterally of one another.

16. Device according to claim 15, **characterised in that** at least two treatment baths (122a to 122f) have end walls (126a to 126f; 130a to 130f) offset with respect to one another in a direction which is perpendicular to the longitudinal direction (124a to 124f) of the treatment baths.

17. Device according to either of claims 15 or 16, **characterised in that** a respective process technology booth (134a to 134f) is associated with each of the treatment baths (122a to 122f) and **in that** the process technology booths are arranged adjacent to one another.

18. Device according to any one of claims 1 to 17, **characterised in that** the conveyor device (106, 110, 116) comprises a single-strand conveyor means (262; 262'; 262").

19. Device according to claim 18, **characterised in that** the local longitudinal central plane of the conveyor means (262; 262') substantially coincides with the local longitudinal central plane (256) of the conveyed workpieces.

20. Device according to any one of claims 1 to 19, **characterised in that** the conveyor device (106, 110, 116) comprises a transversely-jointed chain (262; 262'; 262").

21. Device according to any one of claims 1 to 20, **characterised in that** the workpieces are arranged on a carriage (208), in each case, which is pulled by a conveyor means (262; 262'; 262").

22. Device according to claim 21, **characterised in that** the carriage (208) is connected in an articulated manner to the conveyor means (262; 262") by means of a connecting element (294).

23. Device according to claim 21, **characterised in that** the carriage (208) is pulled by the conveyor means (262) by means of a carrier (330), which is displaceably received in a carrier receiver (334).

24. Device according to claim 23, **characterised in that** the carrier (330) is arranged on the conveyor means (262) and the carrier receiver (334) is arranged on the carriage (208).

25. Device according to any one of claims 21 to 24, **characterised in that** the carriage (208) can be pivoted about the longitudinal direction (360) of the conveyor means (262").

26. Device according to any one of claims 1 to 25, **characterised in that** the conveyor device (106, 110, 116) comprises a conveyor means (262'), which can be twisted about its longitudinal direction (360).

27. Device according to claim 26, **characterised in that** the conveyor device (106, 110, 116) comprises a transversely-jointed chain (262') as the conveyor means, which has chain link plates (284, 286) each with at least two sections (284a, 284b, 286a, 286b) which follow one another in the longitudinal direction (360) of the chain and are pivotable relative to one another about the longitudinal direction of the chain.

28. Device according to any one of claims 1 to 27, **characterised in that** the conveyor device (106, 110, 116) comprises a conveyor means (262; 262'; 262"), which is arranged inside a guide channel cover (216).

29. Device according to claim 28, **characterised in that** the guide channel cover (216) comprises a cover wall (218) arranged between the conveyor means (262; 262'; 262") and the workpieces and/or a cover wall arranged between the conveyor means (262; 262'; 262") and the treatment bath (122a to 122f, 114).

30. Device according to either of claims 28 or 29, **characterised in that** the guide channel cover (216) comprises a low pressure section, in which a low pressure can be produced relative to the ambient pressure inside the guide channel cover.

31. Device according to any one of claims 28 to 30, **characterised in that** the guide channel cover (216) comprises an excess pressure section, in which an excess pressure can be produced relative to the ambient pressure inside the guide channel cover.

32. Device according to either of claims 30 or 31, **characterised in that** the guide channel cover (216) comprises at least one low pressure section and at least one excess pressure section, with it being possible to supply air from the low pressure section to the excess pressure section.

33. Device according to any one of claims 28 to 32, **characterised in that** the workpieces are arranged on a carriage (208) in each case, which is pulled by the guide means (262; 262'; 262"), the carriage comprising a guide part (224), which is guided inside the guide channel cover (216) on carriage guide rails (252, 254), and a workpiece receiver part (206), which is arranged outside the guide channel cover and on which a workpiece is releasably held in each case.

34. Device according to claim 33, **characterised in that** the guide part (224) and the workpiece receiver part (206) of the carriage (208) are connected to one another by a connecting element (222), the connecting element extending through a through-gap (220) in the guide channel cover (216).

35. Device according to claim 34, **characterised in that** the through-gap (220) is provided with a brush seal (225).

36. Device according to any one of claims 21 to 35, **characterised in that** the carriage (208) comprises at least two roller arrangements (228a, 228b), which are arranged on opposing sides of the longitudinal central plane (256) of the carriage, at least one of the roller arrangements (228a) being pivotable relative to the longitudinal central plane (256) of the carriage (208) in such a way that the spacing of this roller arrangement from the longitudinal central plane (256) of the carriage (208) varies.

37. Device according to any one of claims 1 to 36, **characterised in that** the conveying direction (146) of the workpieces in the upper conveyor section (478) has a horizontal component, which is directed substantially perpendicularly to the conveying direction (146) of the workpieces in the treatment section (466).

38. Device according to any one of claims 1 to 37, **characterised in that** the upper conveyor section (478) and the treatment section (466) are connected to one another by a connecting section (468, 472, 474), the conveyor path (144) of the workpieces in the connecting section in a first part section of the connecting section running through a first bend (468) in a first substantially vertical plane (470) with a first curve angle and, in a second part section of the connecting section, running through a second bend (474) in a second substantially vertical plane (476) with a second curve angle, the first vertical plane (470) and the second vertical plane (476) being oriented transversely with respect to one another.

39. Device according to claim 38, **characterised in that** the first vertical plane (470) and the second vertical plane (476) are oriented substantially perpendicularly with respect to one another.

40. Device according to either of claims 38 or 39, **characterised in that** the first curve angle and/or the second curve angle is substantially 90°.

41. Device according to any one of claims 38 to 40, **characterised in that** the upper conveyor section (478) is connected to a further treatment section (486) by means of a further connecting section (480, 482, 484) and **in that** the conveyor path (144) in the connecting section, the upper conveyor section and the further connecting section, runs through a bend in the form of a U which is open at the bottom.

42. Device according to any one of claims 1 to 41, **characterised in that** the workpieces in the upper conveyor section (478) are arranged laterally of a conveyor means, in particular a conveyor chain, of the conveyor device.

43. Device according to any one of claims 1 to 42, **characterised in that** the workpieces are vehicle bodies (102), and **in that** the vehicle bodies (102) are conveyed in a sideways position through the upper conveyor section (478).

44. Method for the surface treatment of workpieces, in particular vehicle bodies (102), wherein the workpieces are conveyed by means of at least one conveyor device (106, 110, 116) through at least one treatment bath (122a to 122f, 114) for the surface treatment of the workpieces, wherein the conveyor device comprises a treatment section (172; 318), in which the workpieces are conveyed through the treatment bath, and at least one upper conveyor section (164, 180; 306, 326), through which the workpieces are conveyed before and/or after conveyance through the treatment bath and which is arranged above the treatment section, a conveyor device being used, in which the upper conveyor section (164, 180; 306, 326) is arranged vertically above the treatment section (172; 318), **characterised in that** the conveyor device used also comprises at least one supply or removal section (150, 162, 182, 182', 182", 184, 198), which is arranged laterally of the treatment section (172; 318) and in which the conveying direction (146) of the workpieces has a horizontal component, which is directed transversely to the conveying direction of the workpieces in the treatment section (172; 318).

45. Method according to claim 44, **characterised in that** the upper conveyor section (164, 180; 306, 326) extends substantially parallel to the treatment section (172; 318).

46. Method according to either of claims 44 or 45, **characterised in that** the conveying direction (146) of the workpieces in the upper conveyor section (164, 180; 306, 326) is directed substantially antiparallel to the conveying direction (146) of the workpieces in the treatment section (172; 318).

47. Method according to any one of claims 44 to 46, **characterised in that** the conveying direction (146) of the workpieces in the treatment section (172) is oriented substantially horizontally.

48. Method according to any one of claims 44 to 47, **characterised in that** the conveying direction (146) of the workpieces in the upper conveyor section (164, 180; 306, 326) is directed substantially horizontally.

49. Method according to any one of claims 44 to 48, **characterised in that** the upper conveyor section (164, 180; 306, 326) and the treatment section (172) are connected to one another by a connecting section (166, 174; 310, 322), the workpieces in the connecting section (166, 174; 310, 322) being conveyed along a conveyor path (144) which is curved at least in sections.

50. Method according to claim 49, **characterised in that** the workpieces are rotated about an angle of about 180° relative to a stationary reference system when running through the connecting section (166, 174; 310, 322).

51. Method according to either of claims 49 or 50, **characterised in that** the connecting section (310; 322) comprises a section (314), through which the workpieces are conveyed along a substantially vertical conveying direction (146).

52. Method according to any one of claims 44 to 51, **characterised in that** the workpieces are vehicle bodies (102) and **in that** the vehicle bodies (102) are conveyed through the treatment section (172; 318) in an upside down position.

53. Method according to any one of claims 44 to 52, **characterised in that** the workpieces are vehicle bodies (102) and **in that** the vehicle bodies (102) are conveyed through the upper conveyor section (164, 180; 306, 326) in a standard position.

54. Method according to any one of claims 44 to 53, **characterised in that** the supply or removal section (150, 162, 182, 182', 182", 184, 198) comprises a preferably horizontally oriented left curve or right curve, which is connected directly to the upper conveyor section (164, 180; 306, 326).

55. Method according to any one of claims 44 to 54, **characterised in that** the conveyor device (106), in at least three conveying levels (308, 320, 328), comprises conveyor sections (306, 318, 326) arranged one above the other with a conveying direction (146) which is substantially horizontal, at least in sections.

56. Method according to any one of claims 44 to 55, **characterised in that** the workpieces in the treatment section (172; 318) are conveyed along a curved conveyor path (144), at least in sections.

57. Method according to any one of claims 44 to 56, **characterised in that** the device comprises at least two treatment baths (122a to 122f) and **in that** the treatment sections, in which the workpieces are conveyed through the treatment baths, are arranged offset with respect to one another in a direction oriented transversely to the conveying direction (146) in at least one of the treatment sections.

58. Method according to claim 57, **characterised in that** at least two treatment baths (122a to 122f) are arranged laterally of one another.

59. Method according to claim 58, **characterised in that** at least two treatment baths (122a to 122f) have end walls (126a to 126f; 130a to 130f) which are offset with respect to one another in a direction perpendicular to the longitudinal direction (124a to 124f) of the treatment baths.

60. Method according to either of claims 57 or 58, **characterised in that** a respective process technology booth (134a to 134f) is associated with each of the treatment baths (122a to 122f) and **in that** the process technology booths are arranged adjacent to one another.

61. Method according to any one of claims 44 to 60, **characterised in that** the conveyor device (106, 110, 116) comprises a single-strand conveyor means (262; 262'; 262").

62. Method according to claim 61, character in that the local longitudinal central plane of the conveyor means (262; 262') substantially coincides with the local longitudinal central plane (256) of the conveyed workpieces.

63. Method according to any one of claims 44 to 62, **characterised in that** the conveyor device (106, 110, 116) comprises a transversely-jointed chain (262; 262'; 262").

64. Method according to any one of claims 44 to 63, **characterised in that** the workpieces are arranged on a carriage (208) in each case, which is pulled by a conveyor means (262; 262'; 262").

65. Method according to claim 64, **characterised in that** the carriage (208) is connected in an articulated manner to the conveyor means (262; 262") by a connecting element (294).

66. Method according to claim 64, **characterised in that** the carriage (208) is pulled by the conveyor means (262) by means of a carrier (330), which is displaceably received in a carrier receiver (334).

67. Method according to claim 66, **characterised in that** the carrier (330) is arranged on the conveyor means (262) and the carrier receiver (334) is arranged on the carriage (208).

68. Method according to any one of claims 64 to 67, **characterised in that** the carriage (208) can be pivoted about the longitudinal direction (360) of the conveyor means (262").

69. Method according to any one of claims 44 to 68, **characterised in that** the conveyor device (106, 110, 116) comprises a conveyor means (262'), which can be twisted about its longitudinal direction (360).

70. Method according to claim 69, **characterised in that** the conveyor device (106, 110, 116) comprises a transversely-jointed chain (262') as the conveyor means, which has chain link plates (284, 286) each with at least two sections (284a, 284b, 286a, 286b) which follow one another in the longitudinal direction (360) of the chain and are pivotable relative to one another about the longitudinal direction of the chain.

71. Method according to any one of claims 44 to 70, **characterised in that** the conveyor device (106, 110, 116) comprises a conveyor means (262; 262'; 262"), which is arranged inside a guide channel cover (216).

72. Method according to claim 71, **characterised in that** the guide channel cover (216) comprises a cover wall (218) arranged between the conveyor means (262; 262'; 262") and the workpieces and/or a cover wall arranged between the conveyor means (262; 262'; 262") and the treatment bath (122a to 122f, 114).

73. Method according to either of claims 71 or 72, **characterised in that** the guide channel cover (216) comprises a low pressure section, in which a low pressure can be produced relative to the ambient pressure inside the guide channel cover.

74. Method according to any one of claims 71 to 73, **characterised in that** the guide channel cover (216) comprises an excess pressure section, in which an excess pressure can be produced relative to the ambient pressure inside the guide channel cover.

75. Method according to either of claims 73 or 74, **characterised in that** the guide channel cover (216) comprises at least one low pressure section and at least one excess pressure section, it being possible to supply air from the low pressure section to the excess pressure section.

76. Method according to any one of claims 71 to 75, **characterised in that** the workpieces are arranged on a carriage (208) in each case, which is pulled by the guide means (262; 262'; 262"), the carriage comprising a guide part (224), which is guided inside the guide channel cover (216) on carriage guide rails (252, 254), and a workpiece receiver part (206), which is arranged outside the guide channel cover and on which a workpiece is releasably held in each case.

77. Method according to claim 76, **characterised in that** the guide part (224) and the workpiece receiver part (206) of the carriage (208) are connected to one another by a connecting element (222), the connecting element extending through a through-gap (220) in the guide channel cover (216).

78. Method according to claim 77, **characterised in that** the through-gap (220) is provided with a brush seal (225).

79. Method according to any one of claims 64 to 78, **characterised in that** the carriage (208) comprises at least two roller arrangements (228a, 228b), which are arranged on opposing sides of the longitudinal central plane (256) of the carriage, at least one of the roller arrangements (228a) being pivotable relative to the longitudinal central plane (256) of the carriage (208) in such a way that the spacing of this roller arrangement from the longitudinal central plane (256) of the carriage (208) varies.

80. Method according to any one of claims 44 to 79, **characterised in that** the conveying direction (146) of the workpieces in the upper conveyor section (478) has a horizontal component, which is directed substantially perpendicularly to the conveying direction (146) of the workpieces in the treatment section (466).

81. Method according to any one of claims 44 to 80, **characterised in that** the upper conveyor section (478) and the treatment section (466) are connected to one another by a connecting section (468, 472, 474), the conveyor path (144) of the workpieces in the connecting section in a first part section of the connecting section running through a first bend (468) in a first substantially vertical plane (470) with a first curve angle and, in a second part section of the connecting section, running through a second bend (474) in a second substantially vertical plane (476) with a second curve angle, the first vertical plane (470) and the second vertical plane (476) being oriented transversely with respect to one another.

82. Method according to claim 81, **characterised in that** the first vertical plane (470) and the second vertical plane (476) are oriented substantially perpendicularly with respect to one another.

83. Method according to either of claims 81 or 82, **characterised in that** the first curve angle and/or the second curve angle is substantially 90°.

84. Method according to any one of claims 81 to 83, **characterised in that** the upper conveyor section (478) is connected to a further treatment section (486) by means of a further connecting section (480, 482, 484) and **in that** the conveyor path (144) in the connecting section, the upper conveyor section and the further connecting section runs through a bend in the form of a U which is open at the bottom.

85. Method according to any one of claims 44 to 84, **characterised in that** the workpieces in the upper conveyor section (478) are arranged laterally of a conveyor means, in particular a conveyor chain, of the conveyor device (452).

86. Method according to any one of claims 44 to 85, **characterised in that** the workpieces are vehicle bodies (102), and **in that** the vehicle bodies (102) are conveyed in a sideways position through the upper conveyor section (478).

## Revendications

1. Dispositif de traitement de surface de pièces, en particulier de carrosseries de véhicule (102), comprenant au moins un bain de traitement (122a à 122f, 114) pour le traitement de surface des pièces et au moins un dispositif de transport (106, 110, 116) pour le transport des pièces à travers le bain de traitement, qui comprend une section de traitement (172 ; 318), dans laquelle les pièces sont transportées à travers le bain de traitement, et au moins une section supérieure de transport (164, 180 ; 306, 326), à travers laquelle les pièces sont transportées avant et/ou après le transport à travers le bain de traitement et qui est disposée au-dessus de la section de traitement, la section supérieure de transport (164, 180 ; 306, 326) étant placée perpendiculairement au-dessus de la section de traitement (172 ; 318), **caractérisé en ce que** le dispositif de transport (106, 110, 116) comprend également au moins une section d'entrée ou de sortie (150, 162, 182, 182', 182", 184, 198), qui est disposée latéralement à côté de la section de traitement (172 ; 318) et dans laquelle la direction de transport (146) des pièces présente une composante horizontale, qui est orientée à l'oblique du dispositif de transport des pièces dans la section de traitement (172 ; 318).

2. Dispositif selon la revendication 1, **caractérisé en ce que** la section supérieure de transport (164, 180 ; 306, 326) s'étend pour l'essentiel parallèlement à la section de traitement (172 ; 318).

3. Dispositif selon l'une quelconque des revendications 1 ou 2, **caractérisé en ce que** le dispositif de transport (146) des pièces dans la section supérieure de transport (164, 180 ; 306, 326) est orienté pour l'essentiel de manière antiparallèle au dispositif de transport (146) et des pièces situées dans la section de traitement (172 ; 318).

4. Dispositif selon l'une quelconque des revendications 1 à 3, **caractérisé en ce que** le dispositif de transport (146) des pièces situé dans la section de traitement (172) est orienté pour l'essentiel horizontalement.

5. Dispositif selon l'une quelconque des revendications 1 à 4, **caractérisé en ce que** le dispositif de transport (146) des pièces situé dans la section supérieure de transport (175, 180 ; 306, 326) est orienté pour l'essentiel horizontalement.

6. Dispositif selon l'une quelconque des revendications 1 à 5, **caractérisé en ce que** la section supérieure de transport (164, 180 ; 306, 326) et la section de traitement (172) sont reliées l'une à l'autre par une section de liaison (166, 174 ; 310, 320), les pièces dans la section de liaison (166, 174 ; 310, 322) étant transportées le long d'une voie (144) au moins recourbée sur certaines sections.

7. Dispositif selon la revendication 6, **caractérisé en ce que** les pièces, en traversant la section de liaison (166, 174 ; 310, 322), sont tournées d'un angle d'environ 180° par rapport au système de revêtement fixe.

8. Dispositif selon l'une quelconque des revendications 6 au 7, **caractérisé en ce que** la section de liaison (310 ; 322) comprend une section (314), à travers laquelle les pièces sont véhiculées le long d'un dispositif de transport (146) essentiellement vertical.

9. Dispositif selon l'une quelconque des revendications 1 à 8, **caractérisé en ce que** les pièces sont des carrosseries de véhicule (102) et **en ce que** les carrosseries de véhicule (102) sont transportées en position tête en bas à travers la section de traitement (172 ; 318).

10. Dispositif selon l'une quelconque des revendications 1 à 9, **caractérisé en ce que** les pièces sont des carrosseries de véhicule (102) et **en ce que** les carrosseries de véhicules (102) sont transportées dans une position standard à travers la section supérieure de transport (164, 180 ; 306, 326).

11. Dispositif selon l'une quelconque des revendications 1 à 10, **caractérisé en ce que** la section d'entrée ou de sortie (150, 162, 182, 182', 182", 184, 198) comprend une courbe à gauche ou une courbe à droite, de préférence orientée horizontalement, qui est reliée directement à la section supérieure de transport (164, 180, 306, 326).

12. Dispositif selon l'une quelconque des revendications 1 à 11, **caractérisé en ce que** le dispositif de transport (106) comprend des sections de transport (306, 318, 326) disposées les unes au-dessus des autres sur au moins trois niveaux de transport (308, 320, 328) avec au moins un dispositif de transport (146) essentiellement horizontal au moins sur certaines sections.

13. Dispositif selon l'une quelconque des revendications 1 à 12, **caractérisé en ce que** les pièces dans la section de traitement (172 ; 318) sont transportées au moins sur certaines sections le long d'une voie de transport recourbée (144).

14. Dispositif selon l'une quelconque des revendications 1 à 13, **caractérisé en ce que** le dispositif comprend au moins deux bains de traitement (122a à 122f) et **en ce que** les sections de traitement, dans lesquelles sont transportées les pièces à travers les bains de traitement, sont disposées de manière décalée l'une par rapport à l'autre dans une direction orientée à l'oblique de la direction de transport (146) dans au moins une des sections de traitement.

15. Dispositif selon la revendication 14, est **caractérisé en ce qu'**au moins deux bains de traitement (122a à 122f) sont disposés latéralement l'un à côté de l'autre.

16. Dispositif selon la revendication 15, **caractérisé en ce qu'**au moins deux bains de traitement (122a à 122f) présentent dans une direction perpendiculaire par rapport à la direction longitudinale (124a à 124f) des bains de traitement des parois frontales (126a à 126f ; 130a à 130f) décalées les unes par rapport aux autres.

17. Dispositif selon l'une quelconque des revendications 15 ou 16, **caractérisé en ce qu'**à chaque bain de traitement (122a à 122f) est affectée respectivement une cabine technique de processus (134a à 134f) et **en ce que** les cabines techniques de processus sont disposées de manière contiguë les unes par rapport aux autres.

18. Dispositif selon l'une quelconque des revendications 1 à 17, **caractérisé en ce que** le dispositif de transport (106, 110, 116) comprend un moyen de transport à un brin (262 ; 262' ; 262").

19. Dispositif selon la revendication 18, **caractérisé en ce que** le plan médian longitudinal local du moyen de transport (262 ; 262') coïncide essentiellement avec le plan médian longitudinal local (256) des pièces transportées.

20. Dispositif selon l'une quelconque des revendications 1 à 19, **caractérisé en ce que** le dispositif de transport (106, 110, 116) comprend une chaîne biplan (262 ; 262' ; 262'').

21. Dispositif selon l'une quelconque des revendications 1 à 20, **caractérisé en ce que** les pièces sont disposées sur respectivement un chariot (208), qui est tiré par un moyen de transport (262 ; 262' ; 262'').

22. Dispositif selon la revendication 21, **caractérisé en ce que** le chariot (208) est relié de manière articulée au moyen de transport (262 ; 262") par l'intermédiaire d'un élément de liaison (294).

23. Dispositif selon la revendication 21, **caractérisé en ce que** le chariot (208) est tiré par le moyen de transport (262) au moyen d'un entraînement (330), qui est logé dans un logement d'entraînement (334) de manière coulissable.

24. Dispositif selon la revendication 23, **caractérisé en ce que** l'entraînement (330) est disposé sur le moyen transport (262) et le logement de l'entraînement (334) sur le chariot (208).

25. Dispositif selon l'une quelconque des revendications 21 à 24, **caractérisé en ce que** le chariot (208) peut pivoter autour de la direction longitudinale (360) du moyen de transport (262'').

26. Dispositif selon l'une quelconque des revendications 1 à 25, **caractérisé en ce que** le dispositif de transport (106, 110, 116) comprend un moyen de transport (262'), lequel peut être torsadé autour de sa direction longitudinale (360).

27. Dispositif selon la revendication 26, **caractérisé en ce que** le dispositif de transport (106, 110, 116) comprend comme moyen de transport une chaîne biplan (262'), laquelle présente des éclisses de chaîne (284, 286) avec respectivement au moins deux sections (284a, 284b, 286a, 286b) se succédant dans la direction longitudinale (360) de la chaîne, lesquelles sections peuvent pivoter l'une par rapport à l'autre autour de la direction longitudinale de la chaîne.

28. Dispositif selon l'une quelconque des revendications 1 à 27, **caractérisé en ce que** le dispositif de transport (106, 110, 116) comprend un moyen de transport (162 ; 262' ; 262"), lequel est disposé à l'intérieur d'un recouvrement de canal de guidage (216).

29. Dispositif selon la revendication 28, **caractérisé en ce que** le recouvrement de canal de guidage (216) comprend une paroi de recouvrement (218) disposée entre le moyen de transport (262 ; 262' ; 262") et les pièces et/ou une paroi de recouvrement (218) disposée entre le moyen de transport (262 ; 262' ; 262'') et le bain de traitement (122a à 122f, 114).

30. Dispositif selon l'une quelconque des revendications 28 ou 29, **caractérisé en ce que** le recouvrement de canal de guidage (216) comprend une section de sous pression, dans laquelle peut être produite à l'intérieur du recouvrement de canal de guidage une sous pression par rapport à la pression environnante.

31. Dispositif selon l'une quelconque des revendications 28 à 30, **caractérisé en ce que** le recouvrement de canal de guidage (216) comprend une section de surpression, dans laquelle peut être produite à l'intérieur du recouvrement de canal de guidage une surpression par rapport à la pression environnante.

32. Dispositif selon l'une quelconque des revendications 30 ou 31, **caractérisé en ce que** le recouvrement de canal de guidage (216) comprend au moins une section de sous pression et au moins une section de surpression, de l'air pouvant être conduit de la section de sous pression à la section de surpression.

33. Dispositif selon l'une quelconque des revendications 28 à 32, **caractérisé en ce que** les pièces sont disposées sur respectivement un chariot (208), qui est tiré par le moyen de guidage (262 ; 262' ; 262"), le chariot comprenant une pièce de guidage (224), qui est guidée à l'intérieur du recouvrement de canal de guidage (216) sur des rails de guidage du chariot (252, 254), et une pièce de logement pour les pièces (206), qui est disposée à l'extérieur du recouvrement du canal de guidage et qui est maintenue de manière amovible sur respectivement une pièce.

34. Dispositif selon la revendication 33, **caractérisé en ce que** la pièce de guidage (224) et la pièce de logement pour les pièces (206) du chariot (208) sont reliées l'une à l'autre par un élément de liaison (222), l'élément de liaison s'étendant à travers une fente de passage (220) dans le recouvrement de canal de guidage (216).

35. Dispositif selon la revendication 34, **caractérisé en ce que** la fente de passage (220) est munie d'un joint de balai (225).

36. Dispositif selon l'une quelconque des revendications 21 à 35, **caractérisé en ce que** le chariot (208) comprend au moins deux installations à galet de roulement (228a, 228b), qui sont placées sur des faces opposées l'une à l'autre du plan médian longitudinal (256) du chariot, au moins une installation à galet de roulement (228a) pouvant pivoter par rapport au plan médian longitudinal (256) du chariot (208) de façon à ce que la distance de cette installation à galet de roulement varie du plan médian longitudinal (256) du chariot (208).

37. Dispositif selon l'une quelconque des revendications 1 à 36, **caractérisé en ce que** le dispositif de transport (146) des pièces présente, dans la section supérieure de transport (478), une composante horizontale, qui est orientée pour l'essentiel perpendiculairement à la direction de transport (146) des pièces dans la section de traitement (466).

38. Dispositif selon l'une quelconque des revendications 1 à 37, **caractérisé en ce que** la section supérieure de transport (478) et la section de traitement (466) sont reliées l'une à l'autre par une section de liaison (468, 472, 474), la voie de transport (144) des pièces dans la section de liaison passant dans une première section partielle de la section de liaison traversant un premier arc (468) dans un premier plan essentiellement vertical (470) avec un premier angle de courbe et dans une deuxième section partielle de la section de liaison, un second arc (474) dans un second plan essentiellement vertical (476) avec un second angle de courbe, le premier plan vertical (470) et le second plan vertical (476) étant orientés à l'oblique l'un par rapport à l'autre.

39. Dispositif selon la revendication 38, **caractérisé en ce que** le premier plan vertical (470) et le second plan vertical (476) sont orientés essentiellement perpendiculairement l'un par rapport à l'autre.

40. Dispositif selon l'une quelconque des revendications 38 ou 39, **caractérisé en ce que** le premier angle de courbe et/ou le second angle de courbe s'élève essentiellement à 90°.

41. Dispositif selon l'une quelconque des revendications 38 à 40, **caractérisé en ce que** la section supérieure de transport (478) est reliée par l'intermédiaire d'une autre section de liaison (480, 482, 484) à une autre section de traitement (486) et **en ce que** la voie de transport (144) dans la section de liaison, la section supérieure de transport et l'autre section de liaison traverse un arc en forme de U ouvert vers le bas.

42. Dispositif selon l'une quelconque des revendications 1 à 41, **caractérisé en ce que** les pièces dans la section supérieure de transport (478) sont disposées latéralement près d'un moyen de transport, en particulier une chaîne de transport, du dispositif de transport.

43. Dispositif selon l'une quelconque des revendications 1 à 42, **caractérisé en ce que** les pièces sont des carrosseries de véhicule (102) et **en ce que** les carrosseries de véhicule (102) sont transportées dans une position de côté à travers la section supérieure de transport (478).

44. Procédé de traitement de surface de pièces, en particulier de carrosseries de véhicule (102), les pièces étant transportées au moyen d'au moins un dispositif de transport (106, 110, 116) à travers au moins un bain de traitement (122a à 122f, 114) pour le traitement de surface des pièces, le dispositif de transport comprenant une section de traitement (172 ; 318), dans laquelle les pièces sont transportées à travers le bain de traitement et au moins une section supérieure de transport (164, 180 ; 306, 326), à travers laquelle les pièces sont transportées avant et/ou après le transport à travers le bain de traitement et qui est disposée au-dessus de la section de traitement, un dispositif de transport étant utilisé, avec lequel la section supérieure de transport (164, 180 ; 306, 326) est disposée perpendiculairement au-dessus de la section de traitement (172 ; 318), **caractérisé en ce que** le dispositif de transport utilisé comprend également au moins une section d'entrée ou de sortie (150, 162, 182, 182', 182", 184, 198), qui est disposée latéralement à côté de la section de traitement (172 ; 318) et dans laquelle la direction de transport (146) des pièces présente une composante horizontale, qui est orientée à l'oblique de la direction de transport des pièces dans la section de traitement (172 ; 318).

45. Procédé selon la revendication 44, **caractérisé en ce que** la section supérieure de transport (164, 180 ; 306, 326) s'étend pour l'essentiel parallèlement à la section de traitement (172 ; 318).

46. Procédé selon l'une quelconque des revendications 44 ou 45, **caractérisé en ce que** la direction de transport (146) des pièces dans la section supérieure de transport (164, 180 ; 306, 326) est orientée pour l'essentiel de manière antiparallèle à la direction de transport (146) des pièces dans la section de traitement (172 ; 318).

47. Procédé selon l'une quelconque des revendications 44 à 46, **caractérisé en ce que** la direction de transport (146) des pièces dans la section de traitement (172) est orientée pour l'essentiel horizontalement.

48. Procédé selon l'une quelconque des revendications 44 à 47, **caractérisé en ce que** la direction de transport (146) des pièces dans la section supérieure de transport (164, 180 ; 306, 326) est orientée pour l'essentiel horizontalement.

49. Procédé selon l'une quelconque des revendications 44 à 48, **caractérisé en ce que** la section supérieure de transport (164, 180 ; 306, 326) et la section de traitement (172) sont reliées l'une à l'autre grâce à une section de liaison (166, 174 ; 310, 322), les pièces dans la section de liaison (166, 174 ; 310, 322) étant transportées le long d'une voie de transport (144) recourbée au moins sur certaines sections.

50. Procédé selon la revendication 49, **caractérisé en ce que** les pièces, en traversant la section de liaison (166, 174 ; 310, 322), sont tournées dans un angle d'environ 180° par rapport au système de revêtement fixe.

51. Procédé selon l'une quelconque des revendications 49 ou 50, **caractérisé en ce que** la section de liaison (310 ; 322) comprend une section (314), à travers laquelle les pièces sont transportées le long d'une direction de transport (146) essentiellement verticale.

52. Procédé selon l'une quelconque des revendications 44 à 51, **caractérisé en ce que** les pièces sont des carrosseries de véhicule (102) et **en ce que** les carrosseries de véhicule (102) sont transportées dans une position tête en bas à travers la section de traitement (172 ; 318).

53. Procédé selon l'une quelconque des revendications 44 à 52, **caractérisé en ce que** les pièces sont des carrosseries de véhicule (102) et **en ce que** les carrosseries de véhicule (102) sont transportées dans une position standard à travers la section supérieure de transport (164, 180 ; 306, 326).

54. Procédé selon l'une quelconque des revendications 44 à 53, **caractérisé en ce que** la section d'entrée ou de sortie (150, 162, 182, 182', 182", 184, 198) comprend une courbe à gauche ou une courbe à droite, orientée de préférence horizontalement, qui est reliée directement à la section supérieure de transport (164, 180, 306, 326).

55. Procédé selon l'une quelconque des revendications 44 à 54, **caractérisé en ce que** le dispositif de transport (106) comprend des sections de transport (306, 318, 326) disposées les unes au-dessus des autres sur au moins trois niveaux de transport (308, 320, 328) avec au moins une direction de transport (146) essentiellement horizontale sur au moins certaines sections.

56. Procédé selon l'une quelconque des revendications 44 à 55, **caractérisé en ce que** les pièces dans la section de traitement (172 ; 318) sont transportées au moins sur certaines sections le long d'une voie de transport recourbée (144).

57. Procédé selon l'une quelconque des revendications 44 à 56, **caractérisé en ce que** le dispositif comprend au moins deux bains de traitement (122a à 122f) et **en ce que** les sections de traitement, dans lesquelles les pièces sont transportées à travers les bains de traitement, sont disposées de manière décalée les unes par rapport aux autres dans une direction orientée à l'oblique de la direction de transport (146) dans au moins une des sections de traitement.

58. Procédé selon la revendication 57, **caractérisé en ce qu'**au moins deux bains de traitement (122a à 122f) sont disposés latéralement l'un à côté de l'autre.

59. Procédé selon la revendication 58, **caractérisé en ce qu'**au moins deux bains de traitement (122a à 122f) présentent dans une direction perpendiculaire à la direction longitudinale (124a à 124f) des bains de traitement, des parois frontales décalées les unes par rapport aux autres (126a à 126f ; 130a à 130f).

60. Procédé selon l'une quelconque des revendications 57 ou 58, **caractérisé en ce qu'**à chaque bain de traitement (122a à 122f) est affectée respectivement une cabine technique de processus (134a à 134f) et **en ce que** les cabines techniques de processus sont disposées de manière contiguë les unes par rapport aux autres.

61. Procédé selon l'une quelconque des revendications 44 à 60, **caractérisé en ce que** le dispositif de transport (106, 110, 116) comprend un moyen de transport à un brin (262 ; 262' ; 262").

62. Procédé selon la revendication 61, **caractérisé en ce que** le plan médian longitudinal local du moyen de transport (262 ; 262') coïncide essentiellement avec le plan médian longitudinal local (256) des pièces transportées.

63. Procédé selon l'une quelconque des revendications 44 à 62, **caractérisé en ce que** le dispositif de transport (106, 110, 116) comprend une chaîne biplan (262 ; 262' ; 262").

64. Procédé selon l'une quelconque des revendications 44 à 63, **caractérisé en ce que** les pièces sont disposées sur respectivement un chariot (208), qui est tiré par un moyen de transport (262 ; 262' ; 262").

65. Procédé selon la revendication 64, **caractérisé en ce que** le chariot (208) est relié par l'intermédiaire d'un élément de liaison (294) de manière articulée au moyen de transport (262 ; 262").

66. Procédé selon la revendication 64, **caractérisé en ce que** le chariot (208) est tiré par le moyen de transport (262) au moyen d'un entraînement (330), qui est logé de manière coulissable dans un logement d'entraînement (334).

67. Procédé selon la revendication 66, **caractérisé en ce que** l'entraînement (330) est disposé sur le moyen de transport (262) et le logement d'entraînement (334) sur le chariot (208).

68. Procédé selon l'une quelconque des revendications 64 à 67, **caractérisé en ce que** le chariot (208) peut pivoter autour de la direction longitudinale (360) du moyen de transport (262").

69. Procédé selon l'une quelconque des revendications 44 à 68, **caractérisé en ce que** le dispositif de transport (106, 110, 116) comprend un moyen de transport (262'), lequel peut être torsadé autour de sa direction longitudinale (360).

70. Procédé selon la revendication 69, **caractérisé en ce que** le dispositif de transport (106, 110, 116) comprend comme moyen de transport une chaîne biplan (262'), laquelle présente des éclisses de chaîne (284, 286) avec respectivement au moins deux sections (284a, 284b, 286a, 286b) se succédant dans la direction longitudinale (360) de la chaîne, lesquelles sections peuvent pivoter les unes par rapport aux autres autour de la direction longitudinale de la chaîne.

71. Procédé selon l'une quelconque des revendications 44 à 70, **caractérisé en ce que** le dispositif de transport (106, 110, 116) comprend un moyen de transport (262 ; 262' ; 262"), lequel est disposé à l'intérieur d'un recouvrement de canal de guidage (216).

72. Procédé selon la revendication 71, **caractérisé en ce que** le revêtement de canal de guidage (216) comprend une paroi de recouvrement (218) disposée entre le moyen de transport (262 ; 262' ; 262'') et les pièces et/ou une paroi de recouvrement (218) disposée entre le moyen de transport (262 ; 262' ; 262'') et le bain de traitement (122a à 122f, 114).

73. Procédé selon l'une quelconque des revendications 71 ou 72, **caractérisé en ce que** le revêtement de canal de guidage (216) comprend une section de sous pression, dans laquelle peut être produite à l'intérieur du recouvrement ducal de guidage une sous pression par rapport à la pression environnante.

74. Procédé selon l'une quelconque des revendications 71 à 73, **caractérisé en ce que** le recouvrement de canal de guidage (216) comprend une section de surpression, dans laquelle peut être produite à l'intérieur du recouvrement de canal de guidage, une surpression par rapport à la pression environnante.

75. Procédé selon l'une quelconque des revendications 73 ou 74, **caractérisé en ce que** le recouvrement de canal de guidage (216) comprend au moins une section de sous pression et au moins une section de surpression, de l'air pouvant être conduit de la section de sous pression à la section de surpression.

76. Procédé selon l'une quelconque des revendications 71 à 75, **caractérisé en ce que** les pièces sont disposées sur respectivement un chariot (208), qui est tiré par le moyen de guidage (262 ; 262' ; 262"), le chariot comprenant une pièce de guidage (224), qui est conduite à l'intérieur du recouvrement de canal de guidage (216) sur des rails de guidage du chariot (252, 254) et une pièce de logement pour pièces (206), qui est disposée à l'extérieur du recouvrement de canal de guidage et sur laquelle est maintenue respectivement une pièce de manière amovible.

77. Procédé selon la revendication 76, **caractérisé en ce que** la pièce de guidage (224) et la pièce de logement pour pièces (206) du chariot (208) sont reliées l'une à l'autre par un élément de liaison (222), s'étendant à travers une fente de passage (220) dans le recouvrement de canal de guidage (216).

78. Procédé selon la revendication 77, **caractérisé en ce que** la fente de passage (220) est munie d'un joint de balai (225).

79. Procédé selon l'une quelconque des revendications 64 à 78, **caractérisé en ce que** le chariot (208) comprend au moins deux installations à galet de roulement (228a, 228b), qui sont disposées sur des faces du plan médian longitudinal (256) du chariot, situées l'une en face de l'autre, au moins une installation à galet de roulement (228a) pouvant pivoter par rapport au plan médian longitudinal (256) du chariot (208) de façon à ce que la distance de cette installation à galet de roulement varie du plan médian longitudinal (256) du chariot (208).

80. Procédé selon l'une quelconque des revendications 44 à 79, **caractérisé en ce que** la direction de transport (146) des pièces dans la section supérieure de transport (478) présente une composante horizontale, qui est orientée pour l'essentiel parallèlement à la direction de transport (146) des pièces dans la section de traitement (466).

81. Procédé selon l'une quelconque des revendications 44 à 80, **caractérisé en ce que** la section supérieure de transport (478) et la section de traitement (466) sont reliées l'une à l'autre par une section de liaison (468, 472, 474), la voie de transport (144) des pièces dans la section de liaison dans une première section partielle de la section de liaison traversant un premier arc (468) sur un premier plan essentiellement vertical (470) avec un premier angle de courbe et dans une seconde section partielle de la section de liaison un second arc (474) dans un second plan essentiellement vertical (476) avec un second angle de courbe, le premier plan vertical (470) et le second plan vertical (476) étant orientés à l'oblique l'un par rapport à l'autre.

82. Procédé selon la revendication 81, **caractérisé en ce que** le premier plan vertical (470) et le second plan vertical (476) sont orientés essentiellement verticalement l'un par rapport à l'autre.

83. Procédé selon l'une quelconque des revendications 81 ou 82, **caractérisé en ce que** le premier angle de courbe et/ou le second angle de courbe s'élève essentiellement à 90°.

84. Procédé selon l'une quelconque des revendications 81 à 83, **caractérisé en ce que** la section supérieure de transport (478) est reliée par l'intermédiaire d'une autre section de liaison (480, 482, 484) à une autre section de traitement (486) et **en ce que** la voie de transport (144) dans la section de liaison, la section supérieure de transport et l'autre section de liaison traverse un arc en forme d'un U ouvert vers le bas.

85. Procédé selon l'une quelconque des revendications 44 à 84, **caractérisé en ce que** les pièces dans la section supérieure de transport (478) sont disposées latéralement près d'un moyen de transport, en particulier une chaîne de transport, du dispositif de transport (452).

86. Procédé selon l'une quelconque des revendications 44 à 85, **caractérisé en ce que** les pièces sont des carrosseries de véhicule (102) et **en ce que** les carrosseries de véhicule (102) sont transportées dans une position latérale à travers la section supérieure de transport (478).
